# EUROPEAN PATENT APPLICATION

(11) **EP 4 730 249 A1**
(43) Date of publication of application: **22.04.2026**
(21) Application number: 25209539.3
(22) Date of filing: 17.10.2025
(51) Int. Cl.: G06Q 40/04, G06N 3/08

(54) **MINIMIZATION OF THE OCCURRENCE OF ANOMALOUS STATES IN A STOCHASTIC TRANSACTION PROCESSING SYSTEM USING A MACHINE LEARNT NETWORK**

(30) Priority: 21.10.2024 US 202418921742
(71) Applicant: Chicago Mercantile Exchange Inc., Chicago IL Illinois 60606 (US)
(72) Inventor: DUGDALE, Brian G., Chicago, 60606 (US); KOZIOL, Arkadiusz, Chicago, 60606 (US)
(74) Representative: Boult Wade Tennant LLP

(57) **Abstract**

The disclosed embodiments relate to systems/methods which utilize machine learnt networks for efficiently proactively preventing an electronic data transaction processing system, such as an electronic trading system, from transitioning to an anomalous state which must be reverted, e.g., to unwind one or more processed transactions, or where further state changes must be restricted, e.g., by only allowing limited processing of subsequently received transactions, or prevented, e.g., the processing of subsequently received transactions is temporarily or permanently halted. Using a machine learnt network, the disclosed embodiments are able to recognize both anticipated and unanticipated anomalous transactions which would result in an anomalous state reducing occurrence thereof and minimizing having to revert, pause or halt the electronic trading system while also minimizing the impact on the performance of the electronic trading system.

## Description

### BACKGROUND

Computing systems, such as electronic data transaction processing systems, process electronic transactions, or requests therefor, for or associated with data objects/items which are characterized by values derived from or otherwise submitted or provided, systematically or arbitrarily, by external sources. Accordingly, such systems may be considered stochastic. Incoming messages, e.g., transaction request messages, related to the data objects/items may include requests for transactions which are triggered by, or otherwise perform actions on, the data objects at specified values. Whether or not the attempted actions are processed, executed or performed depends, at least in part, on the values submitted with the incoming messages and/or the rules and processing routines programmed into the data transaction processing system.

One example of an environment including data objects/items having specified values is an electronic trading system, e.g., where the data objects include data representative of tradeable products/items, such as financial instruments, having associated values, e.g., price and quantity values. The values of those data objects may be submitted or otherwise defined by or derived from the activity/actions of participants, e.g. market participants or traders, via the submission/communication of electronic data transaction request messages, e.g., via the specified values of the parameters of trade orders submitted to the system. As such, over time as incoming electronic data transaction request messages are received and processed, the values of one or more of the data objects may change.

Accordingly, an electronic data transaction processing system, such as an electronic trading system, may be characterized, at any given moment, by the then current values of the data objects maintained thereby, which may be referred to as a state or state instance, resulting from the effects, on a prior or initial state of the system, of the processing of electronic data transaction request messages received subsequent to that prior/initial state and up to the current moment. Such systems may therefore be referred to as stateful as the current state of the system will affect a subsequent state thereof.

For example, an electronic data transaction processing system, such as an electronic trading system, may include a system in which a plurality of data objects/items are processed by a matching processor associated therewith that, for transaction requests, e.g., a trade order to buy or sell a quantity of a financial instrument represented by a data item/object, attempts to match, as they are received, incoming electronic data transaction request messages, for at least one of the plurality of data items, received over a data communication network with at least one other previously received but unsatisfied electronic data transaction request message counter thereto stored in a memory associated with the plurality of data items coupled with the matching processor, to at least partially satisfy one or both of the incoming electronic data transaction request messages or the at least one other previously received electronic data transaction request message, or otherwise, for requests to modify or cancel, attempts to modify or cancel a previously received but unsatisfied electronic data transaction request message, whereby the state of the electronic data transaction processing system is altered thereby affecting the processing of subsequently received electronic data transaction request messages.

As these electronic transaction processing systems, such as electronic trading systems, process a multitude of electronic data transaction request messages for a multitude of different data items, the state of the system at any given time may be complex, having a large number of dimensions, i.e., dependent on a large number of both independent and inter-dependent variables. For example, an electronic trading system may facilitate the trading of the thousands of different financial instruments, alone or in combination, by thousands of traders, processing hundreds of millions of electronic transaction request messages received therefrom every day.

In some cases, the processing of a particular electronic data transaction request message may result in the occurrence of an anomalous or undesirable state of the electronic transaction processing system, i.e., a system disruption, where that state must be reverted to a previous state, or otherwise further changes to the state must be, permanently or temporarily, restricted or prevented. Such undesirable/anomalous states may be related to the values of data items, or changes thereto, e.g., over a period of time, and may be representative of increased risk, i.e., risk of financial loss, to the system itself or to one or more market participants or otherwise having larger economic consequences. In complex, i.e., multi-dimensional or multi-variate, stateful systems, the number of different undesirable states may be substantial. Undesirable states may include those states which result from violations of one or more rules defined by the system, an operating agreement, regulatory authority, or other governing entity.

While systems may be implemented to detect the occurrence of an undesirable/anomalous state, such mechanisms are reactive, i.e., they only react after the state has occurred and has been detected and therefore are too late to, for example, prevent the processing of the offending transaction. In such cases, the only solution, if any, may be to cease processing, either permanently or temporarily, or attempt to revert the state of the system back to a known prior state, e.g., by "unwinding" completed transactions, which may be a complex endeavor to, for example, identify all of the variables which must be reverted and identify all of the affected entities and external systems affected thereby. Furthermore, such systems may be coupled with complex analytical/diagnostic, as well as regulatory, requirements necessary to investigate the undesirable state occurrence and identify those prior transactions which caused or contributed thereto.

To proactively prevent or mitigate the occurrence of one or more undesirable/anomalous system states, electronic data transaction processing systems may implement protection or integrity mechanisms, referred to as market protection mechanisms, configured to identify actual or potential anomalous or problematic incoming electronic data transaction request messages, or patterns thereof, the processing of which may, i.e., will or are likely to, result in an undesirable state, and mitigate their effect, such as by preventing the processing thereof, preventing further state changes by preventing the further processing of any subsequent transactions, restricting further state changes by, for example, allowing submission of transactions but limiting the processing thereof, or other actions or combinations thereof which either prevent the occurrence of the undesirable state or facilitate the system in transitioning from that undesirable/anomalous state back to a desirable/non-anomalous state with minimal consequences.

Such protection or integrity mechanisms generally consist of binary rules, each defined based on one or more known or anticipated undesirable states, which evaluate the incoming electronic data transaction request messages against predefined static or dynamic criteria or thresholds to determine whether to, for example, block or allow the processing thereof, so as to prevent or mitigate the effects of the one or more undesirable/anomalous states for which the rule is defined. To identify patterns of transactions, such systems may need to maintain a transactional history, such as in one or more pattern buffers, which are evaluated against defined criteria as transactions received to determine if the most recently received transaction in concert with the previously received transactions satisfies a pattern being monitored for.

However, identifying the criteria or thresholds used to evaluate incoming electronic data transaction request messages, so as to define rules to apply based thereon, is complex and requires defining/anticipating each undesirable/anomalous system state to be prevented/mitigated, as well as identifying the characteristics and/or patterns of incoming data transaction request messages to look for which may result in that state.

For simple single variable stateless conditions, where a value of single variable, such as a price value, alone is all that needs to be evaluated to determine if a transaction will result in a particular undesirable/anomalous state, defining a rule may not be difficult. For example, a rule may be easily defined to simply look for transaction request messages for a price value which exceeds, or not, a predefined threshold.

However, the conditions which may result in an undesirable/anomalous system state are rarely simple, particularly when the undesirable/anomalous state may not be readily apparent and/or only arises from specific combinations of the values of multiple variables. For undesirable/anomalous system states resulting from multivariate stateful conditions, where multiple variables in combination with a current or prior system state need to be evaluated, the identification of the undesirable/anomalous state as well as the definition of rules to identify those singular or patterns of transactions leading thereto may be much more complicated.

In some implementations, system operators may review historical data detailing previous system states and the historical transaction activity associated therewith in order to identify past system states which were identified retrospectively, e.g., manually after the fact, as undesirable and the particular transactions, or patterns thereof, which directly or indirectly likely resulted therein. Based on this review, rules may then be defined to identify subsequently received electronic data transaction requests the processing of which may, i.e., will or are likely to, cause, alone or in combination, the reoccurrence of the identified undesirable/anomalous state or an undesirable/anomalous state similar thereto.

However, in complex, i.e., multi-dimensional or multi-variate, stateful systems which process large volumes of arbitrary or pseudo arbitrary transactions which modify the state thereof, where a prior system state instance may have an effect on a future system state instance, analyzing past system state instances in order to discern some insight regarding actual or potential later occurring state instances can be challenging. For example, the potential volume of data to be reviewed and the potential for, and therefore a need to discern among, minor and/or fleeting changes in one or a combination of past system states which may have a relationship with, as a cause, indicator of, or precursor to, a system state occurring later in time, may be computationally overwhelming so as to render analysis and identification thereof impractical, if not impossible.

Furthermore, as market protection/integrity mechanisms attempt to prevent, or mitigate the effects of, an undesirable/anomalous system state, they are often deployed "in line" so as be able to process and evaluate, i.e., in real time, incoming transaction requests before they are processed by the system.

Generally for electronic trading systems, market participants desire rapid market data updates, low latency/high throughput order processing, and prompt confirmations of their instructions/transactions to allow them to: competitively, frequently and confidently evaluate, react to, and capitalize upon or, conversely, avoid, discrete, finite, fast moving/changing or ephemeral market events; leverage low return transactions via a high volume thereof; and/or otherwise coordinate, or synchronize their trading activities with other related concerns or activities, with less uncertainty with respect to their order status. Higher volume capacity and transaction processing performance provides these benefits as well as, without detrimentally affecting that capacity or performance, further improves market access and market liquidity, such as by allowing for participation by more market participants, the provision of additional financial products, and/or additional markets therefore, to meet the varying needs of the market participants, and rapid identification of additional explicit and implicit intra- and inter-market trading opportunities. The Exchange benefits, for example, from the increased transaction volume from which revenue is derived, e.g. via transaction fees.

However, in some instances, the deployment of market protection mechanisms may create bottlenecks or additional processing overhead/delay/latency to the processing of transactions, impacting/reducing performance, e.g., increasing processing times and overall system latency, particularly as the number and/or complexity of rules, and undesirable states to watch out for, increases.

In some instances, this may result in the implementation of mechanisms for bypassing integrity checks or deployment of fewer integrity checks and/or combining or broadening of such checks to be over-inclusive in an effort to reduce the amount of checking and the performance impact thereof at the cost of missing opportunities to prevent the occurrence of an undesirable/anomalous state or at the cost of false positives, i.e., mistakenly identifying a desirable state as undesirable.

While current electronic trading systems already offer significant performance advantages, the increasing transaction volumes, i.e., from an increasing number of market participants, implementation by some market participants of algorithmic and/or high frequency trading methodologies whereby high speed computers automatically monitor markets and react, sometimes in an overwhelming manner, to events, coupled with a continued demand for ever-decreasing processing latencies and response times, are driving a need for additional capacity and performance improvements to maintain performance as experienced by each market participant and avoid detrimental consequences, such as capacity exhaustion and inequitable access.

For example, the increasing speed at which market participants may evaluate and respond to changes in market data, such as responsive to a market event, is increasing the rate at which transactions are received by the electronic trading system, reducing the amount of time available to implement market protection mechanisms without detrimentally affecting overall system performance.

Furthermore, this improved speed and efficiency also, unfortunately, improves the speed at which problems may occur and propagate, or otherwise be exploited, such as where the market ceases to operate as intended, i.e. the market no longer reflects a true consensus of the value of traded products among the market participants. Such problems are typically, but not always, evidenced by extreme market activity such as large changes in price, whether up or down, over a short period of time or an extreme volume of trades taking place. In particular, market participants, whether human or electronic, may not always react in an expected manner, such as when presented with imperfect information, when acting in an unexpected manner, and/or due to deficient training or design. For example, unexpected trader behavior may be triggered by a market event, such as a change in price, creating a feedback loop where the initial reaction of traders may then cause further market events, such as continued price drops, triggering further responses and resulting in an extreme change in the price of the traded product in a short period of time. High speed and/or artificial intelligence-based trading may exacerbate the problem as there may be little time for traders/algorithmic trading systems, or those overseeing them, to contemplate and temper their reactions before a significant impact, such as a substantial financial loss, may be realized. Furthermore, improved communications among traders may facilitate the exchange of information and propagation of unexpected behavior in one market to other markets as traders in those other markets react to the results of the unexpected behavior. Market protection systems may therefore be needed to monitor and evaluate trading activity, detect unexpected activity and appropriately react more quickly to mitigate the spread of problems, again without impeding legitimate/expected market operation.

Accordingly, there is a need for computationally efficient market protection mechanisms which maximize opportunities to identify, react and prevent or mitigate undesirable/anomalous states while minimizing false positives and the overall impact on system performance.

### BRIEF DESCRIPTION OF THE DRAWINGS

Fig. 1 depicts a computer network system, according to some embodiments.
Fig. 2 depicts a general computer system, according to some embodiments.
Fig. 3 depicts a block diagram a system for facilitating efficient analysis of resultant outcomes of changes in a multi-dimensional state of a transaction processing system, according to some embodiments.
Fig. 4 depicts a flow chart showing the operation of the system of Fig. 3, according to some embodiments.
Fig. 5 depicts a flow chart showing operation of the system of Fig. 4, according to some embodiments.

### DETAILED DESCRIPTION

The disclosed embodiments relate to systems/methods which utilize a machine learnt network or model for efficiently proactively preventing an electronic data transaction processing system, such as an electronic trading system, from transitioning to an undesirable/anomalous state which must be reverted, e.g., to unwind one or more processed transactions, or where further state changes must be restricted, e.g., by only allowing limited processing of subsequently received transactions, or prevented, e.g., the processing of subsequently received transactions is temporarily or permanently halted. Using a machine learnt network, the disclosed embodiments are able to recognize, e.g., generate probabilistic inferences as to, both anticipated and unanticipated anomalous transactions which would result in an undesirable/anomalous state reducing occurrence thereof and minimizing having to revert, pause or halt the electronic trading system while also minimizing the impact on the performance of the electronic trading system.

The disclosed embodiments utilize a machine learnt network trained on historical transaction activity, as well as the resultant system states therefrom identified as undesirable, anomalous or otherwise, alone or in concert with historical event data relevant thereto, such as financial, weather, political and other news and events, and/or other data from other financial markets, which impact or influence past or future transactional activity in the system wherein the resultant states may have been classified to the machine learnt network as desirable/non-anomalous or undesirable/anomalous and/or the machine learnt network has been trained on criteria which define undesirable or desirable states.

The disclosed embodiments may be used to supplant, supplement or support existing market protection mechanisms. For example, the disclosed embodiments may provide a single evaluation mechanism for evaluating incoming electronic data transactions requests, alone or in combination with prior and contemporaneously submitted transactions and/or events, to determine when the processing thereof will, e.g., within a configurable subsequent time period thereof, result in an undesirable/anomalous state without first having to define the undesirable state and the characteristics of transaction requests which may result therein. This may result in identifying a wider variety of undesirable/anomalous states, both anticipated/previously seen or unanticipated, while minimizing the risk of false positives. Furthermore, this single evaluation mechanism avoids the need to layer multiple different binary evaluations or predefine different patterns of transactional activity, which may impact transaction processing performance of the system. As will be explained, the processing performance of a machine learnt network to identify/infer to probable occurrence of undesirable states may be independent from the training thereof, i.e., independent of the number of classified states used to train the model.

Alternatively, the disclosed embodiments may be used in addition to existing market protection mechanism and/or used, as will be described, to define, refine and/or update the criteria applied thereby. In particular, the machine learnt network may be operated as a separate component "out of band" of the processing of incoming transactions wherein the output of the machine learnt network is used to define, refine and/or update, such as in real time, the criteria applied by one or more in-band market protection mechanisms which evaluate incoming transactions against the then current criteria. For example, a disruption filter may be configured to identify transaction messages that will disrupt the market, i.e., result in an undesirable/anomalous state. For example, the disruption filter may identify a transaction that disrupts the market by comparing a price or size/quantity of the transaction, or other parameter(s) thereof, to a predefined threshold/criteria which may be determined by the machine learnt network, e.g. by learning which types of transactions disrupt markets from historical market and transaction data. A disruption or undesired state may be defined as a change in the state of the market that is outside of normal operations. A disruption may be a change in price or structure of the market that exceeds or deviates from a defined threshold change. A disruption may be a transaction that leads to other transactions that eventually disrupt the market. A market disruption may occur as a result of an event or group of events that are widely perceived as economically detrimental. The exchange may set thresholds or limits on trading activity, that if exceeded, indicate a market disruption.

In particular, the disclosed embodiments may reduce a computational burden for identifying and analyzing past system state instances of complex, i.e., multi-dimensional or multi-variate, stateful systems which process large volumes of arbitrary or pseudo arbitrary transactions which modify the state thereof, where a prior system state instance may have an effect on a future system state instance, in order to, for example, discern some insight about actual or potential later occurring state instances and the transactions which resulted therein. The disclosed embodiments may be used to identify, for example, minor and/or fleeting changes in a past system state which may have a relationship, significant or otherwise, with, as a cause of, indicator of, or precursor to, a system state of interest occurring later in time, as well as the relevant transactional activity therebetween.

An example system, which will be described in more detail below, is an electronic transaction processing system, such as an electronic trading system, which processes a high volume of transactions, e.g., orders to buy or sell a product, such as a financial instrument, e.g., futures and options contracts or other derivative or equity instruments. Such a system may process upwards of 500 million transactions per day which affect the state thereof, i.e., upwards of 500 million state instances. The occurrence or processing of some transactions, alone or in combination with contemporaneously or previously received transactions may cause or otherwise may be indicative of, or a precursor to, some future outcome or event of interest, e.g., an undesirable/anomalous state or state similar thereto, evident from a later change in the system state, e.g., one or more transactions to sell may result in later occurrence of spike in transactions to buy.

The state of complex system may include both portions which are dependent upon or otherwise defined or modified by the processing of a given one or more transaction requests and portions which remain entirely unaffected, i.e., any changes thereto are entirely or substantially independent. While the overall state of the system at any given time includes both the dependent and independent portions, for the purpose of comparing states to determine, for example, similarity therebetween, such comparisons may be limited to comparing only those portions of the system state expected or likely to be dependent. For example, in an electronic trading system which processes data transaction requests for multiple different products, each stored in its own orderbook database, an assessment of the similarity of system states resulting from the processing of transaction questions for a particular product may focus only on the order book data structure, and attendant systems, for that product, and, in some implementations the order book data structures of related products. It will be appreciated, however, that the learnt model, as described herein, may be trained on complete system states wherein the learnt model learns to discriminate, either based on supervised/classified inputs or unsupervised learning, for a given incoming transaction to be evaluated, which portions of the system state relevant and which are not.

As will be explained, the disclosed embodiments are described in terms of identifying/inferring incoming data transaction request messages which, if processed, would, i.e., within a configurable future time period, alone or in combination with contemporaneously or previously received transaction requests, result in an undesirable/anomalous state of the electronic trading system, an undesirable/anomalous state being a state which must be reverted, i.e., by unwinding one or more completed transactions, or where further state changes must be restricted, i.e., by limiting transaction processing to those submitted by a subset of traders or within values within a limited range, or otherwise limiting the processing of transactions, e.g., a "reserved" or "pre-open" allowing transaction submission but not allowing matching so as to facilitate price discovery, or preventing transaction processing altogether either permanently, e.g., a trading halt, or temporarily, e.g., a trading pause, to allow traders to "cool down" and digest recent activity. The state resulting from the processing of the transaction includes a state indicative of/resulting from an attempt to match the incoming transaction with a suitable previously received counter transaction to satisfy one or both transactions, and the storing any unsatisfied remainder, or indicative of a result of an attempt to cancel or modify a previously submitted transaction request. The incoming transaction request may be one which initiates, is part of, or would complete, a particular pattern of transaction requests, the combined effect resulting in the undesired state.

Where such an incoming transaction is identified, that transaction may be prevented from being processed. Alternatively, the transaction may be modified in such a manner, e.g., by adjusting its price or quantity, splitting it into multiple smaller quantity transactions, etc., such that the processing thereof would not result in the undesirable state, and allowed to be processed. Appropriate notifications of the action taken may further be provided to administrators of the system and/or the source of the identified transaction. In other embodiments, subsequent incoming transaction requests from the same source may also be blocked. Alternatively, or in addition thereto, incoming transaction requests to other systems may be entirely or selectively blocked or paused. For example, submissions to a clearing service, such as CME's ClearPort service which is an OTC clearing service, may be entirely or selectively blocked or paused, with respect to the trader, or entities related thereto, which submitted the transaction which resulted in the undesirable state, with respect to the instrument/market, or instruments/markets related thereto, in which the offending transaction was submitted, or combinations thereof. Further, holds may be placed on accounts of the trader, or entities related thereto, which submitted the transaction which resulted in the undesirable state, until, for example, system administrators and/or regulators may have an opportunity to conduct a review.

As the machine learnt network is trained on historical transaction activity and other historical data, the disclosed embodiments may identify/infer transaction requests which result in a pre-cursor system state which may or may not lead to a future, as defined by forecast window, undesirable/anomalous state whereby the incoming transaction request is not prevented from being processed but the disclosed system takes other remedial measures to intervene such that the undesirable state is not, or less likely to be, realized. Such remedial measures may include issuing a warning to one or more traders whose activity is contributing to the system moving towards the undesirable state, activating implied functionality to improve market liquidity and/or synthetically solicit transaction requests which would alter the trajectory of the system state away from the undesirable/anomalous state, or other measures which would influence the trajectory of the system state away from the undesirable/anomalous state. For example, the disclosed embodiments may convert a single transaction for a large quantity into multiple smaller quantity transactions. In extreme cases, a reserved state, trading pause, or trading halt may be warranted. The disclosed embodiments may further factor in other conditions. For example, where the trading session is nearing close and there would be insufficient time for the system to reach the undesirable/anomalous state, the disclosed embodiments may take no action. The machine learnt network may operate to identify such pre-cursor states within a forecast window which balances the anticipated lead time prior to the occurrence of the undesirable state, so as to provide sufficient time to enact remedial measures, with a probability of the pre-cursor state eventually leading to that undesirable/anomalous state, so as to, for example, avoid a false positive requiring no action.

The disclosed embodiments may then minimize the occurrence of undesired/anomalous states and thereby market interruptions - to minimize occurrences of the market having to reverted, reserved/restricted, paused or halted. Alternatively or in addition thereto, similar to prior protection mechanisms, the system could instead block or allow the transaction in concert with a period of reserve or pause and/or otherwise simply notify the administrators. In an alternate embodiment, other actions may include enabling additional liquidity, i.e. trading opportunities, for the particular product, such as by temporarily or permanently enabling implied opportunities whereby, for example, additional liquidity may be found in markets for combination products, e.g. spreads, involving the particular product. Such actions may be designed to cause the system to transition from the undesirable state to a desirable state as quickly as possible. In an alternative embodiment, in addition to or instead of blocking the incoming transaction and/or instituting a reserve/restriction, pause or halt, the disclosed embodiments may modify outgoing communications, i.e., market data, such as those market data messages resulting from the undesirable state, or otherwise, e.g., by altering or delaying one or more market data messages, so as to modify, modulate, interrupt or otherwise intervene in the likely actions/responses of those market participants in receipt of those market data messages, such that subsequent transactions submitted based thereon may cause the system to avoid the undesirable/anomalous state or otherwise transition quickly to a desirable/non-anomalous state minimizing any consequences.

Undesirable/anomalous states may refer to those system states, both expected and unexpected which may, will, or are likely to have a detrimental effect on the operations and/or users of the system, e.g., as intended by the operator thereof and/or understood by the users thereof, as may be defined, for example, by one or more operating agreements, rules or regulations. It will be appreciated then that a given unexpected state may not always be considered undesirable, and a given expected state may not always be considered desirable. Accordingly, as used herein, a state will be referred to/characterized as either undesirable or anomalous when that state results in, or is indicative of, a detrimental effect on the system and/or users thereof as understood or defined herein. An anomalous data transaction request may be a transaction that will or is likely to lead to an anomalous state as described herein, such as a transaction which violates a rule or regulation defined an operating agreement, rule or regulation. Anomalous transactions and states may further be characterized as anticipated or unanticipated. An undesirable/anomalous state may further refer to an otherwise innocuous state which results from one or more anomalous transactions, such as transactions which violate one or more rules, operating agreements or regulations. For example, an undesirable state may result from a wash trade, i.e., a form of fictitious trade in which a transaction or a series of transactions give the appearance that authentic purchases and sales have been made, but where the trades have been entered without the intent to take a bona fide market position or without the intent to execute bona fide transactions subject to market risk or price competition, or from spoofing, i.e., submission or cancellation of multiple bids or offers to create a misleading appearance of market depth and submitting or cancelling bids or offers with intent to create artificial price movements upwards or downwards.

An anomalous incoming electronic data transaction request may be considered unanticipated when it is not prevented from being processed by the system by a predefined market protection mechanism and results in an undesirable state of the system or the processing thereof otherwise unanticipatedly results in an undesired state. That is, an incoming electronic transaction request message is considered anticipated when a market protection mechanism has been deployed comprising a rule that would be triggered by that incoming electronic transaction request message, alone or in combination with other request messages, to either prevent the processing thereof which would result in an undesirable state or allow the processing thereof not resulting in an undesirable state.

Undesirable/anomalous states may be considered anticipated when they, or a state, or portion thereof, similar thereto, have been previously identified as either having previously occurred or possibly being able to occur.

For example, in order to detect an anticipated undesirable system state of a price spike when the last traded price rises by defined amount over a defined period of time, prior market protections systems may implement a price comparison which compares the price specified in an incoming electronic data transaction request with a last traded price or the current best price, i.e., the inside market, and determine if a threshold has been exceeded as a function of the temporal proximity of the submission time of the incoming data transaction request. That is, the system anticipates that such an order may be submitted and has defined a rule to identify such an order if submitted. Where a series of orders, each for a progressively increasing price, are received over a period of time where the criteria of the market protection mechanism are not met but a price spike nevertheless occurs, at least the last of those orders may be considered unanticipated.

Examples of undesirable states for which prior specific market protection mechanisms may or may not have been deployed and which may be identified by the disclosed embodiments include:
1. A state resulting from the processing of an incoming data transaction request comprising a trade order for a tradeable instrument at a price which exceeds a threshold, such as being too far, i.e., higher or lower, from a most recent trade price or too far from the "inside market" comprising the then current best bid and best ask prices. This may be indicative of a price spike/dip for example and a market protection mechanism for detecting this may be referred to as price banding.
2. A state resulting from the processing of an incoming data transaction request comprising a trade order for a tradeable instrument at a price which exceed a threshold over or under a prior incoming data transaction for the same tradeable instrument and received within a threshold margin of time of that prior request. This may be indicative of a price trending/accelerating in a particular direction or fluctuating too quickly and market protection mechanism for detecting this may be referred to as velocity logic.
3. A state resulting from the processing of an incoming data transaction request comprising one or more trade orders for a quantity of a tradeable instrument which exceeds a threshold. Submission of a large quantity, and/or multiple orders, particularly at a price away from the last traded price or the inside market may create a false sense of liquidity and be indicative of one trader attempting lure another trade into a trade at a worse than expected price. Alternatively, an order for an excessive quantity at a price near the inside market be used to draw interest in trading only a smaller portion thereof intended by the trader, the trader subsequently cancelling the undesired remaining quantity.
4. A state resulting from the processing of an incoming data transaction request of a series of data transaction requests, each received from a same source within a threshold time of a prior incoming data transaction request. This may be indicative of a high frequency trading algorithm attempting to submit a large number of orders in short period of time.
5. A state resulting from the processing of an incoming data transaction request of a series of similar or correlated data transaction requests, received from different sources. This may be indicative of the concerted or coordinated activity of multiple traders.
6. A state resulting from the processing of an incoming data transaction request which is likely to cause subsequent submission of a data transaction request similar or counter thereto which, in combination, will exceed a threshold.
7. A state resulting from the processing of an incoming data transaction request from the same source as a prior incoming data transaction request opposite but not necessarily counter thereto for the same or different quantities. This may be indicative of an imbalance between the buy and sell sides of a market and an intent to falsely signal interest in one of buying or selling when the true interest of the trader is in the other.
8. A state resulting from the processing of an incoming data transaction request which cancels or modifies, such as the price, quantity and/or side, a previously processed but not yet fully satisfied incoming data transaction request within a threshold period of time.
9. A state resulting from the processing of an incoming data transaction request which would exceed a credit limit of the source thereof.
10. A state resulting from the processing of an incoming data transaction request which would exceed a risk limit of the source thereof.
11. A state resulting from the processing of an incoming data transaction request which is counter to multiple previously submitted conditional orders triggering a rapid cascade of the processing thereof and causing a precipitous change in price.
12. A state resulting from the substantially simultaneous, e.g., within a threshold temporal proximity, buying and selling of the same instrument by the same entity, directly or via proxy entities, to create an impression of market activity.
13. A state resulting from the submission of an incoming data transaction request to buy or sell followed, withing a threshold temporal proximity, by a request to cancel that prior order.

As used herein, "better" than a reference value means lower than the reference value if the transaction is a purchase transaction, and higher than the reference value if the transaction is a sell transaction. Said another way, for purchase transactions, lower values are better, and for relinquish or sell transactions, higher values are better.

More information regarding undesirable system states may be found in, U.S. Pat. Nos. 8,103,576; 8,112,347; 8,660,936; 8,924,278; 10,467,963; 10,692,194; 10,929,926; and 11,023,969 as well as U.S. Patent Publication Nos. 2005/0108141 A1; and 2015/0081504 A1, herein incorporated by reference in their entireties and relied upon.

As will be described, these undesirable states may be the result of one or more, e.g., a pattern or combination of, intentional activities, i.e., by one or more traders basing their actions, intentionally or otherwise, on those of another trader, intentionally or unintentionally attempting gain some form of advantage, or via inadvertent/unintentional activity, i.e., due to an error, manual or programmatic, on the part of a trader or their trading system or the inability of a trader to appreciate the consequences of their actions due to inexperience, insufficient information, or the complexities involved. Such activity or pattern of activities may directly or indirectly result in an undesirable state, such as by causing a cascade of activities or series of reinforcing/compounding activities, e.g., feed-back loops.

Because market participants may not be aware that a product or an instrument is reserved due to the large volume of messages sent over an electronic trading system or because the market participants are no longer trading, the present system and method also may encompass independent communication systems to convey information, warnings, or alerts about an instrument in a reserved state. Such systems can include devices that send and/or receive messages via telecommunication or wireless links such as portable phones, personal digital assistants ("PDAs"), and/or electronic mail devices, devices that send and/or receive images and can print them on a tangible media such as faxes, etc. Preferably, these systems make market participants aware of the state of the market in a narrow timeframe.

In partially or completely anonymized electronic trading systems, the amount of information available to an individual trader may be limited, i.e., they may only have complete information regarding their own transactions and limited information regarding transactions submitted by others, e.g., limited to the existence of a pending unsatisfied order for a quantity at a price and the results of the process of incoming transactions, but not the sources thereof.

The disclosed embodiments leverage the unique perspective of being able to monitor the state of the entire market(s) and the activities of all market participants, as well as relationships/associations therebetween, to enable: monitoring of market activity, both contemporaneous and historical, e.g., transactions and other actions undertaken by market participants, administrators, regulators and other participating entities which affect the state of the market(s), including: both inter- and intra-market participant activity; combinations of contemporaneously received transactions from the same or different participants or organizations; derivation of market and market participant metrics; identification and monitoring of inter- and intra-participant transactional patterns which may be indicative of, or portend market events, such as a market crash, or illegal, fraudulent or malicious activity; and/or post event replication/replay, inspection and analysis of market events and the activity leading thereto. The ability to see all incoming transactions and match events for a given set of markets may be implemented by using a gateway, e.g., a market segment gateway, or other architecture, such as an orderer/decider, which constrains the flow of transactions into, and processing results from, the system to a common monitoring point.

In particular, the disclosed embodiments, having access to all incoming orders/transactions, may evaluate not only a specific trader activity, but all other trader's activity as well so as to be able to determine how a particular transaction will affect the system state. As opposed to mechanisms implemented by the market participants themselves, e.g., to prevent trader error, which are only privy to the transactions of those market participants, the disclosed embodiments can evaluate the effects of transactions with respect to submitting trader, the counter party thereto, as well as other market participants engaged in related transactions, e.g., competing for the same trading opportunities. For example, the disclosed embodiments, having access to the identity of the submitting traders, as well as the organization to which they affiliated or otherwise related, may be able to discern relationships between traders not otherwise appreciated. Such relationships may help to correlate, or be correlated by, the trading activities of those traders. In systems which offer related services, such as OTC clearing services, clearing of OTC transactions, such as those related to CLOB based instruments, may further be considered where such activities between the two market types may be, for example, coordinated to obtain some unfair advantage from the resultant system state.

Furthermore, the disclosed embodiments enable consideration of incoming transactions in conjunction with resting orders and/or open positions (completed orders) in the submitting market participant's and/or other market participants' portfolios, consideration of the probability that the incoming order will be fully or partially satisfied/filled such as by looking at the current market depth, other incoming orders for the same product or counter party activity, as well as consideration of risk to the entire market based on parameters of the incoming order.

The disclosed embodiments use a machine learnt network, also referred to as an artificial neural network (ANN) or machine learnt model, to identify or detect anomalous incoming transaction messages which would result in an undesired state as described. The use of specially trained ANNs to detect such anomalies realizes a number of improvements over traditional methods of detecting anomalies, including more accurate detection of anomalies.

ANNs are a type of machine learning model used to perform a wide variety of complex tasks, including image recognition, speech recognition, pattern recognition, and detection of anomalies. An ANN is a biologically inspired algorithm that learns from training data. An ANN can be realized through software, hardware, or a combination of software and hardware. The structure of an exemplary ANN has a series of layers, each comprising one or more neurons arranged in one or more neuron arrays. In an exemplary embodiment, a neuron may comprise a register, a microprocessor, and at least one input. Each neuron produces an output, or activation, based on an activation function that uses the outputs of the previous layer and a set of weights as inputs. Each neuron in a neuron array may be connected to another neuron via a synaptic circuit. A synaptic circuit may include a memory for storing a synaptic weight. An exemplary ANN may be a Deep Neural Network having an input layer, an output layer, and a plurality of fully connected hidden layers. ANNs are particularly useful in anomaly detection because they can effectively extract features in linear and nonlinear relationships. In some embodiments, an ANN may be implemented by an application-specific integrated circuit (ASIC). ASICs may be specially customized for a specific artificial intelligence application and provide superior computing capabilities and reduced electricity consumption compared to traditional CPUs.

In some embodiments, training data is generated by receiving continuous data at a computer and using the computer to discretize the continuous data. In some embodiments, the continuous data may be received remotely over a network. The continuous data may be historical data, which the neural network can use to learn patterns to identify or detect potential anomalies. Continuous data is data that is measured and can have any number of possible values. Machine learning models may benefit from being trained with discrete data rather than continuous data. Discrete data can be counted and has a limited number of values. Any type of discretization method may be used to convert continuous data to discrete data, including binning, clustering, and numerical discretization. The ANN is then trained using any known training techniques to generate a trained neural network which can be used to detect anomalies. The trained ANN monitors incoming data sets to detect anomalies. If the trained ANN detects one or more anomalies, it additionally analyzes the detected anomalies to generate anomaly data which can be output to a user and/or used to re-train the ANN. For example, the anomaly data may explain the type of anomaly or a cause of the anomaly.

A conventional backpropagation algorithm and a conventional gradient descent algorithm may be used to train the neural network. Gradient descent, which may include conjugate gradient and quasi-Newton algorithms, is an optimization algorithm used to minimize differentiable real-valued multivariate functions. Gradient descent begins by initializing the values of parameters and then applying a gradient descent calculation, which uses mathematical calculations to iteratively adjust the values so they minimize a loss function to optimize the ANN. Backpropagation is the mathematical process of calculating the derivatives and gradient descent is the process of adjusting model parameters using the calculated derivatives to minimize the loss function. Backpropagation is a mathematical calculation for supervised learning of ANNs using optimization algorithms, such as gradient descent. Given an ANN and an error function, backpropagation is used to calculate the gradient of the error function with respect to the neural network's weights. Alternatively, other training algorithms may be employed such as equilibrium propagation, reservoir computer, e.g., ridge regression, evolutionary computing, e.g., NeuroEvolution of Augmenting Topologies (NEAT) or other genetic algorithms, direct feedback alignment, forward-forward algorithm, Difference Target Propagation , the Hilbert-Schmidt Independence Criterion (HSIC) Bottleneck, Online Alternating Minimization with Auxiliary Variables, Decoupled Neural Interfaces Using Synthetic Gradients, or other training algorithms, or combinations or variants thereof, now available or later developed.

Anomaly detection is an important task that impacts any industry that benefits from identifying abnormal data that deviates from expected data or from a general pattern. For example, an intrusion detection system may use the disclosed anomaly detection method to improve detection of malicious network packets. A difficulty in anomaly detection is that a system must define the boundary between ordinary and anomalous data and accurately classify data as ordinary or anomalous. The line between ordinary and anomalous data may be difficult to determine with cases approaching a boundary and based on an application-specific domain. For example, small variations may trigger an identification of an anomaly in network security or medicine while relatively larger deviations may be considered normal in less sensitive applications. Furthermore, malicious actors may attempt to make anomalies appear like ordinary activity. The disclosed embodiments provide solutions for using a trained ANN to quickly and accurately identify anomalies as compared to anomaly detection performed using traditional methods.

In some embodiments, the ANN may detect anomalies in an electronic data transaction processing system where the anomalies indicate potential anomalous transaction messages transmitted to the system. If the ANN detects one or more anomalous incoming data transaction request messages, the ANN can additionally determine whether the detected anomaly is associated with, i.e., is likely to cause, an undesirable system state. If the detected anomaly is associated with an undesirable system state, the ANN may cause a network device to drop the anomalous transaction request. By automatically detecting anomalous transaction requests which may result in an undesirable system state, the disclosed embodiments enhance system integrity by allowing for automatic, proactive remediation of anomalous transaction activity. The disclosed system detects anomalous transaction requests which would result in an undesirable system state and takes remedial actions, including automatically dropping the anomalous transaction request, restricting further system state changes, pausing further system state changes or halting further system state changes. Unlike conventional system protection/remediation solutions, the disclosed method and system are able to identify anomalous data transaction requests and take remediation actions, including dropping anomalous data transaction requests in real time.

The disclosed system realizes an improvement in market protection systems, and practical application thereof, by having to anticipate anomalous transaction requests and, in some implementations, avoiding the delay involved in waiting on a network administrator to react to receipt of such requests by automatically dropping anomalous transaction requests and/or implementing other actions based on anomalies identified by the ANN in real time, e.g., alerting an administrator or otherwise presenting a proposed action for approval (opt in) or as a default where no further action is taken (opt out).

As described, an ANN consists of connected units or nodes called artificial neurons, which loosely model the neurons in a brain. These are connected by edges, which model the synapses in a brain. Each artificial neuron receives signals from connected neurons, then processes them and sends a signal to other connected neurons. The "signal" is a number, and the output of each neuron is computed by some linear and/or non-linear function of the sum of its inputs, called the activation function. The strength of the signal at each connection is determined by a weight, which adjusts during a learning process.

Typically, neurons are aggregated into layers. Different layers may perform different transformations on their inputs. Signals travel from the first layer (the input layer) to the last layer (the output layer), possibly passing through multiple intermediate layers (hidden layers). A network is typically called a deep neural network if it has at least 2 hidden layers.

Artificial neural networks are used for various tasks, including predictive modeling, adaptive control, and solving problems in artificial intelligence. They can learn from experience and can derive conclusions from a complex and seemingly unrelated set of information.

Neural networks are typically trained through empirical risk minimization. This method is based on the idea of optimizing the network's parameters to minimize the difference, or empirical risk, between the predicted output and the actual target values in a given dataset. Gradient based methods such as backpropagation are usually used to estimate the parameters of the network. During the training phase, ANNs learn from labeled training data, referred to as "supervised" learning described in more detail below, by iteratively updating their parameters to minimize a defined loss function. This method allows the network to later generalize to unseen data.

Training a neural network may be performed using supervised or unsupervised machine learning. The biggest difference between supervised and unsupervised machine learning is the type of data used. Supervised learning uses labeled training data, and unsupervised learning does not.

More simply, supervised learning models have a baseline understanding of what the correct output values should be. With supervised learning, an algorithm uses a sample dataset to train itself to make predictions, iteratively adjusting itself to minimize error. These datasets are labeled for context, providing the desired output values to enable a model to give a "correct" answer.

In contrast, unsupervised learning algorithms work independently to learn the data's inherent structure without any specific guidance or instruction. One simply provides unlabeled input data and lets the algorithm identify any naturally occurring patterns in the dataset.

While the type of data may be the easiest way to differentiate between these two approaches, they each may further have different goals and applications that also set them apart from each other. Supervised learning models may be more focused on learning the relationships between input and output data. For example, a supervised model might be used to predict flight times based on specific parameters, such as weather conditions, airport traffic, peak flight hours, and more. On the other hand, unsupervised learning may be more helpful for discovering new patterns and relationships in raw, unlabeled data. Unsupervised learning models, for instance, might be used to identify buyer groups that purchase related products together to provide suggestions for other items to recommend to similar customers.

As a result, supervised and unsupervised machine learning are deployed to solve different types of problems. Supervised machine learning may be suited for classification and regression tasks, such as weather forecasting, pricing changes, sentiment analysis, and spam detection. While unsupervised learning may be suited for exploratory data analysis and clustering tasks, such as anomaly detection, big data visualization, or customer segmentation.

An autoencoder, which, in one embodiment, may be a bottleneck encoder, is a type of neural network model that seeks to learn a compressed representation of an input. They are an unsupervised learning method, although technically, they are trained using supervised learning methods, referred to as self-supervised. They are typically trained as part of a broader model that attempts to recreate the input.

The autoencoder is a complicated mathematical model that trains on unlabeled and unclassified data and is used to map the input data to another compressed feature representation before reconstructing the input data from that feature representation. The aim of an autoencoder is to learn a lower-dimensional representation (encoding) for a higher-dimensional data, typically for dimensionality reduction, by training the network to capture the most important parts of the input.

Autoencoders discover latent variables by passing input data through a "bottleneck" before it reaches the decoder. This forces the encoder to learn to extract and pass through only the information most conducive to accurately reconstructing the original input.

The encoder comprises layers that encode a compressed representation of the input data through dimensionality reduction. In a typical autoencoder, the hidden layers of the neural network contain a progressively smaller number of nodes than the input layer: as data traverses the encoder layers, it is compressed by the process of "squeezing" itself into fewer dimensions.

The bottleneck (or "code") contains the most compressed representation of the input: it is both the output layer of the encoder network and the input layer of the decoder network. A fundamental goal of the design and training of an autoencoder is discovering the minimum number of important features (or dimensions) needed for effective reconstruction of the input data. The latent space representation-that is, the code-emerging from this layer is then fed into the decoder.

The decoder comprises hidden layers with a progressively larger number of nodes that decompress (or decode) the encoded representation of data, ultimately reconstructing the data back to its original, pre-encoding form. This reconstructed output is then compared to the "ground truth"-which in most cases is simply the original input-to gauge the efficacy of the autoencoder. The difference between the output and ground truth is called the reconstruction error.

Autoencoders may be used as a learned or automatic feature extraction model and, in such an application, once the model is fit (once the model achieves a desired level of performance recreating the sequence), the reconstruction aspect of the model can be discarded and the model up to the point of the bottleneck can be used. The output of the model at the bottleneck is a fixed length n-dimensional vector that provides a compressed representation of the input data. The resulting vectors can then be used in a variety of applications, not least as a compressed representation of the sequence as an input to another supervised learning model. As will be appreciated, as a vector, this representation of the model output may be characterized by both a magnitude and a direction. Further, operations on these vectors, such as vector cross product (or vector product) may be performed which results in a vector having magnitude and direction, such as to determine similarity between two vector representations of model outputs, i.e., the more similar or dissimilar two model outputs are, e.g., in terms of vector magnitude and direction, the closer to zero their vector product may be, i.e., two vectors or equal magnitude but either the same or opposing direction may have a cross product of zero.

Input data from the domain can then be provided to the model and the output of the model at the bottleneck can be used as a feature vector in a supervised learning model, for visualization, or more generally for dimensionality reduction.

Feature vectors represent features used by machine learning models in multi-dimensional numerical values. As machine learning models can only deal with numerical values, converting any necessary features into feature vectors is crucial. A feature vector is an ordered list of numerical properties of observed phenomena. It represents input features to a machine learning model that makes a prediction.

In machine learning and pattern recognition, a feature is an individual measurable property or characteristic of a phenomenon. Choosing informative, discriminating and independent features may facilitate pattern recognition, classification and regression. Features are usually numeric, but structural features such as strings and graphs may be used in syntactic pattern recognition.

During the training phase of an autoencoder, back propagation may be used to facilitate the learning process. Back propagation is the practice of fine-tuning the weights of a neural net based on the error rate (i.e. loss) obtained in the previous epoch (i.e. iteration.) Proper tuning of the weights ensures lower error rates, making the model reliable by increasing its generalization.

Back propagation may use an optimization function, such as gradient descent, to determine in what direction the model should adjust the weights to get a lower loss result than the current result. Backpropagation essentially feeds the resultant loss from a learning iteration backward in such a way that the model can fine-tune the weights. The optimization function, such as gradient descent, helps to find the weights that will hopefully yield a smaller loss in the next iteration.

An autoencoder may further be implemented with a Long Short Term Memory (LSTM) which inherently tracks changes in states, i.e., maintains history based in how much that input is affecting the output, built into each neuron.

An LSTM is a type of recurrent neural network (RNN) aimed at dealing with the vanishing gradient problem present in traditional RNNs whereas more layers using certain activation functions are added to neural networks, the gradients of the loss function approaches zero, making the network hard to train, e.g., using back propagation. Its relative insensitivity to gap length is its advantage over other RNNs, hidden Markov models and other sequence learning methods. It aims to provide a short-term memory for an RNN that can last thousands of timesteps, thus "long short-term memory". It is applicable to classification, processing and predicting data based on time series, such as in handwriting, speech recognition, machine translation, speech activity detection, robot control, video games, and healthcare.

In theory, classic RNNs can keep track of arbitrary long-term dependencies in the input sequences. The problem with classic RNNs is computational (or practical) in nature: when training a classic RNN using backpropagation, the long-term gradients which are backpropagated can "vanish", meaning they can tend to zero due to very small numbers creeping into the computations, causing the model to effectively stop learning. RNNs using LSTM units partially solve the vanishing gradient problem, because LSTM units allow gradients to also flow with little to no attenuation. However, LSTM networks can still suffer from the exploding gradient problem.

The intuition behind the LSTM architecture is to create an additional module in a neural network that learns when to remember and when to forget pertinent information. In other words, the network effectively learns which information might be needed later on in a sequence and when that information is no longer needed.

An LSTM Autoencoder is an implementation of an autoencoder for sequence data using an Encoder-Decoder LSTM architecture. Once fit, the encoder part of the model can be used to encode or compress sequence data that in turn may be used in data visualizations or as a feature vector input to a supervised learning model.

Generally, the performance of a machine learnt network, i.e., the latency, in producing an output, i.e., an inference, probability or confidence value, subsequent to receiving an input consists of predictable and unpredictable latencies. Predictable latency is a consistent delay that can be anticipated and accounted for in system design. Sources of predictable latency may include: model complexity, e.g., the number of layers and parameters in a neural network directly affects the time required for forward propagation during inferencing; input data size, e.g., larger input data, such as high-resolution images or long sequences, naturally may require more processing time; hardware limitations, e.g., the processing speed of the underlying hardware, such as CPU clock rates or memory bandwidth, contributes to a baseline latency; and quantization effects, e.g., the use of reduced precision computations can introduce small, predictable delays due to additional quantization and dequantization steps. Unpredictable latency introduces variability and uncertainty into the performance of the machine learnt network. Sources of unpredictable latency may include: cache misses, e.g., irregular memory access patterns can lead to cache misses, causing unexpected delays in data retrieval; resource contention, e.g., in multi-tasking environments, competition for shared resources (e.g., memory bandwidth, and computational units) can cause varying delays; dynamic voltage and frequency scaling (DVFS), e.g., power management techniques that adjust processor clock speeds can introduce timing variability; network fluctuations, e.g., in distributed AI systems, network congestion or packet loss can lead to unpredictable delays in data transfer; operating system interrupts, e.g., background processes and system interrupts can temporarily halt AI inferencing, leading to sporadic latency spikes.

The disclosed embodiments contemplate various methods for improving the performance of the machine learnt network, including: optimizing data flows through the model; implementing parallel processing for concurrent operations; minimizing data movement between processing units and memory; using reduced precision arithmetic; implementing pipelines processing architectures; optimized process scheduling; optimized modes of data communication; configuring the machine learnt network, e.g., by segregating portions thereof, to enable updates/retraining while operating, e.g., updates to one portion while another continues to operate. The disclosed embodiments may further be implemented using specific processors which optimize the processing of machine learnt networks, including graphics processing units or other vector-type processors, neural processing units, or custom designed processors implemented in an FPGA or ASIC.

For use with the disclosed embodiments, the machine learnt network may be trained be trained on historical market activity of all, or subsets of, traders to the entire electronic trading system or portions thereof, i.e., transactions only for defined subset of related products, i.e., previously submitted transactions and the processing results thereof, i.e., resultant system states, which may or may not be classified, e.g., as undesirable or desirable. In one embodiment, the machine learnt network may be trained on specifically identified ranges of historical transactions and their results identified as leading up to a known/defined desirable or undesirable state, such as a particular market event, e.g., where manual action was taken to revert, restrict, pause or halt system operation. The results of transaction may include credit utilization of one or more traders, resulting margin credits or debits, or other data generated as a function of the processing of transactions as describe herein.

Further, the machine learnt network may be trained on activities in other exchanges or trading systems such as equities markets as events occurring those markets may affect transaction activity.

In addition, as trading activity is often influenced by current events, both generally and specifically in the financial sector, the machine learnt network may be further trained on these events, including financial events such as changes to interest rates, release of government reports, e.g., on inflation, unemployment, etc., geo-political events, weather events, etc.

The training data may be arranged as a time series of multi-variate vectors wherein the time range/depth of the time series may vary depending upon the available data wherein the machine learnt network comprises an LSTM.

As market activity and current event data is continuous, so too may be the training of the machine learnt network. In this manner, by being continuously trained on incoming transactions and the processing results thereof, the machine learnt network may embody the current state of the electronic trading system, including the state of all markets, i.e., of all order book data structures, maintained thereby. In this way, the machine learnt network may be able to predict the outcome of the processing of an incoming transaction, whether and to what extent an order will be satisfied if forwarded to the matching engine of the system.

The machine learnt network may further be trained on the operating rules and constraints of the electronic trading system as well as the regulatory and legal environment governing system operation.

As noted, the training may be supervised or unsupervised or a combination thereof. In supervised training, the particular training data may be pre-classified as evidencing a desirable or undesirable state of the system. Alternatively, the machine learnt network may be trained on the characteristics of desirable or undesirable states, such as rapid price or quantity changes or other patterns indicative of an undesirable state. In unsupervised training, the machine learnt network may simply train on the grouping of similar system states and classify new system states in accordance therewith.

Accordingly, the machine learnt network may develop the ability to identify not only the effects of individual transaction requests on system state but also the effects of those transactions in combination with other contemporaneously received transaction requests and/or contemporaneously occurring events. Furthermore the machine learnt network may develop the ability to anticipate undesirable states based on pre-cursor events/states occurring ahead of that state within a defined time range, i.e., a forecast window. Ideally, the forecast window is of sufficient duration to enable mitigating actions, automated or otherwise, to prevent the occurrence of the undesirable state without having to block any transactions or otherwise interrupt operations of the system as described elsewhere herein, while ensuring a sufficient probability of the identified pre-cursor state leading to the undesirable state.

In one embodiment, multiple machine learnt models/networks, which may be the same, different or a combination thereof, may be deployed. For example, multiple of the same model may be deployed and operated in parallel for redundancy or fault tolerance and/or to enable training or updating the model without having to take it offline or disrupt production, i.e., one of the duplicate models can be taken offline for updating/training or other maintenance while the other copy remains operational after which, for example, the updated model may be put in production while the other undergoes similar maintenance. In the case of one model failing, a new instance may be started without disrupting production. Multiple different models may be deployed in parallel to evaluate the effectiveness of different model types and/or different trading algorithms or to enable "ensemble learning", or stacking, where multiple models, i.e., an ensemble, e.g., different models, differently trained models, etc., are deployed to improve predictive performance and reduce bias, i.e., the influence of individual model bias on the result. In systems which employ redundancy and/or ensembles, mechanisms may be deployed to arbitrate, obtain, combine or derive a result from the outputs of those models, such as via implementation of a mechanism for averaging outputs, voting, majority/quorum rules, etc. Ensembles may be used where overfitting may be necessary for training data that does not generalize well, failing to account for new data which differs from the training distribution, or where there is a lack of mechanics to tune model performance over time as use cases evolve. Additional machine learnt models that may be used for time series forecasting include: Generative AI, such as a time series transformer using deep neural networks; A Long short-term memory (LSTM) - recurrent neural network; A Support Vector Machines (SVMs) - supervised machine learning; or an autoregressive moving average (ARIMA) model.

In one embodiment, the training data and/or data to be evaluated by the ML models may be pre-processed to, for example, smooth the data, normalize the data, remove outliers and irrelevant data, etc. For example, such pre-processing may include using a time series algorithm, averaging, weighted averaging, or other complex stacking strategy. Training data or data to be evaluated may also be pre-processed using another machine learnt network, or encoded model thereof, to, for example, categorize the data and remove outliers, etc.

In one implementation for evaluating electronic data transaction request messages communicated to an electronic trading system as will be described in more detail below, a historical data set may be obtained comprising a time ordered series of state instances, each resulting from a change in the state of the system, over a period of time, e.g., 1 day, 1 week, 1 month, etc. As will be described, the state of an electronic trading system at any moment, referred to as a state instance, may be represented by the aggregate, as stored in an order book database or data structure, of the then currently pending received but not yet satisfied, or canceled, orders to trade quantities of a product, i.e., to buy or sell, at various prices. As will be understood, this state of the electronic trading system changes as subsequent trade messages, e.g., comprising new orders to trade or requests to modify or cancel prior orders, are received and processed, e.g., matched with a prior received counter order, stored in the order book database, etc. Each state instance may be augmented with other data occurring contemporaneous therewith, as was described above, including other data maintained or generated by the electronic trading system, including credit balance data, margin data, etc., other event data indicative of other events, e.g., financial event, weather events, political events, etc., other trading system data such as from equities or other markets, etc.

Subsets of one or more instances of the set of historical state instances may be converted to multi-dimensional vector representations thereof and provided to a suitably configured LSTM autoencoder to train the autoencoder to recognize unique feature patterns between those state instances, i.e., the unique changes in state that have occurred as a function of the transactional and other activities.

Thereby, the disclosed embodiments use historical market data and "market condition" data to train the machine learnt network to predict the states of the electronic trading system to anticipate the occurrence of undesirable states. For example, the machine learnt network may predict the expected price movement based on the execution of an order of size X at price Y. The parameters of the historical market data and market condition data may include the "shape" of data in a data structure that stores data relating to an order book for the market. The historical market data may be pre-processed to identify the following shape characteristics: inside market width; volume at top of book; liquidity in the product group; time window of observation; last traded quantity; short term volatility; and cross product correlations- e.g. movements in parallel markets/products that influence price. Other shape characteristics may also be identified.

The historical data set or database may be configured to store transaction data, market data, external data, or other characteristics that relate to the market or transaction that occur there within. The transaction data may include records of each transaction for a market over a period of time. The transaction data may be preprocessed to provide a normalized set of data for the machine learnt network to be trained with. The data set may store calculated market characteristics for the market over time including inside market width; volume at top of book; liquidity in the product group; time window of observation; last traded quantity; short term volatility; and cross product correlations.

It will be appreciated that, as described, an electronic trading system may experience millions of state changes per day as a result of the processing incoming trade transactions. These transactions are generated, either manually or via automated algorithmic based systems, by traders as they attempt to capitalize on market opportunities to, for example, earn profits or hedge financial risks, etc. There may be thousands of traders operating thousands of automated trading strategies and generally speaking, the trade orders submitted thereby will attempt to determine fair trading value and further determine how that value may change. In analyzing the changes, i.e., the resultant states, in the state of the order book as a result of these trade orders, one may attempt to reverse engineer the strategies employed by the traders which resulted in these changes. Further, it may be seen that in most cases, traders behave similarly, i.e., they are subject to, and therefore are expected to follow, the same or similar rules as may be specified by the system, an operating agreement, regulatory authority, etc., and they separately tend to arrive at the same, or similar, fair market value when submitting orders and generally tend to anticipate the same or similar changes thereto. This expected uniformity in market operation may then enable the identification of undesirable system states resulting from traders or trading strategies which deviate from the generally observed behavior, e.g., arrive at a price value which diverges from the general consensus fair value. Such deviations may be intentional, e.g., evidence of some information advantage and/or rule violation of the trader, or unintentional, such as due to a typographic or programming error leading to a mistaken order submission. Regardless of the basis of such a deviation, this behavior, once promulgated to the rest of the market participants, may trigger responses therefrom which may have undesirable results/outcomes, i.e., result in an undesirable system state, such as an increase volatility, reduction of liquidity, spike in price, etc. Other undesirable states may be those states resulting from an intentional or unintentional violation of system, agreed-upon, and/or regulatory rules/regulations, such as a wash trade (the simultaneous buying and selling of the same financial instruments to create the impression of market activity without changing the entity's market position with the goal of, for example, influencing the asset's value or trading volume), spoofing (the placement of a bid or offer with no intention of fulfilling it, instead cancelling the bid or offer before execution), etc. However, correlating some trader behavior, i.e., the state instance or changes thereto, caused thereby, with a later outcome, i.e., a later occurring state change, is difficult. The disclosed embodiments, as described herein, enable ready assessment of incoming transactions as they relate back to a historical undesirable state, or changes therein, having a probable/predictable relation therewith. That is, the disclosed embodiments enable identification of a probable later outcome, i.e., future system state, based on the evaluation of incoming data transaction requests alone or in combination with other contemporaneously received data transaction requests and/or contemporaneously occurring events.

It will be appreciated that the disclosed embodiments may be used with different types of electronic trading systems which enable trading of equity or derivative instruments, such as those described below. Electronic transaction processing systems may be used to implement different types of electronic trading systems which facilitate electronic trading of financial instruments. Financial instruments, e.g., stocks, futures contracts, options contracts, such as foreign exchange (FX) options, forwards, interest rate instruments, etc., may be traded via these different electronic trading systems. These systems may enable different modalities by which financial instruments may be electronically traded and may be characterized as either being bilateral or centrally cleared.

The disclosed embodiments may be implemented internal or external to an electronic trading to process data in real time or otherwise. In an internal implementation, the disclosed embodiments may be used with both publicly available or private/internal data of the trading system. A real time implementation may receive updated market or other data regarding the current state of the trading system in order to, for example, generate alerts or otherwise generate trade orders or other information based on a predicted occurrence of a particular outcome. Other implementations may facilitate analysis of historical events for the purpose of, for example, evaluating system operation, trading algorithm effectiveness, etc. In one implementation, the disclosed embodiments may facilitate technical analysis, i.e., the evaluation of price movements, or other statistics or mathematical indicators resulting from market activity, of a financial instrument for the purpose of predicting future movements.

Using the trained machine learnt network as described herein, the disclosed embodiments enable a real-time market protection mechanism able to evaluate each incoming transaction request to determine if that request, i.e., a probability of confidence value indicative thereof, will result, immediately or within a forecasted time frame, in an undesirable system state of an electronic trading system. The disclosed embodiments may supplant or augment existing rule-based market protection mechanisms to minimize the impact on the overall performance/latency of the electronic trading system. A real time implementation further enables proactive pre-transaction mitigating actions to prevent the occurrence of the undesirable state or minimize the consequences thereof.

As described, the anticipation of all possible incoming transaction request messages which, alone or in combination with other previously or contemporaneously received transaction requests or other events, may lead to an anomalous state of a complex stochastic multi-variate stateful transaction processing system may be impractical if not impossible. Even where particular transaction request messages, alone or in combination with other previously or contemporaneously received transaction requests or other events, may be anticipated, implementing mechanisms to proactively detect and react to those specific scenarios in real time may create a bottleneck which impacts the overall performance/latency of the transaction processing system while only providing a limited scope of protection.

Accordingly the resulting problem is a problem arising in computer systems due to the nature of complex stochastic multi-variate stateful transaction processing systems to comprise a multitude of states, of which only a portion may be anomalous, as the result of processing a high volume of arbitrarily received transaction request messages. The solutions disclosed herein are, in one embodiment, implemented as automatic responses and actions by a transaction processing system computer, such as that of an electronic trading system.

The disclosed system realizes an improvement in electronic transaction processing by, for example, avoiding the delay involved in waiting on a system administrator to react to an anomalous transaction request message by automatically precenting the processing of anomalous transaction requests based on anomalies identified by the machine learnt network in real time.

The implementation of an electronic transaction processing system using a machine learnt network as described above is a technical implementation to solve problems with preventing anomalous transaction requests from causing an anomalous system state. For example, the disclosed embodiments may enable a single evaluation system which, in real time, can proactively identify multiple different unanticipated anomalous transaction requests, each of which, alone or in combination with other previously or contemporaneously received transaction requests or other events, may lead, within a configurable subsequent period of time, to an anomalous system state, obviating the need to pre-identify anomalous system states and pre-define those anomalous transaction requests which, alone or in combination with other previously or contemporaneously received transaction requests or other events, may lead thereto.

The disclosed embodiments provide an improved electronic data transaction system that minimizes the occurrence of anomalous states, reducing the need to revert, restrict, pause or halt the operation thereof and therefore provide a specific and practical application which improves upon prior electronic data transaction systems and provides additional functionality not previously provided.

The disclosed embodiments solve problems which uniquely arise in the fields of computer technology and electronic data transaction processing systems. Thus, the disclosed embodiments are rooted in computer technology in order to overcome problems specifically arising in electronic data transaction systems.

As used herein, an order, order to trade or trade order, whether placed in a bilateral or centrally cleared market, refers to a willingness/desire of a trader to enter into a trade/transaction, and more particularly, to an electronic request or data message transmitted to, or received by, an electronic trading system which includes data indicative thereof, such as an identity of a product, desired quantity, desired price, side (buy/sell), etc. As used herein, the terms trade, executed trade, completed trade, etc., may refer to an agreement between two parties, each to fulfill an obligation defined by the transaction, and may further refer to a given order and the one or more suitable counter orders with which the given order has been matched and/or further cleared and/or settled. Orders may typically be canceled or modified by the submitting trader, via submission of a suitable electronic request or data message, prior to them being matched with a suitable counter order or otherwise accepted by a counter party. Once executed, the trader typically must fulfill their obligation unless they transfer, e.g., sell, or offset, such as by entering into an opposing trade, that obligation to another trader prior to the date on which fulfillment of their obligation is required.

In bilateral trading systems, often referred to as over the counter (OTC) or private markets, trades are bilateral, e.g., negotiated directly between the parties, and may involve standard or non-standard contract terms, depending upon the needs of the parties. As each party bears the risk that the other party will not perform their side of the agreement, part of the bilateral trading process typically involves establishing counter-party credit, or otherwise establishing credit relationships with potential counterparties for use in future transactions, to mitigate the risk of loss due to a counter party's failure to perform. With a credit relationship established, the parties exchange/negotiate the terms of the transaction until mutually agreed upon terms are, or are not, reached. Once the parties agree to the terms of a transaction, the transaction may be submitted to a centralized clearing and settlement system, such as the Continuous Linked Settlement (CLS) system or CME ClearPort system, which may handle the process of completing the transaction between the parties. If the parties do not agree, they may simply abandon/cancel their proposed transaction and walk away.

A forward contract, such as a currency forward contract, is an example of a contract which is traded via a bilateral trading system and calls for delivery of an asset at a later date for a price determined at the inception of the contract. For currencies, a currency forward contract is a bilateral contract for delivery, actual or cash settled depending on the contract terms, of an amount of a particular currency, e.g., euros, at a future date at a price, delineated in a different currency, e.g., dollars, determined at the inception of the contract. Unlike a futures contract, discussed below, a forward contract is traded "over the counter," bilateral, e.g., negotiated directly between the parties as discussed above, and may not be standardized as to its terms. Option contracts on a forward contract are also available offering the buyer thereof the right, but not the obligation, to sell or buy the underlying forward contract at a specified price on or before a certain expiration date. Forward contracts may be physically settled, e.g., via the delivery of the amount of the particular currency called for in the currency forward contract, or cash settled via delivery of the cash difference, denominated in currency of the contract price, between the contract price and the spot price of the currency to be delivered, which may be the differential in exchange rates between when the contract was entered into and the delivery date. Options contracts for the delivery of a specific currency may also be offered bilaterally and call for delivery of the requisite currency, as opposed to a forward contract, therefore. Options contracts traded via a bilateral/OTC trading system may be referred to as OTC options or OTC options contracts.

An FX spot, FX forward, as well as FX futures contracts, as described below with respect to central counterparty based electronic trading systems, may relate to transactions for currency pairs. A currency pair comprises the national currencies from two countries coupled for trading on the foreign exchange (FX) marketplace. Both currencies will have exchange rates on which the trade will have its position basis. The calculation for the rates between foreign currency pairs is a factor of the base currency. A typical currency pair listing may appear as, EUR/USD 1.3045. In this example, the euro (EUR) is the base currency, and the U.S. dollar (USD) is the quote currency. The difference between the two currencies is a ratio price. In the example, one euro will trade for 1.3045 U.S. dollars. In other words, the base currency is multiplied to yield an equivalent value or purchasing power of the foreign currency. The phrase "quote currency", which may also be referred to as the "term currency," means, with respect to any currency pair, the second currency of such currency pair and is the currency that is being bought or sold to another party. The phrase "base currency" refers to the first currency in the Currency Pair against which the Client buys or sells the Quote Currency. The base currency typically refers to one, meaning one single currency against a number of quote currencies. This comparison answers the question of how many quote currencies equals in value one base currency. When one is long-biased, one always buys the base currency and sells the quote currency. When one is short-biased, the opposite occurs.

In bilateral trading, each party, or intermediary agent, e.g., a prime broker or other access agent, via which that party trades, is, generally, directly responsible for the risk of loss in any given trade if their counterparty, or intermediary agent, e.g., a prime broker or other access agent, via which that counterparty trades, fails to perform. For example, in a cash/OTC market, prime brokers may create a central-counter party-like consolidation of counterparty risk to form a multi-tier structure where large participants, such as other prime brokers or very large banks, have bilateral risk. Bilateral electronic trading systems, such as the CME (Chicago Mercantile Exchange Inc.) Electronic Broking Services (EBS) Market system described herein, may support a three-tier structure where large, credit worthy entities, i.e., prime brokers, interact bilaterally and large to medium size trading entities access the market through those entities. Prime customers can also establish themselves as access agents, referred to as prime-of-prime brokers, servicing small and non-financial entities referred to as prime-of-prime customers. This model could be extended to any number of levels, but in practice three levels (bilateral, prime, and prime-of-prime) meet most business needs. As such, bilateral trading parties typically require credit verification or other guarantees, or risk mitigations, such as collateral, from their counterparties and often set limits on the amount of risk/exposure they are willing to undertake with a given counterparty. Such limits, which may be referred to as "hard limits," preempt transactions to prevent a limit overrun and may be applied whether or not an order to trade is accepted and/or whether or not it is executed, and/or to filter or mediate the distribution of data related thereto. In contrast, a soft limit may be applied after trade execution and therefore, more loosely enforced. Accordingly, bilateral electronic trading systems typically provide risk mitigations systems in the form of credit limit mechanisms, referred to as credit controls, which allow parties, for example, to define credit limits with respect to their potential counterparties which restrict the extent/magnitude of risk exposure and have the electronic trading system monitor, manage and enforce those limits on their behalf, as well as assist the parties in understanding and managing any credit limits to which they are subject. As any given party may enter into transactions with a myriad of counterparties, the number of different credit limits which a bilateral electronic trading system may have to maintain, manage, and enforce may be substantial, as may be the volume of transactions against which such limits must be assessed and accounted for.

The EBS Direct Platform, offered by CME Group, Inc., is an example of a bilateral trading system which implements bilateral credit limits and features disclosed price requests and responses. The EBS Direct Platform may be referred to as a Quote Drive Market (QDM), also referred to as a price driven market, which limits trading to binding quotes, subject to a "last look" confirmation, provided by designated participants, e.g., market makers or dealers, etc., also referred to as a liquidity provider ("LP"). In a QDM, orders placed in the QDM's electronic quote matching systems against a submitted quote are, subject to a "last look" confirmation, essentially guaranteed to be fulfilled but quotes available at different prices may be limited.

In contrast to bilateral trading systems, central counter party-based trading utilizes an intermediary entity/system to separate the transacting parties such that, within the system, they are prevented from transacting/negotiating directly with one another, or, in most cases, even knowing the identity of their counterparty. Typically, an electronic order message to buy or sell a certain product, e.g. a financial instrument, such as a quantity of a particular futures or options contract at a particular price, is generated, automatically or manually, responsive to an input, by a trader's computer system based on, for example, the occurrence of various events and/or other inputs, and electronically communicated to an electronic broker via an electronic communications network. The broker, in turn, electronically, and likely automatically, routes the order message to a proper electronic trading system, such as the exchange of the electronic futures and options trading system provided by Chicago Mercantile Exchange Inc., where the order message gets processed by a matching engine/processor to anonymously identify and/or await one or more suitable counter orders from another trader computer system, i.e., for at least a portion of the requested quantity at the specified price or better, so that a trade can occur. For incoming transactions which are not immediately fully satisfied, i.e., via one or more previously received but yet unsatisfied counter orders, the order for the remaining unsatisfied quantity is stored and anonymously advertised to the market participants in order solicit the submission of suitable counter orders therefrom. Generally, when such a "public" market is active/liquid, i.e., receiving a large number of trade orders to buy and sell a range of quantities over a range of prices, ample opportunities are available for traders to complete their transactions and satisfy their needs. In lesser active markets, with a lower transaction volume, a given trade order may have to wait for a non-insubstantial amount of time for a suitable counter order to be submitted. The central counterparty then publishes market data, described in more detail below, to communicate anonymized data indicative thereof.

For example, a central counterparty based electronic trading system, such as a futures exchange, such as the Chicago Mercantile Exchange Inc. (CME), provides an electronic trading system which implements a contract market where financial instruments, e.g., futures and options on futures, are traded using electronic systems. "Futures" is a term used to designate contracts for the purchase or sale of financial instruments or physical commodities for future delivery or cash settlement on a commodity futures exchange. A futures contract is a legally binding agreement to buy or sell a commodity or other underlier, such as a currency, at a specified price at a predetermined future time. The terms and conditions of each futures contract are standardized as to the specification of the contract's underlying reference, the quality of such underlier, quantity, delivery date, and means of contract settlement. Whereas physical settlement requires actual delivery of the underlying reference in exchange for the contracted payment, cash settlement is a method of settling a futures contract whereby the parties effect final settlement when the contract expires by paying/receiving the loss/gain related to the contract in cash, rather than by effecting physical sale and purchase of the underlying reference at a price determined by the futures contract price. An option contract is the right, but not the obligation, to sell or buy the underlying instrument (in this case, a futures contract) at a specified price, referred to as the strike price, on or before a certain expiration date. An option contract on a futures contract, e.g., having a futures contract as an underlier, offers an opportunity to take advantage of futures price moves without actually having a futures position and is considered "in the money" when the strike price is favorable to the market price of the underlier. The commodity, instrument, or asset to be delivered in fulfillment of the contract, or alternatively the commodity, instrument, or asset for which the cash market price shall determine the final settlement price of the futures contract, is known as the contract's underlying reference or "underlier." The underlying or underlier for an options contract on a futures contract is the corresponding futures contract that is purchased or sold upon the exercise of the option. Options contracts traded via a central counterparty-based trading system may be referred to as Exchange Traded Derivative (ETD) options or ETD options contracts.

Typically, as opposed to typical bilateral contracts, e.g., forward contracts, the terms and conditions of each futures contract are standardized as to the specification of the contract's underlying reference commodity, the composition of the commodity, quantity, delivery date, and means of contract settlement. Such standardization may improve the liquidity of these contracts, e.g., the ease with which such contracts may be bought or sold. Options on futures may be similarly standardized as to, for example, quantity, strike price and expiration/maturity. The underlying reference commodity may include a range of possible qualities, quantities, delivery dates, and other attributes. For a spot market transaction, the underlying quality and attributes may be set, while a futures contract may provide predetermined offsets to allow for possible settlement of a non-conforming delivery. As noted above, the contract may define the mode of settlement, i.e., either cash or physical settlement. Options and futures may be based on more generalized market indicators as their underlier, such as stock indices, interest rates, futures contracts, and other derivatives. At expiry, an option on futures, if in the money (ITM), provides a cash settled payment plus the underlying futures contract, and if out of the money (OTM), it provides nothing. An underlier of a futures contract may be a currency, e.g., the contract may be for delivery on a specified date of a quantity of euros in exchange for a defined payment in U.S. dollars.

A central counterparty-based exchange may provide for a centralized "clearing house" through which trades made must be confirmed, matched, and settled each day until offset or delivered. The clearing house may be an adjunct to an exchange, and may be an operating division of an exchange, which is responsible for settling trading accounts, clearing trades, collecting, and maintaining performance bond funds, regulating delivery, and reporting trading data. One of the roles of the clearing house is to mitigate counterparty credit risk on behalf of the transacting parties as well as the exchange. Clearing is the procedure through which the clearing house becomes buyer to each seller of a futures contract, and seller to each buyer, also referred to as a novation, and reduces risk of financial loss to each transacting party due to breach of contract by assuring performance on each contract. A clearing member is a firm qualified to clear trades through the clearing house.

An exchange/electronic trading computer system, which operates under a central counterparty model, acts, e.g., using the clearing mechanism described above, as an intermediary between market participants for the transaction of financial instruments and assumes the counterparty risk to each. In particular, the exchange computer system interposes itself into the transactions between the market participants, i.e., splits a given transaction between the parties into two separate transactions where the exchange computer system substitutes itself as the counterparty to each of the parties for that part of the transaction. This is referred to as a novation. In this way, the exchange computer system acts as a guarantor and central counterparty and there is no need for the market participants to disclose their identities to each other, or subject themselves to credit or other investigations by a potential counterparty. For example, the exchange computer system insulates one market participant from the default by another market participant. Market participants need only meet the requirements of the exchange computer system. Anonymity among the market participants further encourages a more liquid market environment as there are lower barriers to participation. The exchange computer system can accordingly offer benefits such as centralized and anonymous matching and clearing.

Accordingly, in central counterparty based systems, generally, there may be no need for one party to be concerned about the credit worthiness of another party and such credit verifications or counterparty credit limits may be avoided. However, the electronic trading system or central counterparty, itself, may impose credit verifications and limits and other risk mitigations. For example, a central counterparty based system may require traders to post a performance bond, or margin, in an amount set to cover the potential risk of loss of a trader's current positions. This performance bond may be adjusted on a periodic, e.g., daily, basis to account for the trading activities of the trader and the then current market value of their positions. In addition, where market participants transact in the trading system on behalf of other parties who may be financially responsible for the activities of those traders, the electronic trading system may permit the responsible party to specify limits on the number or magnitude of open orders or completed trades, such as a margin limit.

The CME futures exchange may be one example of what is referred to as an Order Driven Market (ODM) in which traders submit, with some limitations, arbitrary orders to buy or sell which are matched with previously received suitable counterorders, stored in an order book database, also referred to as a Central Limit Order Book (CLOB), or, otherwise, advertised to the market participants in order to attempt solicit a suitable counter order. Whereas an ODM may be more transparent than a QDM, providing visibility, e.g., via an order book database, to all individual market orders to trade, a QDM provides liquidity by guaranteeing quoted prices. That is, in an ODM, a trader may place an order to buy or sell at a desired price but there is no guarantee that another trader will place a suitable counter order thereto to be matched by the ODM's electronic matching engines and traded. Other types of markets, including hybrid ODM-QDM markets, may also exist.

The EBS Market is an example of an electronic trading system for cash FX which does not act as a central counterparty and is considered an ODM. The EBS Market electronic trading system relies on bilateral credit limits for matching and settlement and is considered an anonymous, firm central limit order book which may serve as a "public" reference market for cash FX transactions/instruments. In this system, in contrast to a futures exchange which maintains anonymity, the bilateral relationship between trading counterparties is only known after a trade is completed for settlement purposes.

More particularly, a QDM may, but not always, be considered a relationship-based model where there is limited anonymity - participants know their counterparty prior to transacting. Generally, in a QDM, participants play one or both of two discrete roles, liquidity providers (LP) and liquidity consumers (LC). These roles are fundamental but can be blurred by some platform features. In an ODM, the participants are more equal where in the general case any participant can be a provider or a consumer. In a QDM, a LP prices their market data based on a prior evaluation and classification of consumers. In an ODM, makers submit their orders that are priced without knowledge, at least prior to settlement, of the potential counterparty to a trade. ODM's may or may not act as a central counterparty. Another difference is that in a QDM, LP's submit market data and consumers submit orders against that market data (the QDM platform often will aggregate and filter the provided market data).

Another way to consider these types of platforms is to consider business usage. For very liquid instruments that have efficient pricing (tight spread with reactive/volatile pricing), a central limit order book (CLOB) or ODM platform may provide the safest venue for exchanging risk due to efficient price discovery and collective wisdom of the market to set the price. When an instrument's price is very stable (not volatile) and/or market liquidity is thin (manifesting a wide bid/offer spread in a CLOB for example), a QDM platform may be preferred because the foreknowledge of one's counterparty allows quoting a tighter spread with greater safety and the consumer being able to know their provider allows certainty of fairness. When an instrument is very illiquid and/or specialized to the point that a provider can't safely provide a continuous price to a collection of similar consumers, then the bespoke pricing method becomes helpful - these are referred to as request for quote (RFQ) or request for stream (RFS). Consumers ask for a price in an instrument and providers with knowledge of the consumer and current market conditions can elect to provide a price or stream of prices to the consumer.

Current financial instrument trading systems allow traders to submit orders and receive confirmations, market data, and other information electronically via an electronic communications network at one or more execution venues, e.g., which implement/provide ODM and/or QDM type markets. These execution venues may be geographically dispersed for the convenience of the traders or operator thereof and/or so as to be located geographically, i.e., in particular geographic regions, and/or logically, close to traders in order to, for example, minimize latency there between. An execution venue may refer to a physical and/or logical location at which electronic data messages comprising orders to trade are considered to have been received by an electronic trading system and accorded priority against other such electronic data messages subsequently received thereby which are competing for the same trading opportunity, i.e., where the trading system applies determinism to the received order, or where the orders to trade or received electronic data messages are actually matched with a suitable counterparty forming a binding transaction.

An execution venue may further refer to a geographic and/or logical location from which market data messages, sometimes referred to as market data feed, indicative of market activities/events are transmitted, i.e., released on to a network for transmission and no longer under the control of the electronic trading system, to at least a subset of market participants.

An execution venue may comprise the electronic networking and transaction processing components necessary to couple the electronic trading system with a network external thereto, e.g., the Internet, process received electronic transactions and transmit market data messages, or may comprise only the electronic networking components necessary to couple the electronic trading system with the network, ascribe priority to received data messages and relay, such as via a public and/or private electronic communications network, those received prioritized transactions to transaction processing components located remotely therefrom. An execution venue may further be a geographic and/or logical location where a limit on credit/risk is enforced and/or consumed.

For additional details and descriptions of execution venues, e.g., which implement/provide ODM and/or QDM type markets, and credit limits, see U.S. Application No. 17/733,565, filed on April 29, 2022, entitled "LOW LATENCY REGULATION OF DISTRIBUTED TRANSACTION PROCESSING IN ACCORDANCE WITH CENTRALIZED DEMAND-BASED DYNAMICALLY REALLOCATED LIMITS", published as U.S. Patent Application Publication No. 2023/0351500 A1, assigned to the assignee of the present application, the entirety of which is incorporated by reference herein and relied upon.

Aside from the above differences, bilateral and central counterparty based trading systems differ in terms of who bears responsibility for counterparty risk, i.e., the risk of financial loss to one party to a trade due to the actions, inactions, or consequences thereof, such as the failure to perform on their obligations specified in the transaction, of the counterparty thereto.

Further, bilateral and central counterparty based trading systems may differ in terms of technical architecture. In a central counter-party electronic trading system, from a logical and/or physical standpoint, only one single matching engine/server, for the entire exchange or for each tradeable product or subset of related tradeable products, processor and/or processing thread may be implemented reflecting the centralized nature of the system to interact with market participant computer systems. It will be appreciated that a central counter-party electronic trading system may, in fact, be implemented by a multitude of servers, processors, and/or processing threads. In contrast, in a QDM system (bilateral system), market participant computer systems negotiate directly with one another via a communications "session", by sending their requests or responses to exchange servers/processes/threads which then relay them to the correct market participant computer system recipient(s). As there may be multiple independent/concurrent sessions, architecturally (logically and/or physically), the bilateral electronic trading system may be comprised of multiple servers, processors and/or processing threads, e.g., exchange servers, and one or more central clearing/settlement systems (or the clearing and/or settlement system(s) may be external thereto), or multiple independent processes, each of which is facilitating the largely independent interactions between different requestors/responders, i.e., different private markets/sessions operating on the system. In a bilateral system/QDM system, the architecture is scaled horizontally, and many exchange servers and systems may be used. This QDM horizontal scaling exists both because a central venue where all quotes come together is not needed, but also because it is required to process the number of quotes/quote messages which are much higher than a CLOB because there are multiple versions used while the trade negotiation is taking place.

While a central counter party-based trading system may offer certain advantages, such as anonymity and risk management, bilateral trading may still often be utilized in situations where the parties prefer not to use a central counterparty, e.g. due to cost, efficiency or other concerns, where the parties wish to complete a transaction as quickly as possible, and/or for non-standard transactions or unique transactions where the transaction terms are not standardized and/or the number of potential suitable and/or interested counter parties may be limited. For example, currency exchange transactions, such as transactions in non-deliverable currencies, foreign exchange forward or swap agreements, are typically entered into as bilateral transactions.

Other electronic trading systems which may implement the disclosed embodiments include the BrokerTec Fixed Income/Cash Bond/Repo trading electronic trading platform provided by CME Group Inc.

As was described above, the disclosed embodiments facilitate analysis of the changes in state of an electronic trading system so as to, e.g., facilitate identification and analysis of layer occurring probably/predictably related outcomes, i.e., later changes in state.

Generally, the state of an electronic trading system, whether it be an ODM or QDM type system, central counterparty based or not, etc., can be assessed from one or both of two perspectives, from outside the electronic trading system based on publicly available data or from inside the electronic trading system based on internal/private data and/or publicly available data. It will be appreciated that the disclosed embodiments may be deployed as a tool for use by, for example, traders using only publicly available data, and/or a tool for use by the operators of the exchange (or to be made available in whole or part to traders) using internal/private data and/or publicly available data.

The internal/private state of an electronic trading system, whether it be an ODM or QDM type system, central counterparty based or not, etc., may be a function of the current values of the various internal system variables, settings, databases, etc. or subsets thereof. It will be appreciated that the manner/method by which this data is collected for provisioning to the disclosed embodiments may implementation dependent and may involve monitoring and recording transaction/network traffic, activity logs, etc.

As was described above, for a central counterparty based electronic trading system, the state of the system may be represented by the order book database which stores an aggregate of the currently pending received but not yet satisfied or canceled orders to trade and wherein the state, as represented by this database, is changed, i.e., a new state instance is created, every time an order is received which modifies the order book database. In an anonymized system, the publicly available order book data may only include the aggregate of the pending orders, i.e., the total of the order quantities at each price level, wherein the any information regarding the individual orders is not provided. It will be appreciated that in an internal or exchange deployment of the disclosed embodiments, access to the individual order data would be available. Order book databases may be maintained for each tradeable product, or for subsets of tradeable products, traded on the exchange. State instances of the order book database may be captured by taking a snapshot, i.e., copy, of the order book database after every change made thereto. Alternatively, the market data feed, which as will be described, comprises data messages indicating changes to the order book database, can be recorded, thereby representing a time ordered list of changes made to the order book database. It will be appreciated that the disclosed embodiments operate on time ordered sets of state instances or state changes, regardless of how that data is captured.

For other types of trading systems, such as bilateral or QDM based systems, similar publicly facing trade databases or reporting data message feeds may be provided which represent the current state of that system and which may be used by the disclosed embodiments.

The disclosed embodiments are drawn to systems and methods that include specific computing components, each being specially programmed to perform a technological function as part of a greater technological process. The disclosed embodiments include separate system components interconnected in a specific way to implement aspects of the disclosed system and include sufficient specific structure and function and, as such, are not drawn to an abstract idea. The use of software in the disclosed embodiments further makes non-abstract improvements to the computer technology just as hardware improvements can, and the improvements may be accomplished through either route.

The disclosed embodiments are not directed to any method for "obtaining, transforming and determining," which is involved in all computing functionality. The disclosed embodiments and features recited in this regard provide numerous advantages. The instant embodiments do not preempt all methods of "obtaining, transforming, and determining," and are specifically directed towards the disclosed functionality. The disclosed embodiments implement specific rules and features that improve the operation of a particular genus of a technological process, which does not preempt all techniques of obtaining, transforming and determining, which, at some level, is part of every computing process.

While the disclosed embodiments may be discussed in relation to futures and/or options on futures trading, it should be appreciated that the disclosed embodiments may be applicable to any equity, fixed income security, currency, commodity, options, futures, or digital math based asset, e.g., crypto currency, trading system or market now available or later developed. It should be appreciated that a trading environment, such as a futures exchange as described herein, implements one or more economic markets where rights and obligations may be traded. As such, a trading environment may be characterized by a need to maintain market integrity, transparency, predictability, fair/equitable access and participant expectations with respect thereto. For example, an exchange must respond to inputs, such as trader orders, cancelations, etc., in a manner as expected by the market participants, such as based on market data, e.g., prices, available counter-orders, etc., to provide an expected level of certainty that transactions will occur in a consistent and predictable manner and without unknown or unascertainable risks. In addition, it should be appreciated that electronic trading systems further impose additional expectations and demands by market participants as to transaction processing speed, latency, capacity and response time, while creating additional complexities relating thereto. Accordingly, as will be described, the disclosed embodiments may further include functionality to ensure that the expectations of market participant are met, e.g., that transactional integrity and predictable system responses are maintained.

### EXCHANGE COMPUTING SYSTEM

For example, one exemplary environment where the disclosed embodiments may be desirable is in financial markets, and in particular, electronic trading systems which implement electronic financial exchanges, such as a futures exchange, such as the Chicago Mercantile Exchange Inc. (CME).

A financial instrument trading system, such as a futures exchange provided by CME, provides a contract market where financial instruments, e.g., futures and options on futures, are traded using electronic systems. "Futures" is a term used to designate all contracts for the purchase or sale of financial instruments or physical commodities for future delivery or cash settlement on a commodity futures exchange. A futures contract is a legally binding agreement to buy or sell a commodity at a specified price at a predetermined future time. An option contract is the right, but not the obligation, to sell or buy the underlying instrument (in this case, a futures contract) at a specified price on or before a certain expiration date. An option contract offers an opportunity to take advantage of futures price moves without actually having a futures position. The commodity to be delivered in fulfillment of the contract, or alternatively the commodity for which the cash market price shall determine the final settlement price of the futures contract, is known as the contract's underlying reference or "underlier." The underlying or underlier for an options contract is the corresponding futures contract that is purchased or sold upon the exercise of the option.

The terms and conditions of each futures contract are standardized as to the specification of the contract's underlying reference commodity, the quality of such commodity, quantity, delivery date, and means of contract settlement. Cash settlement is a method of settling a futures contract whereby the parties effect final settlement when the contract expires by paying/receiving the loss/gain related to the contract in cash, rather than by effecting physical sale and purchase of the underlying reference commodity at a price determined by the futures contract, price. Options and futures may be based on more generalized market indicators, such as stock indices, interest rates, futures contracts and other derivatives.

### ELECTRONIC TRADING

Electronic trading, such as in a central counterparty based ODM, of financial instruments, such as futures contracts, is conducted by market participants sending orders, such as to buy or sell one or more futures contracts, in electronic form, i.e., electronic data messages, to the exchange. These electronically submitted orders to buy and sell are then matched, if possible, by the exchange, i.e., by the exchange's matching engine, to execute a trade. Outstanding (unmatched, wholly unsatisfied/unfilled or partially satisfied/filled) orders are maintained in one or more data structures or databases referred to as "order books," such orders being referred to as "resting," and made visible, i.e., their availability for trading is advertised, to the market participants through electronic notifications/broadcasts, referred to as market data feeds, in order to solicit the submission of suitable counter transactions. An order book, i.e., an order book database or data structure, is typically maintained for each product, e.g., instrument, or set of related products traded on the electronic trading system and generally defines or otherwise represents the state of the market for that product, i.e., the current prices at which the market participants are willing buy or sell various quantities of that product. As such, as used herein, an order book for a product may also be referred to as a market for that product. At any given time, an order book, or the market represented thereby, may be characterized by a state, i.e., the data records stored therein at that time which are indicative of the currently pending orders to buy or sell the particular products at particular quantities, and that state may change over time, i.e., as pending orders to buy/sell are at least partially satisfied by incoming counter orders resulting in updating, e.g., to reflect remaining available quantity, etc., or removing existing data records, as order modifications or cancelations are received and/or as new orders are received and data records indicative thereof are created.

Upon receipt of an incoming order to trade in a particular financial instrument, whether for a single-component financial instrument, e.g., a single futures contract, or for a multiple-component financial instrument, e.g., a combination contract such as a spread contract, a match engine, as described herein, will attempt to identify a previously received but unsatisfied order counter thereto, i.e., for the opposite transaction (buy or sell) in the same financial instrument at the same or better price (but not necessarily for the same quantity unless, for example, either order specifies a condition that it must be entirely filled or not at all).

Previously received but unsatisfied orders, i.e., orders which either did not match with a counter order when they were received or their quantity was only partially satisfied, referred to as a partial fill, are maintained by the electronic trading system in an order book database/data structure to await the subsequent arrival of matching orders or the occurrence of other conditions which may cause the order to be modified or otherwise removed from the order book.

If the match engine identifies one or more suitable previously received but unsatisfied counter orders, they, and the incoming order, are matched to execute a trade there between to at least partially satisfy the quantities of one or both the incoming order or the identified orders. If there remains any residual unsatisfied quantity of the identified one or more resting orders, those orders which were not fully satisfied are left on the order book with their remaining quantity to await a subsequent suitable counter order, i.e., to rest. If the match engine does not identify a suitable previously received but unsatisfied counter order, or the one or more identified suitable previously received but unsatisfied counter orders are for a lesser quantity than the incoming order, the incoming order is placed on the order book, referred to as "resting", with original or remaining unsatisfied quantity, to await a subsequently received suitable order counter thereto. The match engine then generates match event data reflecting the result of this matching process. Other components of the electronic trading system, as will be described, then generate the respective order acknowledgment and market data messages and transmit those messages to the market participants.

Matching, which is a function typically performed by the exchange, is a process, for a given order which specifies a desire to buy or sell a quantity of a particular instrument at a particular price, of seeking/identifying one or more wholly or partially, with respect to quantity, satisfying counter orders thereto, e.g., a sell counter to an order to buy, or vice versa, for the same instrument at the same, or sometimes better, price (but not necessarily the same quantity), which are then paired for execution to complete a trade between the respective market participants (via the exchange) and at least partially satisfy the desired quantity of one or both of the order and/or the counter order(s), with any residual unsatisfied quantity left to await another suitable counter order, referred to as "resting." A match event may occur, for example, when an aggressing order matches with a resting order. In one embodiment, two orders match because one order includes instructions for or specifies buying a quantity of a particular instrument at a particular price, and the other order includes instructions for or specifies selling a (different or same) quantity of the instrument at a same or better price. It should be appreciated that performing an instruction associated with a message may include attempting to perform the instruction. Whether or not an exchange computing system is able to successfully perform an instruction may depend on the state of the electronic marketplace.

A market data feed, also referred to as market data or a market feed, is a compressed or uncompressed real time (with respect to market events), or substantial approximation thereof, data/message stream, i.e., sequence of event generated messages, provided by the Exchange directly, or via a third party intermediary. A market data feed may be comprised of individual messages, each comprising one or more packets or datagrams, and may carry, for example, pricing or other information regarding orders placed, traded instruments and other market information, e.g., data indicative of a change in the state of the order book database, such as summary values and statistical values, or combinations thereof created in real time, e.g., at the time of the change in state or substantially proximate thereto, and may be transmitted, e.g. multi-casted, to the market participants using standardized protocols, such as UDP over Ethernet.

More than one market data feed, each, for example, carrying different information, may be provided as will be described. The standard protocol that is typically utilized for the transmission of market data feeds is the Financial Information Exchange (FIX) protocol Adapted for Streaming (FAST), aka FIX/FAST, which is used by multiple exchanges to distribute their market data. It will be appreciated that other protocols may be used. Pricing/quantity information conveyed by the market data feed may include the prices/quantities, or changes thereto, of resting orders, prices at which particular orders were recently traded and/or quantities thereof, or other information representative of the state of the order book database/market or changes therein at the time that the market data was generated. Separate, directed/private, messages may also be transmitted directly to market participants to confirm receipt of orders, cancellation of orders and otherwise provide acknowledgment or notification of matching and other events relevant, or otherwise privy, only to the particular market participant.

As may be perceived/experienced by the market participants from outside the Exchange or electronic trading system operated thereby, the following sequence describes how, at least in part, information may be propagated in such a system and how orders may be processed:
(1) An opportunity is created at a matching engine of the Exchange, such as by placing a recently received but unmatched/unsatisfied order, e.g. a data record indicative thereof, on the order book to rest;
(2) The matching engine creates an update reflecting the opportunity presented by the now available order, e.g., based on the change in the state of the order book database, and sends it to a feed engine;
(3) The feed engine, also referred to herein as a data publisher, generates an electronic data message comprising data indicative of the update and multicasts it to all of the market participants to advertise the opportunity to trade, i.e., the availability of the order;
(4) The market participants receive the data message and evaluate the opportunity and each, upon completion of their evaluation, may or may not choose to respond with an electronic trade order message comprising data indicative of a trade order responsive to the resting order, i.e. counter to the resting order;
(5) The Exchange gateway receives any counter orders generated by the market participants, sequences those orders based on their relative time of receipt to each other, sends confirmation of receipt back directly to each submitting market participant, and forwards the sequenced received orders to the matching engine; and
(6) The matching engine evaluates the sequenced received orders and matches, if using a first in first out priority, the first arriving order against the resting opportunity and a trade is executed. This causes another change in the state of the order book database reflecting the removal of the pending order (or reduction in available quantity) which may again, trigger this cycle.

As used herein, a financial message or financial data message may refer both to messages communicated by market participants to an electronic trading system and vice versa. Financial messages communicated to the electronic trading system, also referred to as "inbound" messages, may include request messages, such as trader orders, order modifications, order cancellations and other transaction requests, as well as other message types. Inbound messages may be sent from client devices associated with market participants, or their representatives, e.g., trade order messages, etc., to an electronic trading or market system. For example, a market participant may submit an electronic message to the electronic trading system that includes an associated specific action to be undertaken by the electronic trading system, such as entering a new trade order into the market or modifying an existing order in the market. In one embodiment, if a participant wishes to modify a previously sent request, e.g., a prior order which has not yet been processed or traded, they may send a request message comprising a request to modify the prior request. In one exemplary embodiment, the incoming request itself, e.g., the inbound order entry, may be referred to as an iLink message. iLink is a bidirectional communications/message protocol/message format implemented by the Chicago Mercantile Exchange Inc.

Financial messages communicated from the electronic trading system, referred to as "outbound" messages, may include messages, transmitted, as described, to all participants or just a particular participant, responsive to inbound messages, such as confirmation and/ other response messages, or other messages such as market update messages, quote messages, and the like, e.g. market data messages. Outbound messages may be disseminated via data feeds.

Financial messages may further be categorized as having or reflecting an impact on a market, also referred to as an "order book" or "book," for a traded product, such as a prevailing price therefore, number of resting orders at various price levels and quantities thereof, etc., or not having or reflecting an impact on a market or a subset or portion thereof. In one embodiment, an electronic order book may be understood to be an electronic collection of the outstanding or resting orders for a financial instrument.

For example a request to place a trade may result in a response indicative of the trade either being matched with, or being rested on an order book to await, a suitable counter-order. This response may include a message directed solely to the trader who submitted the order to acknowledge receipt of the order and report whether it was matched, and the extent thereto, or rested. The response may further include a message to all market participants reporting a change in the order book due to the order. This response may take the form of a report of the specific change to the order book, e.g., an order for quantity X at price Y was added to the book (referred to, in one embodiment, as a Market By Order message), or may simply report the result, e.g., price level Y now has orders for a total quantity of Z (where Z is the sum of the previous resting quantity plus quantity X of the new order).

In some cases, requests may elicit a non-impacting response, such as temporally proximate to the receipt of the request and then cause a separate market-impact reflecting response at a later time. For example, a stop order, fill or kill order, aka an immediate or cancel order, or other conditional request may not have an immediate market impacting effect, if at all, until the requisite conditions are met. Accordingly, an acknowledgement or confirmation of receipt, e.g. a non-market impacting communication, may be sent to the trader simply confirming that the order was received. Upon the conditions being met and a market impacting result thereof occurring, a market-impacting message may be transmitted as described herein. It will be appreciated that additional conditions may be specified, such as a time or price limit, which may cause the order to be dropped or otherwise canceled and that such an event may result in another non-market-impacting communication instead. As will be described below, in some implementations market impacting communications may be communicated separately from non-market impacting communications, such as via a separate communications channel or feed.

It will be further appreciated that various types of market data feeds may be provided which reflect different markets or aspects thereof. Market participants may then, for example, subscribe to receive those feeds of interest to them. For example, a particular market data feed may only communicate information related to the top buy/sell prices for a particular product, referred to as "top of book" feed. In this case, a request message may be considered market-impacting only if it affects the top buy/sell prices and otherwise is considered non-market-impacting. As market impacting communications tend to be more important to market participants then non impacting communications, this separation may reduce congestion and or noise among those communications having or reflecting an impact on a market or portion thereof.

Market data feeds may further be characterized as providing a "view" or "overview" of a given market, an aggregation or a portion thereof. For example, a market data feed may convey the entire state of a market for a particular product, e.g. all presently resting buy/sell orders and prices associated therewith as well as trade notifications, etc., only a portion of a market, e.g. only the top 10 resting buy/sell orders, and/or an aggregation of multiple markets or portions thereof. As used herein, a market impacting request may be said to impact the "view" of the market as presented via the market data feed.

To conserve bandwidth, the market data feed may only convey changes to the order book database where it is incumbent upon the recipient to maintain their own copy of the order book database and apply the changes from the market data feed thereto in order to see, ascertain or otherwise have access to the complete current state of the order book database. In some implementations, the electronic trading system may periodically, e.g. daily or weekly, communicate the entire current state of the order book database so that recipients may update, synchronize or "true up" their own copy.

Various types of market data feeds may be provided by electronic trading systems, such as the CME, in order to provide different types or subsets of market information or to provide such information in different formats. Examples include Market By Order, Market Depth (aka Market by Price to a designated depth of the book), e.g. CME offers a 10-deep market by price feed, Top of Book (a single depth Market by Price feed), and combinations thereof. There may also be all manner of specialized feeds in terms of the content, i.e. providing, for example, derived data, such as a calculated index). It will be appreciated that number, type and manner of market data feeds provided by an electronic trading system are implementation dependent and may vary depending upon the types of products traded by the electronic trading system, customer/trader preferences, bandwidth and data processing limitations, etc. and that all such feeds, now available of later developed, are contemplated herein. For additional details and descriptions of different market data feeds, see U.S. Patent Application Serial No. 15/155,565, filed on May 16, 2016, entitled "Systems and Methods for Consolidating Multiple Feed Data", now U.S. Patent No. 11,411,907, assigned to the assignee of the present application, the entirety of which is incorporated by reference herein and relied upon.

While the disclosed embodiments will be described with respect to a product by product or market by market implementation, e.g. implemented for each market/order book, it will be appreciated that the disclosed embodiments may be implemented so as to apply across markets for multiple products traded on one or more electronic trading systems, such as by monitoring an aggregate, correlated or other derivation of the relevant indicative parameters as described herein.

It may be appreciated that a trading environment, such as a futures exchange as described herein, implements one or more economic markets where rights and obligations may be traded. As such, a trading environment may be characterized by a need to maintain market integrity, transparency, predictability, fair/equitable access and participant expectations with respect thereto. In addition, it may be appreciated that electronic trading systems further impose additional expectations and demands by market participants as to transaction processing speed, latency, capacity and response time, while creating additional complexities relating thereto. Accordingly, as will be described, the disclosed embodiments may further include functionality to ensure that the expectations of market participants are met, e.g., that transactional integrity and predictable system responses are maintained.

Financial instrument trading systems allow traders to submit orders and receive confirmations, market data, and other information electronically via electronic messages exchanged using a network. Electronic trading systems ideally attempt to offer a more efficient, fair and balanced market where market prices reflect a true consensus of the value of traded products among the market participants, where the intentional or unintentional influence of any one market participant is minimized if not eliminated, and where unfair or inequitable advantages with respect to information access are minimized if not eliminated.

Electronic marketplaces attempt to achieve these goals by using electronic messages to communicate actions and related data of the electronic marketplace between market participants, clearing firms, clearing houses, and other parties. The messages can be received using an electronic trading system, wherein an action or transaction associated with the messages may be executed. For example, the message may contain information relating to an order to buy or sell a product in a particular electronic marketplace, and the action associated with the message may indicate that the order is to be placed in the electronic marketplace such that other orders which were previously placed may potentially be matched to the order of the received message. Thus the electronic marketplace may conduct market activities through electronic systems.

An exchange may provide for a centralized "clearing house" through which trades made must be confirmed, matched, and settled each day until offset or delivered. The clearing house may be an adjunct to an exchange, and may be an operating division of an exchange, which is responsible for settling trading accounts, clearing trades, collecting and maintaining performance bond funds, regulating delivery, and reporting trading data. One of the roles of the clearing house is to mitigate credit risk. Clearing is the procedure through which the clearing house becomes buyer to each seller of a futures contract, and seller to each buyer, also referred to as a novation, and assumes responsibility for protecting buyers and sellers from financial loss due to breach of contract, by assuring performance on each contract. A clearing member is a firm qualified to clear trades through the clearing house.

An exchange computing system may operate under a central counterparty model, where the exchange acts as an intermediary between market participants for the transaction of financial instruments. In particular, the exchange computing system novates itself into the transactions between the market participants, i.e., splits a given transaction between the parties into two separate transactions where the exchange computing system substitutes itself as the counterparty to each of the parties for that part of the transaction, sometimes referred to as a novation. In this way, the exchange computing system acts as a guarantor and central counterparty and there is no need for the market participants to disclose their identities to each other, or subject themselves to credit or other investigations by a potential counterparty. For example, the exchange computing system insulates one market participant from the default by another market participant. Market participants need only meet the requirements of the exchange computing system. Anonymity among the market participants encourages a more liquid market environment as there are lower barriers to participation. The exchange computing system can accordingly offer benefits such as centralized and anonymous matching and clearing.

### CLEARING HOUSE

The clearing house of an exchange clears, settles and guarantees matched transactions in contracts occurring through the facilities of the exchange. In addition, the clearing house establishes and monitors financial requirements for clearing members and conveys certain clearing privileges in conjunction with the relevant exchange markets.

The clearing house establishes clearing level performance bonds (margins) for all products of the exchange and establishes minimum performance bond requirements for customers of such products. A performance bond, also referred to as a margin requirement, corresponds with the funds that must be deposited by a customer with his or her broker, by a broker with a clearing member or by a clearing member with the clearing house, for the purpose of insuring the broker or clearing house against loss on open futures or options contracts. This is not a part payment on a purchase. The performance bond helps to ensure the financial integrity of brokers, clearing members and the exchange as a whole. The performance bond refers to the minimum dollar deposit required by the clearing house from clearing members in accordance with their positions. Maintenance, or maintenance margin, refers to a sum, usually smaller than the initial performance bond, which must remain on deposit in the customer's account for any position at all times. The initial margin is the total amount of margin per contract required by the broker when a futures position is opened. A drop in funds below this level requires a deposit back to the initial margin levels, i.e., a performance bond call. If a customer's equity in any futures position drops to or under the maintenance level because of adverse price action, the broker must issue a performance bond/margin call to restore the customer's equity. A performance bond call, also referred to as a margin call, is a demand for additional funds to bring the customer's account back up to the initial performance bond level whenever adverse price movements cause the account to go below the maintenance.

The exchange derives its financial stability in large part by removing debt obligations among market participants as they occur. This is accomplished by determining a settlement price at the close of the market each day for each contract and marking all open positions to that price, referred to as "mark to market." Every contract is debited or credited based on that trading session's gains or losses. As prices move for or against a position, funds flow into and out of the trading account. In the case of the CME, each business day by 6:40 a.m. Chicago time, based on the mark-to-the-market of all open positions to the previous trading day's settlement price, the clearing house pays to or collects cash from each clearing member. This cash flow, known as settlement variation, is performed by CME's settlement banks based on instructions issued by the clearing house. All payments to and collections from clearing members are made in "same-day" funds. In addition to the 6:40 a.m. settlement, a daily intra-day mark-to-the market of all open positions, including trades executed during the overnight GLOBEX^{®}, the CME's electronic trading systems, trading session and the current day's trades matched before 11:15 a.m., is performed using current prices. The resulting cash payments are made intra-day for same day value. In times of extreme price volatility, the clearing house has the authority to perform additional intra-day mark-to-the-market calculations on open positions and to call for immediate payment of settlement variation. CME's mark-to-the-market settlement system differs from the settlement systems implemented by many other financial markets, including the interbank, Treasury securities, overthe-counter foreign exchange and debt, options, and equities markets, where participants regularly assume credit exposure to each other. In those markets, the failure of one participant can have a ripple effect on the solvency of the other participants. Conversely, CME's mark-to-the-market system does not allow losses to accumulate over time or allow a market participant the opportunity to defer losses associated with market positions.

While the disclosed embodiments may be described in reference to the CME, it should be appreciated that these embodiments are applicable to any electronic exchange, electronic market or electronic trading platform. Such other exchanges may include a clearing house that, like the CME clearing house, clears, settles and guarantees all matched transactions in contracts of the exchange occurring through its facilities. In addition, such clearing houses establish and monitor financial requirements for clearing members and convey certain clearing privileges in conjunction with the relevant exchange markets.

The disclosed embodiments are also not limited to uses by a clearing house or exchange for purposes of enforcing a performance bond or margin requirement. For example, a market participant may use the disclosed embodiments in a simulation or other analysis of a portfolio. In such cases, the settlement price may be useful as an indication of a value at risk and/or cash flow obligation rather than a performance bond. The disclosed embodiments may also be used by market participants or other entities to forecast or predict the effects of a prospective position on the margin requirement of the market participant.

### TRADING ENVIRONMENT

The embodiments may be described in terms of a distributed computing system. The particular examples identify a specific set of components useful in a futures and options exchange. However, many of the components and inventive features are readily adapted to other electronic trading environments. The specific examples described herein may teach specific protocols and/or interfaces, although it should be understood that the principals involved may be extended to, or applied in, other protocols and interfaces.

It should be appreciated that the plurality of entities utilizing or involved with the disclosed embodiments, e.g., the market participants, may be referred to by other nomenclature reflecting the role that the particular entity is performing with respect to the disclosed embodiments and that a given entity may perform more than one role depending upon the implementation and the nature of the particular transaction being undertaken, as well as the entity's contractual and/or legal relationship with another market participant and/or the exchange.

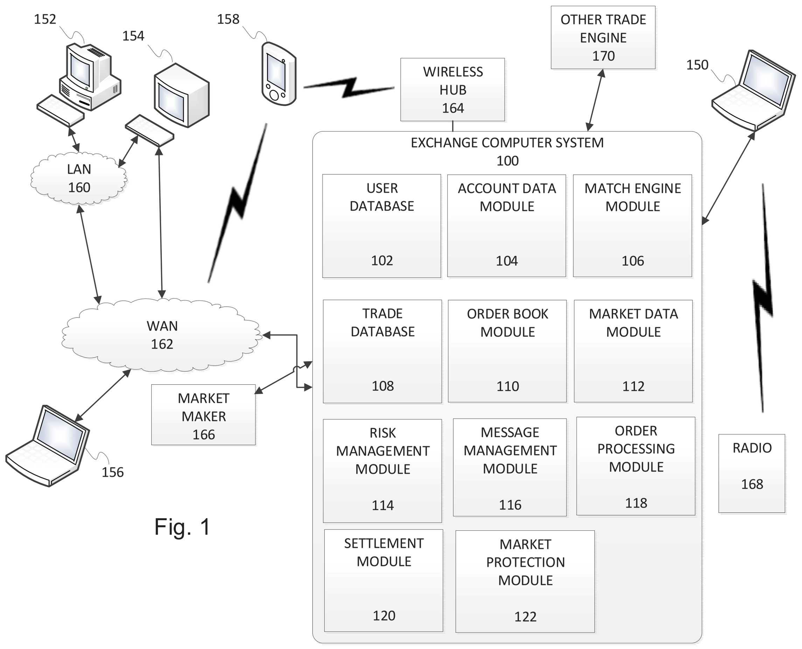

An exemplary trading network environment for implementing trading systems and methods is shown in Figure 1. An exchange computer system 100 receives messages that include orders and transmits market data related to orders and trades to users, such as via wide area network 162 and/or local area network 160 and computer devices 150, 152, 154, 156 and 158, as described herein, coupled with the exchange computer system 100.

Herein, the phrase "coupled with" is defined to mean directly connected to or indirectly connected through one or more intermediate components. Such intermediate components may include both hardware and software based components. Further, to clarify the use in the pending claims and to hereby provide notice to the public, the phrases "at least one of <A>, <B>, ... and <N>" or "at least one of <A>, <B>, ... <N>, or combinations thereof" are defined by the Applicant in the broadest sense, superseding any other implied definitions herebefore or hereinafter unless expressly asserted by the Applicant to the contrary, to mean one or more elements selected from the group comprising A, B, ... and N, that is to say, any combination of one or more of the elements A, B, ... or N including any one element alone or in combination with one or more of the other elements which may also include, in combination, additional elements not listed.

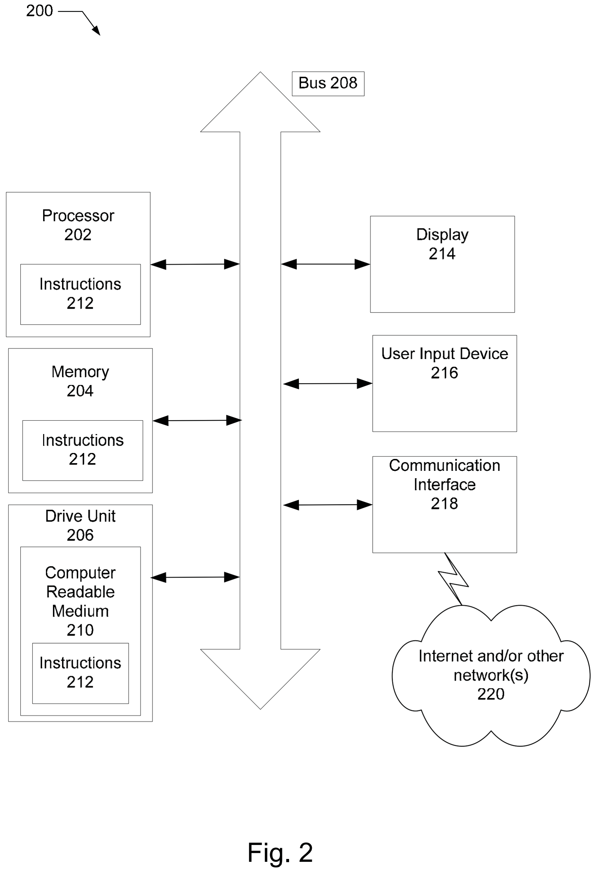

The exchange computer system 100 may be implemented with one or more mainframe, desktop or other computers, located on premises and/or remotely, e.g., cloud-based, such as the example computer 200 described herein with respect to Figure 2.

A user database 102 may be provided which includes information identifying traders and other users of exchange computer system 100, such as account numbers or identifiers, usernames and passwords. An account data module 104 may be provided which may process account information that may be used during trades.

A match engine module 106 (matching engine or matching processor) may be included to match bid and offer prices and may be implemented with software that executes one or more algorithms for matching bids and offers. The match engine module 106 may include or be coupled with an order book database or data structure which may be the order book module 110 described below. A trade database 108 may be included to store information identifying trades and descriptions of trades. In particular, a trade database may store information identifying the time that a trade took place and the contract price. An order book module 110 may be included which maintain one or more order book databases or data structures (not shown), each storing data indicative of previously received but not yet fully satisfied, canceled or modified orders to buy or sell quantities of one or more products, e.g., financial instruments, and to compute or otherwise determine current bid and offer prices therefore, e.g., in a continuous auction market, or also operate as an order accumulation buffer for a batch auction market.

A market data module 112 may be included to collect market data indicative of, for examples, changes to an order book data structure indicative of the result of a matching operation and prepare the data for transmission to users.

A risk management module 114 may be included to compute and determine a user's risk utilization in relation to the user's defined risk thresholds. The risk management module 114 may also be configured to determine risk assessments or exposure levels in connection with positions held by a market participant. The risk management module 114 may be configured to administer, manage or maintain one or more margining mechanisms implemented by the exchange computer system 100. Such administration, management or maintenance may include managing a number of database records reflective of margin accounts of the market participants. In some embodiments, the risk management module 114 implements one or more aspects of the disclosed embodiments, including, for instance, principal component analysis (PCA) based margining, in connection with interest rate swap (IRS) portfolios, as described herein.

A message management module 116, which may be referred to as a message gateway, may be included to, among other things, receive, and extract orders from, electronic data transaction request messages. The message management module 116 may define a point of ingress into the exchange computer system 100 where messages are ordered and considered to be received by the system. This may be considered a point of determinism in the exchange computer system 100 that defines the earliest point where the system can ascribe an order of receipt to arriving messages. The point of determinism may or may not be at or near the demarcation point between the exchange computer system 100 and a public/internet network infrastructure. The message management module 116 processes messages by interpreting the contents of a message based on the message transmit protocol, such as the transmission control protocol ("TCP"), to provide the content of the message for further processing by the exchange computer system.

The message management module 116 may also be configured to detect characteristics of an order for a transaction to be undertaken in an electronic marketplace. For example, the message management module 116 may identify and extract order content such as a price, product, volume, and associated market participant for an order. The message management module 116 may also identify and extract data indicating an action to be executed by the exchange computer system 100 with respect to the extracted order. For example, the message management module 116 may determine the transaction type of the transaction requested in a given message. A message may include an instruction to perform a type of transaction. The transaction type may be, in one embodiment, a limit or market order comprising a request/offer/order to either buy or sell a specified quantity or units of a financial instrument at a specified price or value. The message management module 116 may also identify and extract other order information and other actions associated with the extracted order. All extracted order characteristics, other information, and associated actions extracted from a message for an order may be collectively considered an order as described and referenced herein.

Order or message characteristics may include, for example, the state of the system after a message is received, arrival time (e.g., the time a message arrives at the MSG or Market Segment Gateway), message type (e.g., new, modify, cancel), and the number of matches generated by a message. Order or message characteristics may also include market participant side (e.g., buyer or seller) or time in force (e.g., a good until end of day order that is good for the full trading day, a good until canceled ordered that rests on the order book until matched, or a fill or kill order that is canceled if not filled immediately, or a fill and kill order (FOK) that is filled to the maximum amount possible, and any remaining or unfilled/unsatisfied quantity is not stored on the books or allowed to rest).

An order processing module 118 may be included to decompose delta-based, spread instrument, bulk and other types of composite orders for processing by the order book module 110 and/or the match engine module 106. The order processing module 118 may also be used to implement one or more procedures related to clearing an order. The order may be communicated from the message management module 118 to the order processing module 118. The order processing module 118 may be configured to interpret the communicated order, and manage the order characteristics, other information, and associated actions as they are processed through an order book module 110 and eventually transacted on an electronic market. For example, the order processing module 118 may store the order characteristics and other content and execute the associated actions. In an embodiment, the order processing module may execute an associated action of placing the order into an order book for an electronic trading system managed by the order book module 110. In an embodiment, placing an order into an order book and/or into an electronic trading system may be considered a primary action for an order. The order processing module 118 may be configured in various arrangements and may be configured as part of the order book module 110, part of the message management module 118, or as an independent functioning module.

As an intermediary to electronic trading transactions, the exchange bears a certain amount of risk in each transaction that takes place. To that end, the clearing house implements risk management mechanisms to protect the exchange. One or more of the modules of the exchange computer system 100 may be configured to determine settlement prices for constituent contracts, such as deferred month contracts, of spread instruments, such as for example, settlement module 120. A settlement module 120 (or settlement processor or other payment processor) may be included to provide one or more functions related to settling or otherwise administering transactions cleared by the exchange. Settlement module 120 of the exchange computer system 100 may implement one or more settlement price determination techniques. Settlement-related functions need not be limited to actions or events occurring at the end of a contract term. For instance, in some embodiments, settlement-related functions may include or involve daily or other mark to market settlements for margining purposes. In some cases, the settlement module 120 may be configured to communicate with the trade database 108 (or the memory(ies) on which the trade database 108 is stored) and/or to determine a payment amount based on a spot price, the price of the futures contract or other financial instrument, or other price data, at various times. The determination may be made at one or more points in time during the term of the financial instrument in connection with a margining mechanism. For example, the settlement module 120 may be used to determine a mark to market amount on a daily basis during the term of the financial instrument. Such determinations may also be made on a settlement date for the financial instrument for the purposes of final settlement.

In some embodiments, the settlement module 120 may be integrated to any desired extent with one or more of the other modules or processors of the exchange computer system 100. For example, the settlement module 120 and the risk management module 114 may be integrated to any desired extent. In some cases, one or more margining procedures or other aspects of the margining mechanism(s) may be implemented by the settlement module 120.

The exchange computer system 100 may further include a market protection module 122 which, alone or in combination with the match engine module 106, order book module 110, market data module 112, message management module 116 and/or order processing module 118 implements the disclosed embodiments in an exchange integrated implementation. While shown separately, the market protection module 122 may be implemented as part of the match engine module 106, order book module 110, market data module 112, message management module 116 and/or order processing module 118 or other module shown or combination thereof. The market protection module 122 may be coupled with the network 162 or other communications medium so as to be able to receive and transmit messages, as described herein, from/to the market participants, e.g., via their devices 150-158, such as via electronic trading software.

One or more of the above-described modules of the exchange computer system 100 may be used to gather or obtain data to support the settlement price determination, as well as a subsequent margin requirement determination. For example, the order book module 110 and/or the market data module 112 may be used to receive, access, or otherwise obtain market data, such as bid-offer values of orders currently on the order books. The trade database 108 may be used to receive, access, or otherwise obtain trade data indicative of the prices and volumes of trades that were recently executed in a number of markets. In some cases, transaction data (and/or bid/ask data) may be gathered or obtained from open outcry pits and/or other sources and incorporated into the trade and market data from the electronic trading system(s).

It should be appreciated that concurrent processing limits may be defined by or imposed separately or in combination on one or more of the trading system components, including the user database 102, the account data module 104, the match engine module 106, the trade database 108, the order book module 110, the market data module 112, the risk management module 114, the message management module 116, the order processing module 118, the settlement module 120, the market protection module 122 or other component of the exchange computer system 100.

The disclosed mechanisms may be implemented at any logical and/or physical point(s), or combinations thereof, at which the relevant information/data (e.g., message traffic and responses thereto) may be monitored or flows or is otherwise accessible or measurable, including one or more gateway devices, modems, the computers or terminals of one or more market participants, e.g., client computers, etc.

One skilled in the art will appreciate that one or more modules described herein may be implemented using, among other things, a tangible computer-readable medium comprising computer-executable instructions (e.g., executable software code). Alternatively, modules may be implemented as software code, firmware code, specifically configured hardware or processors, and/or a combination of the aforementioned. For example, the modules may be embodied as part of an exchange computer system 100 for financial instruments. It should be appreciated the disclosed embodiments may be implemented as a different or separate module of the exchange computer system 100, or a separate computer system coupled with the exchange computer system 100 so as to have access to the relevant data. As described herein, the disclosed embodiments may be implemented as a centrally accessible system, deployed on premises or in the cloud, or as a distributed system, e.g., where some of the disclosed functions are performed by the computer systems of the market participants.

The trading network environment shown in Figure 1 includes exemplary computer devices 150, 152, 154, 156 and 158 which depict different exemplary methods or media by which a computer device may be coupled with the exchange computer system 100 or by which a user may communicate, e.g., send and receive, trade or other information therewith. It should be appreciated that the types of computer devices deployed by traders and the methods and media by which they communicate with the exchange computer system 100 is implementation dependent and may vary and that not all of the depicted computer devices and/or means/media of communication may be used and that other computer devices and/or means/media of communications, now available or later developed may be used. Each computer device, which may comprise a computer 200 described in more detail with respect to Figure 2, may include a central processor, specifically configured or otherwise, that controls the overall operation of the computer and a system bus that connects the central processor to one or more conventional components, such as a network card or modem. Each computer device may also include a variety of interface units and drives for reading and writing data or files and communicating with other computer devices and with the exchange computer system 100. Depending on the type of computer device, a user can interact with the computer with a keyboard, pointing device, microphone, pen device or other input device now available or later developed.

An exemplary computer device 150 is shown directly connected to exchange computer system 100, such as via a T1 line, a common local area network (LAN) or other wired and/or wireless medium for connecting computer devices, such as the network 220 shown in Figure 2 and described with respect thereto. The exemplary computer device 150 is further shown connected to a radio 168. The user of radio 168, which may include a cellular telephone, smart phone, or other wireless proprietary and/or non-proprietary device, may be a trader or exchange employee. The radio user may transmit orders or other information to the exemplary computer device 150 or a user thereof. The user of the exemplary computer device 150, or the exemplary computer device 150 alone and/or autonomously, may then transmit the trade or other information to the exchange computer system 100.

Exemplary computer devices 152 and 154 are coupled with a local area network ("LAN") 160 which may be configured in one or more of the well-known LAN topologies, e.g., star, daisy chain, etc., and may use a variety of different protocols, such as Ethernet, TCP/IP, etc. The exemplary computer devices 152 and 154 may communicate with each other and with other computer and other devices which are coupled with the LAN 160. Computer and other devices may be coupled with the LAN 160 via twisted pair wires, coaxial cable, fiber optics or other wired or wireless media. As shown in Figure 1, an exemplary wireless personal digital assistant device ("PDA") 158, such as a mobile telephone, tablet based compute device, or other wireless device, may communicate with the LAN 160 and/or the Internet 162 via radio waves, such as via WiFi, Bluetooth and/or a cellular telephone based data communications protocol. PDA 158 may also communicate with exchange computer system 100 via a conventional wireless hub 164.

Figure 1 also shows the LAN 160 coupled with a wide area network ("WAN") 162 which may be comprised of one or more public or private wired or wireless networks. In one embodiment, the WAN 162 includes the Internet 162. The LAN 160 may include a router to connect LAN 160 to the Internet 162. Exemplary computer device 156 is shown coupled directly to the Internet 162, such as via a modem, DSL line, satellite dish or any other device for connecting a computer device to the Internet 162 via a service provider therefore as is known. LAN 160 and/or WAN 162 may be the same as the network 220 shown in Figure 2 and described with respect thereto.

Users of the exchange computer system 100 may include one or more market makers 166 which may maintain a market by providing constant bid and offer prices for a derivative or security to the exchange computer system 100, such as via one of the exemplary computer devices depicted. The exchange computer system 100 may also exchange information with other match or trade engines, such as trade engine 170. One skilled in the art will appreciate that numerous additional computers and systems may be coupled to exchange computer system 100. Such computers and systems may include clearing, regulatory and fee systems.

The operations of computer devices and systems shown in Figure 1 may be controlled by computer-executable instructions stored on a non-transitory computer-readable medium. For example, the exemplary computer device 152 may store computer-executable instructions for receiving order information from a user, transmitting that order information to exchange computer system 100 in electronic messages, extracting the order information from the electronic messages, executing actions relating to the messages, and/or calculating values from characteristics of the extracted order to facilitate matching orders and executing trades. In another example, the exemplary computer device 154 may include computer-executable instructions for receiving market data from exchange computer system 100 and displaying that information to a user.

Numerous additional servers, computers, handheld devices, personal digital assistants, telephones and other devices may also be connected to exchange computer system 100. Moreover, one skilled in the art will appreciate that the topology shown in Figure 1 is merely an example and that the components shown in Figure 1 may include other components not shown and be connected by numerous alternative topologies.

Referring now to Figure 2, an illustrative embodiment of a general computer system 200 is shown. The computer system 200 can include a set of instructions that can be executed to cause the computer system 200 to perform any one or more of the methods or computer based functions disclosed herein. The computer system 200 may operate as a standalone device or may be connected, e.g., using a network, to other computer systems or peripheral devices. Any of the components discussed herein, such as processor 202, may be a computer system 200 or a component in the computer system 200. The computer system 200 may be specifically configured to implement a match engine, margin processing, payment or clearing function on behalf of an exchange, such as the Chicago Mercantile Exchange, of which the disclosed embodiments are a component thereof. The computer system 200 may be implement a shared multi-tenant processing/operating system, such as may be used in a cloud deployment, of which one or more of the functions described herein are deployed in one or more of the shared processing environments.

In a networked deployment, the computer system 200 may operate in the capacity of a server or as a client user computer in a client-server user network environment, or as a peer computer system in a peer-to-peer (or distributed) network environment. The computer system 200 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular embodiment, the computer system 200 can be implemented using electronic devices that provide voice, video or data communication. Further, while a single computer system 200 is illustrated, the term "system" shall also be taken to include any collection of systems or sub-systems that individually or jointly execute a set, or multiple sets, of instructions to perform one or more computer functions.

As illustrated in Figure 2, the computer system 200 may include a processor 202, e.g., a central processing unit (CPU), a graphics processing unit (GPU), or both. The processor 202 may be a component in a variety of systems. For example, the processor 202 may be part of a standard personal computer or a workstation. The processor 202 may be one or more general processors, digital signal processors, specifically configured processors, application specific integrated circuits, field programmable gate arrays, servers, networks, digital circuits, analog circuits, combinations thereof, or other now known or later developed devices for analyzing and processing data. The processor 202 may implement a software program, such as code generated manually (i.e., programmed).

The computer system 200 may include a memory 204 that can communicate via a bus 208. The memory 204 may be a main memory, a static memory, or a dynamic memory. The memory 204 may include, but is not limited to, computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one embodiment, the memory 204 includes a cache or random access memory for the processor 202. In alternative embodiments, the memory 204 is separate from the processor 202, such as a cache memory of a processor, the system memory, or other memory. The memory 204 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 204 is operable to store instructions executable by the processor 202. The functions, acts or tasks illustrated in the figures or described herein may be performed by the programmed processor 202 executing the instructions 212 stored in the memory 204. The functions, acts or tasks are independent of the particular type of instructions set, storage media, processor or processing strategy and may be performed by software, hardware, integrated circuits, firmware, micro-code and the like, operating alone or in combination. Likewise, processing strategies may include multiprocessing, multitasking, parallel processing and the like.

As shown, the computer system 200 may further include a display unit 214, such as a liquid crystal display (LCD), an organic light emitting diode (OLED), a flat panel display, a solid state display, a cathode ray tube (CRT), a projector, a printer or other now known or later developed display device for outputting determined information. The display 214 may act as an interface for the user to see the functioning of the processor 202, or specifically as an interface with the software stored in the memory 204 or in the drive unit 206.

Additionally, the computer system 200 may include an input device 216 configured to allow a user to interact with any of the components of system 200. The input device 216 may be a number pad, a keyboard, or a cursor control device, such as a mouse, or a joystick, touch screen display, remote control or any other device operative to interact with the system 200.

In a particular embodiment, as depicted in Figure 2, the computer system 200 may also include a disk or optical drive unit 206 or other volatile or non-volatile data storage mechanism. The disk drive unit 206 may include a computer-readable medium 210 in which one or more sets of instructions 212, e.g., software, can be embedded. Further, the instructions 212 may embody one or more of the methods or logic as described herein. In a particular embodiment, the instructions 212 may reside completely, or at least partially, within the memory 204 and/or within the processor 202 during execution by the computer system 200. The memory 204 and the processor 202 also may include computer-readable media as discussed herein.

The present disclosure contemplates a computer-readable medium that includes instructions 212 or receives and executes instructions 212 responsive to a propagated signal, so that a device connected to a network 220 can communicate voice, video, audio, images or any other data over the network 220. Further, the instructions 212 may be transmitted or received over the network 220 via a communication interface 218. The communication interface 218 may be a part of the processor 202 or may be a separate component. The communication interface 218 may be created in software or may be a physical connection in hardware. The communication interface 218 is configured to connect with a network 220, external media, the display 214, or any other components in system 200, or combinations thereof. The connection with the network 220 may be a physical connection, such as a wired Ethernet connection or may be established wirelessly. Likewise, the additional connections with other components of the system 200 may be physical connections or may be established wirelessly.

The network 220 may include wired networks, wireless networks, or combinations thereof. The wireless network may be a cellular telephone network, an 802.11, 802.16, 802.20, or WiMax network. Further, the network 220 may be a public network, such as the Internet, a private network, such as an intranet, or combinations thereof, and may utilize a variety of networking protocols now available or later developed including, but not limited to, TCP/IP based networking protocols.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a computer readable medium for execution by, or to control the operation of, data processing apparatus. While the computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein. The computer readable medium can be a machine-readable storage device, a machine-readable storage substrate, a memory device, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

In a particular non-limiting, exemplary embodiment, the computer-readable medium can include a solid-state memory such as a memory card or other package that houses one or more non-volatile read-only memories. Further, the computer-readable medium can be a random access memory or other volatile rewritable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated or otherwise specifically configured hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an applicationspecific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site, distributed across multiple sites, and/or remotely located, e.g., cloud-based, and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and anyone or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

As used herein, the terms "microprocessor" or "general-purpose processor" ("GPP") may refer to a hardware device that fetches instructions and data from a memory or storage device and executes those instructions (for example, an Intel Xeon processor or an AMD Opteron processor) to then, for example, process the data in accordance therewith. The term "reconfigurable logic" may refer to any logic technology whose form and function can be significantly altered (i.e., reconfigured) in the field post-manufacture as opposed to a microprocessor, whose function can change post-manufacture, e.g. via computer executable software code, but whose form, e.g. the arrangement/layout and interconnection of logical structures, is fixed at manufacture. A GPP, with respect to certain embodiments, may also refer to specialized processors, such as those particularly suited to implementing applications of machine learning and/or artificial intelligence, such as vector processors or graphics processing units and the like. The term "software" may refer to data processing functionality that is deployed on a GPP. The term "firmware" may refer to data processing functionality that is deployed on reconfigurable logic. One example of a reconfigurable logic is a field programmable gate array ("FPGA") which is a reconfigurable integrated circuit. An FPGA may contain programmable logic components called "logic blocks", and a hierarchy of reconfigurable interconnects that allow the blocks to be "wired together", somewhat like many (changeable) logic gates that can be inter-wired in (many) different configurations. Logic blocks may be configured to perform complex combinatorial functions, or merely simple logic gates like AND, OR, NOT and XOR. An FPGA may further include memory elements, which may be simple flip-flops or more complete blocks of memory.

To provide for interaction with a user, embodiments, or applicable portions thereof, of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well. Feedback provided to the user can be any form of sensory feedback, e.g., visual feedback, auditory feedback, or tactile feedback. Input from the user can be received in any form, including acoustic, speech, or tactile input.

Embodiments of the subject matter described in this specification can be implemented in a computing system that includes a back end component, e.g., a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

It should be appreciated that the disclosed embodiments may be applicable to other types of messages depending upon the implementation. Further, the messages may comprise one or more data packets, datagrams or other collection of data formatted, arranged configured and/or packaged in a particular one or more protocols, e.g., the FIX protocol, TCP/IP, Ethernet, etc., suitable for transmission via a network 214 as was described, such as the message format and/or protocols described in U.S. Patent No. 7,831,491 and U.S. Patent Publication No. 2005/0096999 A1, both of which are incorporated by reference herein in their entireties and relied upon. Further, the disclosed message management system may be implemented using an open message standard implementation, such as FIX, FIX Binary, FIX/FAST, or by an exchange-provided API.

The embodiments described herein utilize trade related electronic messages such as mass quote messages, individual order messages, modification messages, cancellation messages, etc., so as to enact trading activity in an electronic market. The trading entity and/or market participant may have one or multiple trading terminals associated with the session. Furthermore, the financial instruments may be financial derivative products. Derivative products may include futures contracts, options on futures contracts, futures contracts that are functions of or related to other futures contracts, swaps, swaptions, or other financial instruments that have their price related to or derived from an underlying product, security, commodity, equity, index, or interest rate product. In one embodiment, the orders are for options contracts that belong to a common option class. Orders may also be for baskets, quadrants, other combinations of financial instruments, etc. The option contracts may have a plurality of strike prices and/or comprise put and call contracts. A mass quote message may be received at an exchange. As used herein, an exchange computing system 100 includes a place or system that receives and/or executes orders.

In an embodiment, a plurality of electronic messages is received from the network. The plurality of electronic messages may be received at a network interface for the electronic trading system. The plurality of electronic messages may be sent from market participants. The plurality of messages may include order characteristics and be associated with actions to be executed with respect to an order that may be extracted from the order characteristics. The action may involve any action as associated with transacting the order in an electronic trading system. The actions may involve placing the orders within a particular market and/or order book of a market in the electronic trading system.

In an embodiment, an incoming transaction may be received. The incoming transaction may be from, and therefore associated with, a market participant of an electronic market managed by an electronic trading system. The transaction may involve an order as extracted from a received message and may have an associated action. The actions may involve placing an order to buy or sell a financial product in the electronic market or modifying or deleting such an order. In an embodiment, the financial product may be based on an associated financial instrument which the electronic market is established to trade.

In an embodiment, the action associated with the transaction is determined. For example, it may be determined whether the incoming transaction comprises an order to buy or sell a quantity of the associated financial instrument or an order to modify or cancel an existing order in the electronic market. Orders to buy or sell and orders to modify or cancel may be acted upon differently by the electronic market. For example, data indicative of different characteristics of the types of orders may be stored.

In an embodiment, data relating to the received transaction is stored. The data may be stored in any device, or using any technique, operable to store and provide recovery of data. For example, a memory 204 or computer readable medium 210, may be used to store data, as is described with respect to Figure 2 in further detail herein. Data may be stored relating received transactions for a period of time, indefinitely, or for a rolling most recent time period such that the stored data is indicative of the market participant's recent activity in the electronic market.

Further, electronic trading systems may perform actions on orders placed from received messages based on various characteristics of the messages and/or market participants associated with the messages. These actions may include matching the orders either during a continuous auction process, or at the conclusion of a collection period during a batch auction process. The matching of orders may be by any technique.

As described herein, the matching of orders may occur based on a priority indicated by the characteristics of orders and market participants associated with the orders. Orders having a higher priority may be matched before orders of a lower priority. Such priority may be determined using various techniques. For example, orders that were indicated by messages received earlier may receive a higher priority to match than orders that were indicated by messages received later. Also, scoring or grading of the characteristics may provide for priority determination. Data indicative of order matches may be stored by a match engine and/or an order processing module 118, and used, for example, for determining message quality index (MQI) scores of market participants.

### EXAMPLE USERS

Generally, a market may involve market makers, such as market participants who consistently provide bids and/or offers at specific prices in a manner typically conducive to balancing risk, and market takers who may be willing to execute transactions at prevailing bids or offers may be characterized by more aggressive actions so as to maintain risk and/or exposure as a speculative investment strategy. From an alternate perspective, a market maker may be considered a market participant who places an order to sell at a price at which there is no previously or concurrently provided counter order. Similarly, a market taker may be considered a market participant who places an order to buy at a price at which there is a previously or concurrently provided counter order. A balanced and efficient market may involve both market makers and market takers, coexisting in a mutually beneficial basis. The mutual existence, when functioning properly, may facilitate liquidity in the market such that a market may exist with "tight" bid-ask spreads (e.g., small difference between bid and ask prices) and a "deep" volume from many currently provided orders such that large quantity orders may be executed without driving prices significantly higher or lower.

An exchange provides one or more markets for the purchase and sale of various types of products including financial instruments such as stocks, bonds, futures contracts, options, currency, cash, and other similar instruments. Agricultural products and commodities are also examples of products traded on such exchanges. A futures contract is a product that is a contract for the future delivery of another financial instrument such as a quantity of grains, metals, oils, bonds, currency, or cash. Generally, each exchange establishes a specification for each market provided thereby that defines at least the product traded in the market, minimum quantities that must be traded, and minimum changes in price (e.g., tick size). For some types of products (e.g., futures or options), the specification further defines a quantity of the underlying product represented by one unit (or lot) of the product, and delivery and expiration dates. As will be described, the exchange may further define the matching algorithm, or rules, by which incoming orders will be matched/allocated to resting orders.

### MATCHING AND TRANSACTION PROCESSING

As described elsewhere herein, market participants, e.g., traders, use software to send orders or messages to the trading platform. The order identifies the product, the quantity of the product the trader wishes to trade, a price (if a limit order and no price if a market order) at which the trader wishes to trade the product, and a direction of the order (i.e., whether the order is a bid, i.e., an offer to buy, or an ask, i.e., an offer to sell). It will be appreciated that there may be other order types or messages that traders can send including requests to modify or cancel a previously submitted order.

The exchange computer system monitors incoming orders received thereby and attempts to identify, i.e., match or allocate, as described herein, one or more previously received, but not yet matched, orders, i.e., limit orders to buy or sell a given quantity at a given price, referred to as "resting" orders, stored in an order book database, wherein each identified order is contra to the incoming order and has a favorable price relative to the incoming order. An incoming order may be an "aggressor" order, i.e., a market order to sell a given quantity at whatever may be the current resting bid order price(s) or a market order to buy a given quantity at whatever may be the current resting ask order price(s). An incoming order may be a "market making" order, i.e., a market order to buy or sell at a price for which there are currently no resting orders. In particular, if the incoming order is a bid, i.e., an offer to buy, then the identified order(s) will be an ask, i.e., an offer to sell, at a price that is identical to or higher than the bid price. Similarly, if the incoming order is an ask, i.e., an offer to sell, the identified order(s) will be a bid, i.e., an offer to buy, at a price that is identical to or lower than the offer price.

An exchange computing system may receive conditional orders or messages for a data object, where the order may include two prices or values: a reference value and a stop value. A conditional order may be configured so that when a product represented by the data object trades at the reference price, the stop order is activated at the stop value. For example, if the exchange computing system's order management module includes a stop order with a stop price of 5 and a limit price of 1 for a product, and a trade at 5 (i.e., the stop price of the stop order) occurs, then the exchange computing system attempts to trade at 1 (i.e., the limit price of the stop order). In other words, a stop order is a conditional order to trade (or execute) at the limit price that is triggered (or elected) when a trade at the stop price occurs.

Stop orders also rest on, or are maintained in, an order book to monitor for a trade at the stop price, which triggers an attempted trade at the limit price. In some embodiments, a triggered limit price for a stop order may be treated as an incoming order.

Upon identification (matching) of a contra order(s), a minimum of the quantities associated with the identified order and the incoming order is matched and that quantity of each of the identified and incoming orders become two halves of a matched trade that is sent to a clearing house. The exchange computer system considers each identified order in this manner until either all of the identified orders have been considered or all of the quantity associated with the incoming order has been matched, i.e., the order has been filled. If any quantity of the incoming order remains, an entry may be created in the order book database and information regarding the incoming order is recorded therein, i.e., a resting order is placed on the order book for the remaining quantity to await a subsequent incoming order counter thereto.

It should be appreciated that in electronic trading systems implemented via an exchange computing system, a trade price (or match value) may differ from (i.e., be better for the submitter, e.g., lower than a submitted buy price or higher than a submitted sell price) the limit price that is submitted, e.g., a price included in an incoming message, or a triggered limit price from a stop order.

As used herein, "better" than a reference value means lower than the reference value if the transaction is a purchase (or acquire) transaction, and higher than the reference value if the transaction is a sell transaction. Said another way, for purchase (or acquire) transactions, lower values are better, and for relinquish or sell transactions, higher values are better.

Traders access the markets on a trading platform using trading software that receives and displays at least a portion of the order book for a market, i.e., at least a portion of the currently resting orders, enables a trader to provide parameters for an order for the product traded in the market, and transmits the order to the exchange computer system. The trading software typically includes a graphical user interface to display at least a price and quantity of some of the entries in the order book associated with the market. The number of entries of the order book displayed is generally preconfigured by the trading software, limited by the exchange computer system, or customized by the user. Some graphical user interfaces display order books of multiple markets of one or more trading platforms. The trader may be an individual who trades on his/her behalf, a broker trading on behalf of another person or entity, a group, or an entity. Furthermore, the trader may be a system that automatically generates and submits orders.

If the exchange computer system identifies that an incoming market order may be filled by a combination of multiple resting orders, e.g., the resting order at the best price only partially fills the incoming order, the exchange computer system may allocate the remaining quantity of the incoming, i.e., that which was not filled by the resting order at the best price, among such identified orders in accordance with prioritization and allocation rules/algorithms, referred to as "allocation algorithms" or "matching algorithms," as, for example, may be defined in the specification of the particular financial product or defined by the exchange for multiple financial products. Similarly, if the exchange computer system identifies multiple orders contra to the incoming limit order and that have an identical price which is favorable to the price of the incoming order, i.e., the price is equal to or better, e.g., lower if the incoming order is a buy (or instruction to purchase, or instruction to acquire) or higher if the incoming order is a sell (or instruction to relinquish), than the price of the incoming order, the exchange computer system may allocate the quantity of the incoming order among such identified orders in accordance with the matching algorithms as, for example, may be defined in the specification of the particular financial product or defined by the exchange for multiple financial products.

An exchange responds to inputs, such as trader orders, cancellation, etc., in a manner as expected by the market participants, such as based on market data, e.g., prices, available counter-orders, etc., to provide an expected level of certainty that transactions will occur in a consistent and predictable manner and without unknown or unascertainable risks. Accordingly, the method by which incoming orders are matched with resting orders must be defined so that market participants have an expectation of what the result will be when they place an order or have resting orders and an incoming order is received, even if the expected result is, in fact, at least partially unpredictable due to some component of the process being random or arbitrary or due to market participants having imperfect or less than all information, e.g., unknown position of an order in an order book. Typically, the exchange defines the matching/allocation algorithm that will be used for a particular financial product, with or without input from the market participants. Once defined for a particular product, the matching/allocation algorithm is typically not altered, except in limited circumstance, such as to correct errors or improve operation, so as not to disrupt trader expectations. It will be appreciated that different products offered by a particular exchange may use different matching algorithms.

For example, a first-in/first-out (FIFO) matching algorithm, also referred to as a "Price Time" algorithm, considers each identified order sequentially in accordance with when the identified order was received. The quantity of the incoming order is matched to the quantity of the identified order at the best price received earliest, then quantities of the next earliest best price orders, and so on until the quantity of the incoming order is exhausted. Some product specifications define the use of a pro-rata matching algorithm, wherein a quantity of an incoming order is allocated to each of plurality of identified orders proportionally. Some exchange computer systems provide a priority to certain standing orders in particular markets. An example of such an order is the first order that improves a price (i.e., improves the market) for the product during a trading session. To be given priority, the trading platform may require that the quantity associated with the order is at least a minimum quantity. Further, some exchange computer systems cap the quantity of an incoming order that is allocated to a standing order on the basis of a priority for certain markets. In addition, some exchange computer systems may give a preference to orders submitted by a trader who is designated as a market maker for the product. Other exchange computer systems may use other criteria to determine whether orders submitted by a particular trader are given a preference. Typically, when the exchange computer system allocates a quantity of an incoming order to a plurality of identified orders at the same price, the trading host allocates a quantity of the incoming order to any orders that have been given priority. The exchange computer system thereafter allocates any remaining quantity of the incoming order to orders submitted by traders designated to have a preference, and then allocates any still remaining quantity of the incoming order using the FIFO or pro-rata algorithms. Pro-rata algorithms used in some markets may require that an allocation provided to a particular order in accordance with the pro-rata algorithm must meet at least a minimum allocation quantity. Any orders that do not meet or exceed the minimum allocation quantity are allocated to on a FIFO basis after the pro-rata allocation (if any quantity of the incoming order remains). More information regarding order allocation may be found in U.S. Patent No. 7,853,499, the entirety of which is incorporated by reference herein and relied upon. Other examples of matching algorithms which may be defined for allocation of orders of a particular financial product include: Price Explicit Time; Order Level Pro Rata; Order Level Priority Pro Rata; Preference Price Explicit Time; Preference Order Level Pro Rata; Preference Order Level Priority Pro Rata; Threshold Pro-Rata; Priority Threshold Pro-Rata; Preference Threshold Pro-Rata; Priority Preference Threshold Pro-Rata; and Split Price-Time Pro-Rata, which are described in U.S. Patent Application Serial No. 13/534,499, filed on Jun. 27, 2012, entitled "Multiple Trade Matching Algorithms," published as U.S. Patent Application Publication No. 2014/0006243 A1, the entirety of which is incorporated by reference herein and relied upon.

With respect to incoming orders, some traders, such as automated and/or algorithmic traders, attempt to respond to market events, such as to capitalize upon a mispriced resting order or other market inefficiency, as quickly as possible. This may result in penalizing the trader who makes an errant trade, or whose underlying trading motivations have changed, and who cannot otherwise modify or cancel their order faster than other traders can submit trades there against. It may considered that an electronic trading system that rewards the trader who submits their order first creates an incentive to either invest substantial capital in faster trading systems, participate in the market substantially to capitalize on opportunities (aggressor side/lower risk trading) as opposed to creating new opportunities (market making/higher risk trading), modify existing systems to streamline business logic at the cost of trade quality, or reduce one's activities and exposure in the market. The result may be a lesser quality market and/or reduced transaction volume, and corresponding thereto, reduced fees to the exchange.

With respect to resting orders, allocation/matching suitable resting orders to match against an incoming order can be performed, as described herein, in many different ways. Generally, it will be appreciated that allocation/matching algorithms are only needed when the incoming order quantity is less than the total quantity of the suitable resting orders as, only in this situation, is it necessary to decide which resting order(s) will not be fully satisfied, which trader(s) will not get their orders filled. It can be seen from the above descriptions of the matching/allocation algorithms, that they fall generally into three categories: time priority/first-in-first-out ("FIFO"), pro rata, or a hybrid of FIFO and pro rata. As described elsewhere herein, price/size/time (PST) priority may also be implemented.

FIFO generally rewards the first trader to place an order at a particular price and maintains this reward indefinitely. So if a trader is the first to place an order at price X, no matter how long that order rests and no matter how many orders may follow at the same price, as soon as a suitable incoming order is received, that first trader will be matched first. This "first mover" system may commit other traders to positions in the queue after the first move traders. Furthermore, while it may be beneficial to give priority to a trader who is first to place an order at a given price because that trader is, in effect, taking a risk, the longer that the trader's order rests, the less beneficial it may be. For instance, it could deter other traders from adding liquidity to the marketplace at that price because they know the first mover (and potentially others) already occupies the front of the queue.

With a pro rata allocation, incoming orders are effectively split among suitable resting orders. This provides a sense of fairness in that everyone may get some of their order filled. However, a trader who took a risk by being first to place an order (a "market turning" order) at a price may end up having to share an incoming order with a much later submitted order. Furthermore, as a pro rata allocation distributes the incoming order according to a proportion based on the resting order quantities, traders may place orders for large quantities, which they are willing to trade but may not necessarily want to trade, in order to increase the proportion of an incoming order that they will receive. This results in an escalation of quantities on the order book and exposes a trader to a risk that someone may trade against one of these orders and subject the trader to a larger trade than they intended. In the typical case, once an incoming order is allocated against these large resting orders, the traders subsequently cancel the remaining resting quantity which may frustrate other traders. Accordingly, as FIFO and pro rata both have benefits and problems, exchanges may try to use hybrid allocation/matching algorithms which attempt to balance these benefits and problems by combining FIFO and pro rata in some manner. However, hybrid systems define conditions or fixed rules to determine when FIFO should be used and when pro rata should be used. For example, a fixed percentage of an incoming order may be allocated using a FIFO mechanism with the remainder being allocated pro rata.

### MARKET PROTECTION

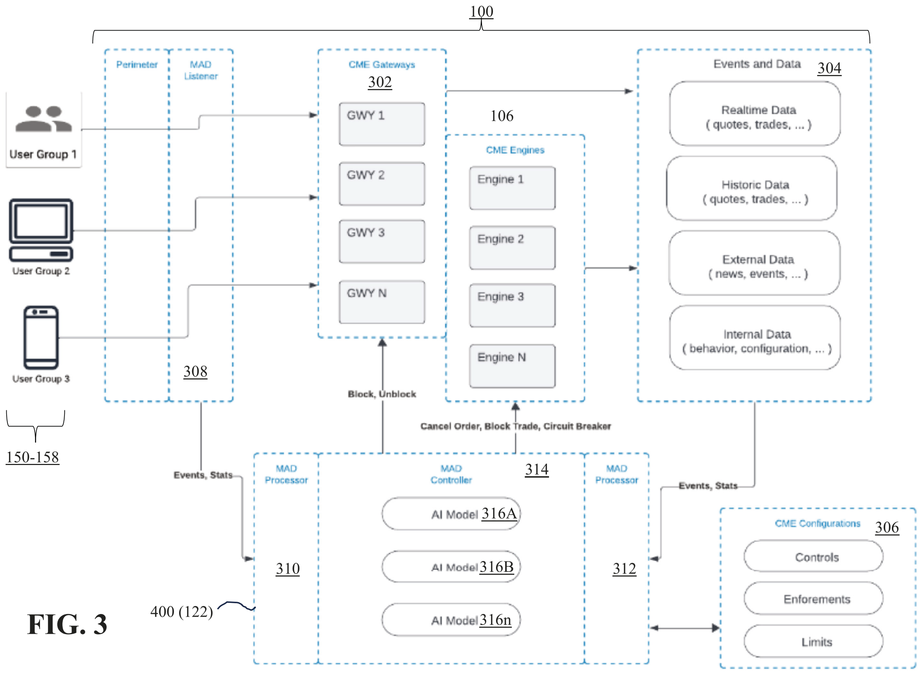

An implementation of an electronic trading system 100, depicted in Fig. 1 and described above, which include a market protection system 400 (122), which may also be referred to as a Market Anomaly Detection (MAD) system, described in more detail below, according to the disclosed embodiments, is shown in Figure 3. As shown, incoming electronic data transaction request messages, e.g., orders to trade a financial instrument or modify or cancel a prior order, are received from the computer devices of one or more market participants 150-158, i.e., traders, via an electronic communications network 160, 162, 164, 168 (not shown in Fig. 3). The incoming electronic data transaction request messages are routed from the system 100 by the electronic trading system 100 network infrastructure (not shown), i.e., from a point of network ingress, which may be a network switch which couples the internal network of the electronic trading system 100 with the external public communications network, e.g., the Internet, to one or more gateway devices 302 which route each incoming electronic data transaction request message to an appropriate matching engine/processor, e.g., based on the instrument/product underlying the transaction. The network switch may, for example, sequence the incoming electronic data transaction request messages, upon receipt of each thereof, in the order of receipt for the purpose of ensuring deterministic operation of the electronic trading system 100, such as by augmenting each message with a time of receipt or other indicator of the relative sequence of receipt of each message as compared to the others. The gateway devices 302 may be configured to buffer the incoming electronic data transaction request messages prior to the forwarding thereof to the one or more matching engines/processors 106 for processing until a signal is received from the market protection module 400 (122) as to whether a given incoming electronic data transaction request message should be prevented from being forwarded or not, as will be described. A "listener" or routing component 308, substantially contemporaneously with the forwarding of the incoming electronic data transaction request messages to the gateway devices 302, forwards copies of these incoming transaction requests to the market protection module 400 (122) for evaluation thereby. It will be appreciated that the gateway device 302 could, instead, forward copies of the received messages to the market protection module 400 (122). The market protection module 400 (122) evaluates the received incoming electronic data transaction request messages using one or more machine learnt networks 316A-n as described herein and based on the result of the evaluation generates a signal to the gateway devices 302 to forward or prevent the forwarding of one or more of the incoming electronic data transaction request messages to the matching processors 106.

A event and data collection processor 304 is provided which collects the results of the processing of incoming electronic data transaction request messages by the matching processors 106, i.e., the match event or market data, the results of any processing performed by the gateway devices 302, e.g., to reject to allow the processing of a given incoming electronic data transaction request message, as well as data from other data sources. This data may include: data generated in real time by the electronic trading system 100, such as price quotes, trade reports, and other market data, trader credit utilization, margin account values, etc.; historical data generated or maintained by the electronic trading system 100, such as prior price quotes, prior trade reports, prior generated market data, prior incoming electronic data transaction request messages, etc.; externally sourced data including news relating to, for example, geo-political, regulatory, economic or financial events, weather reports, trading/market data from other electronic trading systems, e.g., from equities markets, crypto markets, currency exchange rates, interest rates, etc.; and internal administrative or other data sources, such as configuration data, trader identification data, trading session hours, etc. The event and data collection processor 304 may collect data directly from the sources thereof or from intermediary collection services. The collected data may be stored in one or more databases or data structures, such as in a time order, and may be sequenced to align contemporaneously occurring events. While shown separately, the event and data collection processor 304 may be a component of the market protection module 400 (122).

The market protection module 400 (122) may be connected with the event and data collection processor 304 so as to be able to access the stored data for training the machine learnt network(s) 316A-n used thereby for evaluating incoming electronic data transaction request messages or for combining with contemporaneous electronic data transaction request messages undergoing evaluation thereby adding a contextual dimension to the evaluation. In one embodiment, the Event and Data Collection processor 304 may periodically form the data into vectors or otherwise quantize the data into one or more time series suitable for training the machine learnt network(s) 316A-n. Alternatively, this processing can be performed by the market protection module 400 (122).

In one embodiment, the market protection module 400 (122) may include a processor 310 receiving incoming electronic data transaction request messages and forming them into the proper format, e.g., vectors, for evaluation by the machine learnt network(s) 316A-n. A separate processor 312 may be provided for receiving data from the event and data collection processor 304 for both training and combining with the incoming electronic data transaction request messages as described. Another processor/controller 314 may maintain the machine learnt network(s), regulating the inputs thereto and capturing the outputs therefrom, managing training, etc.

A configuration/management controller 306 may further be provided which enabled administration of market protection module 400 (122) to configure/control/regulate the operation thereof, initiate and manage training of the machine learnt network(s) 316A-n, review/audit evaluation results, generate reports, etc. For example, the configuration/management controller 306 may be used to configure threshold values, such confidence thresholds used to discriminate between the likelihood that the processing of a particular electronic transaction message will or will not result in an anomalous system state, and/or the forecast time window for how far in advance a pre-cursor state resulting from the processing of a particular electronic transaction message may be identified, etc.

The machine learnt network(s) 316A-n may be trained during specific training sessions and/or in real time, incorporating the results of the then current incoming electronic data transaction requests messages as well as contemporaneous event data, such that the machine learnt network(s) always embody the current state of the electronic transaction processing system 100. Training data may be preprocessed, e.g., to remove outliers, etc.

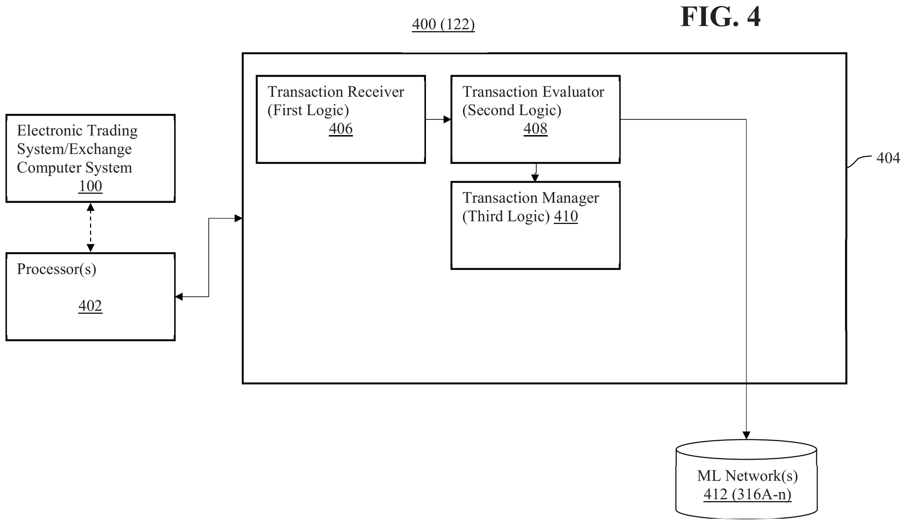

More particularly, Figure 4 depicts a block diagram of a system/apparatus 400, also referred to as an architecture, according to one embodiment, which prevents an electronic data transaction processing system 100 from transitioning to an anomalous state which must be reverted, e.g., unwound, or where further state changes must be restricted, e.g., processing/matching suspended but price discovery allowed or only a subset of traders are blocked, or temporarily or permanently prevented, e.g., halted or paused. An anomalous state may be a state that has not occurred before and using the disclosed system can prevent the initial occurrence, as well as the recurrence of previously occurring anomalous states. As described herein, the electronic data transaction processing system 100 comprises a system in which a plurality of data items, e.g., data indicative of financial instruments, are processed by a matching processor/engine 106, which may be implemented in hardware or software, associated therewith that, for transaction requests, i.e., to buy or sell, attempts to match, as they are received, incoming electronic data transaction request messages, e.g., comprising trade orders, for at least one of the plurality of data items, e.g., a quantity thereof at a price, received over a data communication network with at least one other previously received but unsatisfied electronic data transaction request message counter thereto stored in a memory associated with the plurality of data items, e.g., an order book data structure or database, coupled with the matching processor 106, to at least partially satisfy one or both of the incoming electronic data transaction request messages or the at least one other previously received electronic data transaction request message, or otherwise, for requests to modify or cancel, attempts to modify or cancel a previously received but unsatisfied electronic data transaction request message, a current and/or future state of the electronic data transaction processing system 100 being altered thereby, alone or in combination with other prior or contemporaneous inputs, events, etc., e.g., as a function of the incoming data transaction request message alone or in combination with other contemporaneously received incoming data transaction request messages or other date indicative of relevant events.

The system 400 reduces a computational burden for identifying electronic data transaction request messages, the processing of which, alone or in combination with other previous or contemporaneous data, may result in an anomalous system 100 state.

It will be appreciated that the system 400 may be implemented at least in part by the market protection module 122, the match engine module 106, order book module 110, market data module 112, message management module 116 and/or order processing module 118 or other module(s) of the exchange computing system 100 described above and shown in Figure 1, or separately but in communication therewith so as to have access to publicly and/or privately available data related to the state of the system 100. The system 400 includes one or more processors 402, and one or more non-transitory memories 404 coupled therewith, such as the processor 202, memory 204 and/or interfaces 214, 216, 218 described in detail above with reference to Figure 2.

The memory 404 being operative to store instructions that when executed, or otherwise include logic 306 stored therein configured to, cause the processor 402 to implement a transaction receiver 406 configured to receive, prior to receipt by the matching processor, an incoming electronic data transaction request message. The transaction receiver 406, or an interface 308 thereto, may be external to and coupled between the one or more matching processors 106 and the market participants such that an incoming order from the participant to any of the plurality of matching processors 106 flows to or through the transaction receiver 406. Where transaction messages flow through the system 400 (122) en route to the matching processors, the transaction received 406 may include a buffer memory, such as a FIFO buffer, to store the transaction request messages temporarily during the evaluation, described below. Alternatively, the system 400 (122) may be control the forwarding of transaction request messages buffered elsewhere, such as by the gateway devices 302.

The memory 404 being operative to store instructions that when executed, or otherwise include logic 306 stored therein configured to, cause the processor 402 to implement a transaction evaluator 408 coupled with the transaction receiver 406 and operative to evaluate the incoming electronic data transaction request message, automatically prior to a forwarding thereof to the matching processor 106 using a machine learnt network 412, which may comprises one or more ML models which may be the same, different or combinations thereof, in band/real time or out of band via rules managed by the machine learnt network 412, which, for at least unanticipated data transaction request messages which may not satisfy at least one of one or more predefined rules each of which defines an anticipated data transaction request message previously identified to cause an anomalous state, determines that the incoming electronic data transaction request message would alter the current state of the electronic data transaction processing system 100, i.e., a probability or confidence value indicative of a likelihood of such an alteration exceeding a threshold value, resulting in an anomalous state which may occur within a configurable future time period; and

The memory 404 being operative to store instructions that when executed, or otherwise include logic 406 stored therein configured to, cause the processor 402 to implement a transaction manager 410 coupled with the transaction evaluator 408 and operative to prevent, automatically based on the evaluation, at least the forwarding of the incoming electronic data transaction request message to the matching processor 106, wherein the machine learnt network 412 is a structured neural network and wherein the structured neural network is trained by identifying one or more patterns in historical transaction data and historical state data, the structured neural network comprising a layered plurality of interconnected processing nodes, wherein each connection of the plurality of interconnected processing nodes to another may be dynamically weighted, the one or more patterns indicative of expected changes in the historical state data as a result of the historical transaction data. Alternatively or in addition thereto, the transaction manager 410 may modify the transaction request, such as splitting it into multiple transaction requests, each for a portion of the total quantity of the original transaction request, temporarily hold the incoming transaction request allowing later received transaction requests to be processed, pause or halt the electronic trading system 100, or combinations thereof. Alternatively or in addition thereto, the transaction manager 410 may temporarily or permanently prevent a clearing system from clearing transactions submitted thereto from the same, or related source, for the same, similar, or related transaction or instrument, etc.

Thereby, the prevention of the forwarding of the incoming electronic data transaction request message to the matching processor thereby prevents a change in the current state thereof and avoids having to revert, or otherwise restrict or prevent further changes to, the then current state of the data transaction processing system caused by the attempted match of the incoming electronic data transaction request message by the matching processor.

One or more of the modules/components described herein may be implemented as a separate component or as one or more logic components, such as on an FPGA which may include a memory or reconfigurable component to store logic and a processing component to execute the stored logic, or as first thru third logic 406, 408, 410 respectively, e.g. computer program logic, stored in one or more memories, such as the memory 204 shown in Figure 2 and described in more detail above with respect thereto, or other non-transitory computer readable medium, and executable by one or more processors 402, such as the processor 204 shown in Figure 2 and described in more detail above with respect thereto, to cause the processor(s) 402 to, or otherwise be operative as described.

**In** one embodiment, as described herein, the transaction processing system comprises an electronic trading system 100, which may implement an ODM, QDM, central counterparty or bilateral based electronic trading system, operative to process electronic transaction messages received via an electronic communications network from a plurality of participant devices, each comprising data indicative of an order to buy or sell a quantity of a financial instrument at a defined price, specific/limit or best/market, or cancel or modify a prior order therefore, the current state the electronic trading system stored in an order book database, or other database(s) or data structure(s), which stores data indicative of received but not yet satisfied or canceled orders to trade, the state being modified as a result of the processing of received electronic transaction messages which modify the stored data indicative of the received but not yet satisfied or canceled orders to trade.

In one embodiment, the transaction manager is further operative to forward, such as from a buffer memory, the incoming electronic data transaction request message to the matching processor 106 when the evaluation by the machine learnt network 412 determines that the incoming electronic data transaction request message would alter the current state of the electronic data transaction processing system 100 but not resulting in an anomalous state.

In one embodiment, the machine learnt network 412, as part of the evaluation, hypothetically processes the incoming electronic data transaction request message as if it were forwarded to the matching processor 106.

In one embodiment, the machine learnt network 412 is trained based on previously received electronic data transaction request messages and the results of the processing thereof by the matching processor 106 such that machine learnt network 412 comprises the then current state of the electronic data transaction processing system 100.

In one embodiment, the machine learnt network 412 is coupled with a shadow memory (not shown) which stores the results of the processing of previously received electronic data transaction request messages.

In one embodiment, the transaction manager 410 is further operative to forward, when an incoming electronic data transaction request message is determined by the machine learnt network not to match with any incoming electronic data transaction request messages, for at least one of the plurality of data items, received over a data communication network with at least one other previously received but unsatisfied electronic data transaction request message counter thereto stored in a memory associated with the plurality of data items coupled with the matching processor 106, the incoming electronic data transaction request message to the matching processor. Alternatively, data indicative of the transaction request may be directly stored in the appropriately order book data structure avoiding the need for the matching processor 106 to do so.

In one embodiment, the transaction evaluator 408 is further operative to retrain the machine learnt network based on the incoming electronic data transaction request message and the result of the processing thereof when the incoming electronic data transaction request message is forwarded to the matching processor and the processing thereof results in an anomalous or non-anomalous state. The retraining may occur in real time or at a later time.

In one embodiment, the anomalous state comprises a state of the electronic transaction processing system 100 dependent upon and likely to occur subsequent, i.e., is a precursor, to a state of the electronic transaction processing system which immediately results from the processing of the incoming electronic data transaction request message, the likelihood of the subsequent occurrence thereof occurring within a subsequent period of time, which may be adjustable/tunable, exceeding a predefined threshold. For example, the processing of the incoming electronic data transaction request may cause/solicit a subsequent transaction request message would result in an anomalous system state.

In one embodiment, the predefined threshold defines how far into the future the anomalous state can occur after the current, i.e., precursor, state.

In one embodiment, the machine learnt network 412 evaluates the incoming electronic data transaction request message in combination with at least a subset of a set of one or more other electronic data transaction request messages, previously and/or contemporaneously received, to determine that the incoming electronic data transaction request message would alter the current state of the electronic data transaction processing system 100 resulting in an anomalous state. Contemporaneously received transaction request messages may be stored together in the buffer memory and converted to a single vector for evaluation. Whether transaction request messages are considered contemporaneous may be determined based a threshold time of receipt among the transactions or based on, for example, a matching priority algorithm. Other news/event data may also be buffered with contemporaneous events being similarly vectorized as described elsewhere herein.

In one embodiment, the subset of one or more other electronic data transaction request messages comprises previously received electronic data transaction request messages, contemporaneously received electronic data transaction request messages, or a combination thereof.

In one embodiment, one or more of the previously received other electronic data transaction request messages were prevented by the machine learnt network 412 from being forwarded to the matching processor 106.

In one embodiment, the subset of one or more other electronic data transaction request messages were previously or contemporaneously received non-successively, e.g., not following each other without interruption, where the intervening orders may be innocuous.

In one embodiment, one or more of the subsets of one or more other electronic data transaction request messages originated from a source different from where the incoming electronic data transaction request message originated, e.g., from a different trader, different broker, etc.

In one embodiment, the incoming electronic data transaction request message in combination with at least a subset of a set of one or more other electronic data transaction request messages is indicative of a concerted behavior.

In one embodiment, the prevention of at least the forwarding of the incoming electronic data transaction request message to the matching processor 106 is only for a period of time, upon expiration of which, the incoming electronic data transaction request message is forwarded to the matching processor 106.

In one embodiment, the period of time is based on how long until a current state of the transaction processing system changes such that processing of the incoming electronic data transaction request message will no longer result in an anomalous state. For example, until other transaction request messages are processed which alters the state, or the probability of the processing of the incoming electronic data transaction request causing/soliciting a particular subsequent electronic data transaction request falls below a threshold.

In one embodiment, an anomalous state which must be reverted or where further state changes must be restricted or prevented is characterized by a value, change therein, or rate of change therein, which exceeds a threshold. For example, a price/quantity change over time, price gap, order frequency, temporal proximity of a cancel/modify request to the transaction request being canceled or modified, a buy side/sell side imbalance, where trader to trader transaction similarity (over time) exceeds threshold, where a derived risk of loss exceeds threshold, where a credit limit is exceeded, or combinations thereof.

In one embodiment, the transaction manager is further operative to modify, e.g., reduce an order quantity, split into multiple lesser quantity transactions, etc., subsequent to the preventing, the incoming electronic data transaction request message so that the machine learnt network 412 will determine that the modified incoming electronic data transaction request message will not result in the anomalous state, and forwarding, by the transaction manager 410, the modified incoming electronic data transaction request message to the matching processor 106.

In one embodiment, the transaction manager 410 is further operative to generate, subsequent to the preventing, a synthetic solicitation of another electronic data transaction request message in place of the incoming electronic data transaction request message for which the machine learnt network 412 will determine that the other incoming electronic data transaction request message will not result in the anomalous state, and transmit the computed synthetic solicitation to the matching processor 106 to cause the matching processor 106 to transmit the synthetic solicitation to a plurality of participants so as to cause submission of the other electronic data transaction request message.

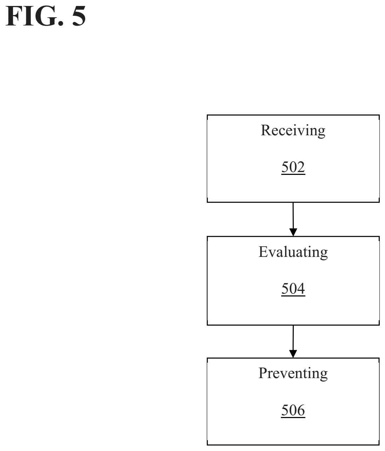

Figure 5 depicts a flow chart showing operation of the system 400. In particular Figure 5 shows a method, which may be computer implemented, for preventing an electronic data transaction processing system 100 from transitioning to an anomalous state which must be reverted, e.g., unwound, or where further state changes must be restricted, e.g., processing/matching suspended but price discovery allowed or only a subset of traders are blocked, or temporarily or permanently prevented, e.g., halted or paused. An anomalous state may be a state that has not occurred before and using the disclosed system can prevent the initial occurrence, as well as the recurrence of previously occurring anomalous states. As described herein, the electronic data transaction processing system 100 comprises a system in which a plurality of data items, e.g., data indicative of financial instruments, are processed by a matching processor/engine 106, which may be implemented in hardware or software, associated therewith that, for transaction requests, i.e., to buy or sell, attempts to match, as they are received, incoming electronic data transaction request messages, e.g., comprising trade orders, for at least one of the plurality of data items, e.g., a quantity thereof at a price, received over a data communication network with at least one other previously received but unsatisfied electronic data transaction request message counter thereto stored in a memory associated with the plurality of data items, e.g., an order book data structure or database, coupled with the matching processor 106, to at least partially satisfy one or both of the incoming electronic data transaction request messages or the at least one other previously received electronic data transaction request message, or otherwise, for requests to modify or cancel, attempts to modify or cancel a previously received but unsatisfied electronic data transaction request message, a current and/or future state of the electronic data transaction processing system 100 being altered thereby, alone or in combination with other prior or contemporaneous inputs, events, etc., e.g., as a function of the incoming data transaction request message alone or in combination with other contemporaneously received incoming data transaction request messages or other data indicative of relevant events.

The operation of the system 400 may include: receiving, by a processor 402 prior to receipt by the matching processor 106, an incoming electronic data transaction request message (Block 502); evaluating the incoming electronic data transaction request message, automatically by the processor 402 prior to a forwarding thereof to the matching processor, using a machine learnt network 412, in band/real time or out of band via rules managed by the machine learnt network 412, which, for at least unanticipated data transaction request messages which may not satisfy at least one of one or more predefined rules each of which defines an anticipated data transaction request message previously identified to cause an anomalous state, determines that the incoming electronic data transaction request message would alter the current state of the electronic data transaction processing system 100, i.e., a probability or confidence value indicative a likelihood of such an alteration exceeds a threshold value, resulting in an anomalous state which may occur within a configurable future time period (Block 504); and preventing, automatically by the processor 402 based on the evaluating, at least the forwarding of the incoming electronic data transaction request message to the matching processor 106, wherein the machine learnt network 412 is a structured neural network and wherein the structured neural network is trained by identifying one or more patterns in historical transaction data and historical state data, the structured neural network comprising a layered plurality of interconnected processing nodes, wherein each connection of the plurality of interconnected processing nodes to another may be dynamically weighted, the one or more patterns indicative of expected changes in the historical state data as a result of the historical transaction data (Block 506); and wherein, the prevention of the forwarding of the incoming electronic data transaction request message to the matching processor 106 thereby prevents a change in the current state thereof and avoids having to revert, or otherwise restrict or prevent further changes to, the then current state of the data transaction processing system 100 caused by the attempted match of the incoming electronic data transaction request message by the matching processor 106. Alternatively or in addition thereto, the transaction request may be modified, such as splitting it into multiple transaction requests, each for a portion of the total quantity of the original transaction request, the transaction request may be temporarily held allowing later received transaction requests to be processed ahead thereof, pause or halt the electronic trading system 100, or combinations thereof.

In one embodiment, the operation of the system 400 further includes forwarding, by the processor 402, such as from a buffer memory, the incoming electronic data transaction request message to the matching processor 106 when the evaluation by the machine learnt network 412 determines that the incoming electronic data transaction request message would alter the current state of the electronic data transaction processing system but not resulting in an anomalous state.

In one embodiment, the machine learnt network 412, as part of the evaluation, hypothetically processes the incoming electronic data transaction request message as if it were forwarded to the matching processor 106.

In one embodiment, machine learnt network 412 is trained based on previously received electronic data transaction request messages and the results of the processing thereof by the matching processor 106 such that machine learnt network 412 comprises the then current state of the electronic data transaction processing system 100.

In one embodiment, the machine learnt network 412 is coupled with a shadow memory (not shown) which stores the results of the processing of previously received electronic data transaction request messages.

In one embodiment, the operation of the system 400 further includes forwarding, by the processor 402 when an incoming electronic data transaction request message comprising a transaction request is determined by the machine learnt network not to match with any incoming electronic data transaction request messages, for at least one of the plurality of data items, received over a data communication network with at least one other previously received but unsatisfied electronic data transaction request message counter thereto stored in a memory associated with the plurality of data items coupled with the matching processor 106, the incoming electronic data transaction request message to the matching processor.

In one embodiment, the operation of the system 400 further includes retraining the machine learnt network 412 based on the incoming electronic data transaction request message and the result of the processing thereof when the incoming electronic data transaction request message is forwarded to the matching processor 106 and the processing thereof results in an anomalous state, or a non-anomalous desirable state. The retraining may occur in real time or at a later time.

In one embodiment, the anomalous state comprises a state of the electronic transaction processing system 100 dependent upon and likely to occur subsequent, i.e., is a precursor, to a state of the electronic transaction processing system 100 which immediately results from the processing of the incoming electronic data transaction request message, the likelihood of the subsequent occurrence thereof occurring within a subsequent period of time, which may be adjustable/tunable, exceeding a predefined threshold. For example, the processing of the incoming electronic data transaction request may cause/solicit a subsequent transaction request message would result in an anomalous system state.

In one embodiment, the predefined threshold defines how far into the future the anomalous state can occur after the current, i.e., precursor, state.

In one embodiment, the machine learnt network 412 evaluates the incoming electronic data transaction request message in combination with at least a subset of a set of one or more other electronic data transaction request messages, previously and/or contemporaneously received, to determine that the incoming electronic data transaction request message would alter the current state of the electronic data transaction processing system resulting in an anomalous state. Contemporaneously received transaction request messages may be stored together in the buffer memory and converted to a single vector for evaluation. Whether transaction request messages are considered contemporaneous may be determined based a threshold time of receipt among the transactions or based on, for example, a matching priority algorithm. Other news/event data may also be buffered with contemporaneous events being similarly vectorized as described elsewhere herein.

In one embodiment, the subset of one or more other electronic data transaction request messages comprises previously received electronic data transaction request messages, contemporaneously received electronic data transaction request messages, or a combination thereof.

In one embodiment, one or more of the previously received other electronic data transaction request messages were prevented by the machine learnt network 412 from being forwarded to the matching processor 106.

In one embodiment, the subset of one or more other electronic data transaction request messages were previously or contemporaneously received non-successively, e.g., not following each other without interruption, where the intervening orders may be innocuous.

In one embodiment, one or more of the subsets of one or more other electronic data transaction request messages originated from a source different from where the incoming electronic data transaction request message originated, e.g., from a different trader, different broker, etc.

In one embodiment, the incoming electronic data transaction request message in combination with at least a subset of a set of one or more other electronic data transaction request messages is indicative of a concerted behavior.

In one embodiment, the prevention of at least the forwarding of the incoming electronic data transaction request message to the matching processor 106 is only for a period of time, upon expiration of which, the incoming electronic data transaction request message is forwarded to the matching processor 106.

In one embodiment, the period of time is based on how long until a current state of the transaction processing system 100 changes such that processing of the incoming electronic data transaction request message will no longer result in an anomalous state. For example, until other transaction request messages are processed which alters the state, or the probability of the processing of the incoming electronic data transaction request causing/soliciting a particular subsequent electronic data transaction request falls below a threshold.

In one embodiment, an anomalous state which must be reverted or where further state changes must be restricted or prevented is characterized by a value, change therein, or rate of change therein, which exceeds a threshold. For example, a price/quantity change over time, price gap, order frequency, temporal proximity of a cancel/modify request to the transaction request being canceled or modified, a buy side/sell side imbalance, where trader to trader transaction similarity (over time) exceeds threshold, where a derived risk of loss exceeds threshold, where a credit limit is exceeded, or combinations thereof.

In one embodiment, the operation of the system 400 further includes modifying, e.g., reducing an order quantity, splitting into multiple lesser quantity transactions, etc., by the processor 402 subsequent to the preventing, the incoming electronic data transaction request message so that the machine learnt network 412 will determine that the modified incoming electronic data transaction request message will not result in the anomalous state, and forwarding, by the processor 412, the modified incoming electronic data transaction request message to the matching processor 106.

In one embodiment, the operation of the system 400 further includes generating, by the processor 402 subsequent to the preventing, a synthetic solicitation of another electronic data transaction request message in place of the incoming electronic data transaction request message for which the machine learnt network 412 will determine that the other incoming electronic data transaction request message will not result in the anomalous state, and transmit the computed synthetic solicitation to the matching processor 106 to cause the matching processor 106 to transmit the synthetic solicitation to a plurality of participants so as to cause submission of the other electronic data transaction request message.

In one embodiment, the system 400 comprises an electronic trading system operative to process electronic transaction messages received via an electronic communications network from a plurality of participant devices, each comprising data indicative of an order to buy or sell a quantity of a financial instrument at a defined price (market or limit) or cancel or modify a prior order therefore, the current state the electronic trading system stored in an order book database which stores data indicative of received but not yet satisfied or canceled orders to trade, the state being modified as a result of the processing of received electronic transaction messages which modify the stored data indicative of the received but not yet satisfied or canceled orders to trade.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is therefore intended that the foregoing detailed description be regarded as illustrative rather than limiting, and that it be understood that it is the following claims that are intended to define the scope of this invention.

Further embodiments of the invention are illustrated by the following numbered clauses.
Clause 1. A computer implemented method for preventing an electronic data transaction processing system from transitioning to an anomalous state which must be reverted or where further state changes must be restricted or prevented, the electronic data transaction processing system comprising a system in which a plurality of data items are processed by a matching processor associated therewith that, for transaction requests, attempts to match, as they are received, incoming electronic data transaction request messages, for at least one of the plurality of data items, received over a data communication network with at least one other previously received but unsatisfied electronic data transaction request message counter thereto stored in a memory associated with the plurality of data items coupled with the matching processor, to at least partially satisfy one or both of the incoming electronic data transaction request messages or the at least one other previously received electronic data transaction request message, or otherwise, for requests to modify or cancel, attempts to modify or cancel a previously received but unsatisfied electronic data transaction request message, a state of the electronic data transaction processing system being altered thereby, the method comprising: receiving, by a processor prior to receipt by the matching processor, an incoming electronic data transaction request message; evaluating the incoming electronic data transaction request message, automatically by the processor prior to a forwarding thereof to the matching processor, using a machine learnt network which, for at least unanticipated data transaction request messages which may not satisfy at least one of one or more predefined rules each of which defines an anticipated data transaction request message previously identified to cause an anomalous state, determines that the incoming electronic data transaction request message would alter the current state of the electronic data transaction processing system resulting in an anomalous state; and preventing, automatically by the processor based on the evaluating, at least the forwarding of the incoming electronic data transaction request message to the matching processor, wherein the machine learnt network is a structured neural network and wherein the structured neural network is trained by identifying one or more patterns in historical transaction data and historical state data, the structured neural network comprising a layered plurality of interconnected processing nodes, wherein each connection of the plurality of interconnected processing nodes to another may be dynamically weighted, the one or more patterns indicative of expected changes in the historical state data as a result of the historical transaction data; and wherein, the prevention of the forwarding of the incoming electronic data transaction request message to the matching processor thereby prevents a change in the current state thereof and avoids having to revert, or otherwise restrict or prevent further changes to, the then current state of the data transaction processing system caused by the attempted match of the incoming electronic data transaction request message by the matching processor.
Clause 2. The computer implemented method of clause 1, further comprising forwarding, by the processor, the incoming electronic data transaction request message to the matching processor when the evaluation by the machine learnt network determines that the incoming electronic data transaction request message would alter the current state of the electronic data transaction processing system not resulting in an anomalous state.
Clause 3. The computer implemented method of clause 1, wherein the machine learnt network, as part of the evaluation, hypothetically processes the incoming electronic data transaction request message as if it were forwarded to the matching processor.
Clause 4. The computer implemented method of clause 3, wherein the machine learnt network is trained based on previously received electronic data transaction request messages and the results of the processing thereof by the matching processor such that machine learnt network comprises the then current state of the electronic data transaction processing system.
Clause 5. The computer implemented method of clause 1, wherein the machine learnt network is coupled with a shadow memory which stores the results of the processing of previously received electronic data transaction request messages.
Clause 6. The computer implemented method of clause 1, further comprising forwarding, by the processor when an incoming electronic data transaction request message is determined by the machine learnt network not to match with any incoming electronic data transaction request messages, for at least one of the plurality of data items, received over a data communication network with at least one other previously received but unsatisfied electronic data transaction request message counter thereto stored in a memory associated with the plurality of data items coupled with the matching processor, the incoming electronic data transaction request message to the matching processor.
Clause 7. The computer implemented method of clause 1, further comprising retraining the machine learnt network based on the incoming electronic data transaction request message and the result of the processing thereof when the incoming electronic data transaction request message is forwarded to the matching processor and the processing thereof results in an anomalous state.
Clause 8. The computer implemented method of clause 1, wherein the anomalous state comprises a state of the electronic transaction processing system dependent upon and likely to occur subsequent to a state of the electronic transaction processing system which immediately results from the processing of the incoming electronic data transaction request message, the likelihood of the subsequent occurrence thereof occurring within a subsequent period of time exceeding a predefined threshold.
Clause 9. The computer implemented method of clause 8, wherein the predefined threshold defines how far into the future the anomalous state can occur after the current state.
Clause 10. The computer implemented method of clause 1, wherein the machine learnt network evaluates the incoming electronic data transaction request message in combination with at least a subset of a set of one or more other electronic data transaction request messages to determine that the incoming electronic data transaction request message would alter the current state of the electronic data transaction processing system resulting in an anomalous state.
Clause 11. The computer implemented method of clause 10, wherein the subset of one or more other electronic data transaction request messages comprises previously received electronic data transaction request messages, contemporaneously received electronic data transaction request messages, or a combination thereof.
Clause 12. The computer implemented method of clause 11, wherein one or more of the previously received other electronic data transaction request messages were prevented by the machine learnt network from being forwarded to the matching processor.
Clause 13. The computer implemented method of clause 10, wherein the subset of one or more other electronic data transaction request messages were previously or contemporaneously received non-successively.
Clause 14. The computer implemented method of clause 10, wherein one or more of the subset of one or more other electronic data transaction request messages originated from a source different from where the incoming electronic data transaction request message originated.
Clause 15. The computer implemented method of clause 14, wherein the incoming electronic data transaction request message in combination with at least a subset of a set of one or more other electronic data transaction request messages is indicative of a concerted behavior.
Clause 16. The computer implemented method of clause 1, wherein the prevention of at least the forwarding of the incoming electronic data transaction request message to the matching processor is only for a period of time, upon expiration of which, the incoming electronic data transaction request message is forwarded to the matching processor.
Clause 17. The computer implemented method of clause 16, wherein the period of time is based on how long until a current state of the transaction processing system changes such that processing of the incoming electronic data transaction request message will no longer result in an anomalous state.
Clause 18. The computer implemented method of clause 1, wherein an anomalous state which must be reverted or where further state changes must be restricted or prevented is characterized by a value, change therein, or rate of change therein, which exceeds a threshold.
Clause 19. The computer implemented method of clause 1, further comprising modifying, by the processor subsequent to the preventing, the incoming electronic data transaction request message so that the machine learnt network will determine that the modified incoming electronic data transaction request message will not result in the anomalous state, and forwarding, by the processor, the modified incoming electronic data transaction request message to the matching processor.
Clause 20. The computer implemented method of clause 1, further comprising generating, by the processor subsequent to the preventing, a synthetic solicitation of another electronic data transaction request message in place of the incoming electronic data transaction request message for which the machine learnt network will determine that the other incoming electronic data transaction request message will not result in the anomalous state, and transmit the computed synthetic solicitation to the matching processor to cause the matching processor to transmit the synthetic solicitation to a plurality of participants so as to cause submission of the other electronic data transaction request message.
Clause 21. A system which prevents an electronic data transaction processing system from transitioning to an anomalous state which must be reverted or where further state changes must be restricted or prevented, the electronic data transaction processing system comprising a system in which a plurality of data items are processed by a matching processor associated therewith that, for transaction requests, attempts to match, as they are received, incoming electronic data transaction request messages, for at least one of the plurality of data items, received over a data communication network with at least one other previously received but unsatisfied electronic data transaction request message counter thereto stored in a memory associated with the plurality of data items coupled with the matching processor, to at least partially satisfy one or both of the incoming electronic data transaction request messages or the at least one other previously received electronic data transaction request message, or otherwise, for requests to modify or cancel, attempts to modify or cancel a previously received but unsatisfied electronic data transaction request message, a state of the electronic data transaction processing system being altered thereby, the system comprising: a transaction receiver configured to receive, prior to receipt by the matching processor, an incoming electronic data transaction request message; a transaction evaluator coupled with the transaction receiver and operative to evaluate the incoming electronic data transaction request message, automatically prior to a forwarding thereof to the matching processor, using a machine learnt network which, for at least unanticipated data transaction request messages which may not satisfy at least one of one or more predefined rules each of which defines an anticipated data transaction request message previously identified to cause an anomalous state, determines that the incoming electronic data transaction request message would alter the current state of the electronic data transaction processing system resulting in an anomalous state; and a transaction manager coupled with the transaction evaluator and operative to prevent, automatically based on the evaluation, at least the forwarding of the incoming electronic data transaction request message to the matching processor, wherein the machine learnt network is a structured neural network and wherein the structured neural network is trained by identifying one or more patterns in historical transaction data and historical state data, the structured neural network comprising a layered plurality of interconnected processing nodes, wherein each connection of the plurality of interconnected processing nodes to another may be dynamically weighted, the one or more patterns indicative of expected changes in the historical state data as a result of the historical transaction data; and wherein, the prevention of the forwarding of the incoming electronic data transaction request message to the matching processor thereby prevents a change in the current state thereof and avoids having to revert, or otherwise restrict or prevent further changes to, the then current state of the data transaction processing system caused by the attempted match of the incoming electronic data transaction request message by the matching processor.
Clause 22. The system of clause 21, wherein the transaction manager is further operative to forward the incoming electronic data transaction request message to the matching processor when the evaluation by the machine learnt network determines that the incoming electronic data transaction request message would alter the current state of the electronic data transaction processing system not resulting in an anomalous state.
Clause 23. The system of clause 21, wherein the machine learnt network, as part of the evaluation, hypothetically processes the incoming electronic data transaction request message as if it were forwarded to the matching processor.
Clause 24. The system of clause 23, wherein the machine learnt network is trained based on previously received electronic data transaction request messages and the results of the processing thereof by the matching processor such that machine learnt network comprises the then current state of the electronic data transaction processing system.
Clause 25. The system of clause 21, wherein the machine learnt network is coupled with a shadow memory which stores the results of the processing of previously received electronic data transaction request messages.
Clause 26. The system of clause 21, wherein the transaction manager is further operative to forward, when an incoming electronic data transaction request message is determined by the machine learnt network not to match with any incoming electronic data transaction request messages, for at least one of the plurality of data items, received over a data communication network with at least one other previously received but unsatisfied electronic data transaction request message counter thereto stored in a memory associated with the plurality of data items coupled with the matching processor, the incoming electronic data transaction request message to the matching processor.
Clause 27. The system of clause 21, wherein the transaction evaluator is further operative to retrain the machine learnt network based on the incoming electronic data transaction request message and the result of the processing thereof when the incoming electronic data transaction request message is forwarded to the matching processor and the processing thereof results in an anomalous state.
Clause 28. The system of clause 21, wherein the anomalous state comprises a state of the electronic transaction processing system dependent upon and likely to occur subsequent to a [precursor] state of the electronic transaction processing system which immediately results from the processing of the incoming electronic data transaction request message, the likelihood of the subsequent occurrence thereof occurring within a subsequent period of time exceeding a predefined threshold.
Clause 29. The system of clause 28, wherein the predefined threshold defines how far into the future the anomalous state can occur after the current state.
Clause 30. The system of clause 21, wherein the machine learnt network evaluates the incoming electronic data transaction request message in combination with at least a subset of a set of one or more other electronic data transaction request messages to determine that the incoming electronic data transaction request message would alter the current state of the electronic data transaction processing system resulting in an anomalous state.
Clause 31. The system of clause 30, wherein the subset of one or more other electronic data transaction request messages comprises previously received electronic data transaction request messages, contemporaneously received electronic data transaction request messages, or a combination thereof.
Clause 32. The system of clause 31, wherein one or more of the previously received other electronic data transaction request messages were prevented by the machine learnt network from being forwarded to the matching processor.
Clause 33. The system of clause 30, wherein the subset of one or more other electronic data transaction request messages were previously or contemporaneously received non-successively.
Clause 34. The system of clause 30, wherein one or more of the subset of one or more other electronic data transaction request messages originated from a source different from where the incoming electronic data transaction request message originated.
Clause 35. The system of clause 34, wherein the incoming electronic data transaction request message in combination with at least a subset of a set of one or more other electronic data transaction request messages is indicative of a concerted behavior.
Clause 36. The system of clause 21, wherein the prevention of at least the forwarding of the incoming electronic data transaction request message to the matching processor is only for a period of time, upon expiration of which, the incoming electronic data transaction request message is forwarded to the matching processor.
Clause 37. The system of clause 36, wherein the period of time is based on how long until a current state of the transaction processing system changes such that processing of the incoming electronic data transaction request message will no longer result in an anomalous state.
Clause 38. The system of clause 21, wherein an anomalous state which must be reverted or where further state changes must be restricted or prevented is characterized by a value, change therein, or rate of change therein, which exceeds a threshold.
Clause 39. The system of clause 21, wherein the transaction manager is further operative to modify, subsequent to the preventing, the incoming electronic data transaction request message so that the machine learnt network will determine that the modified incoming electronic data transaction request message will not result in the anomalous state, and forwarding, by the transaction manager, the modified incoming electronic data transaction request message to the matching processor.
Clause 40. The system of clause 21, wherein the transaction manager is further operative to generate, subsequent to the preventing, a synthetic solicitation of another electronic data transaction request message in place of the incoming electronic data transaction request message for which the machine learnt network will determine that the other incoming electronic data transaction request message will not result in the anomalous state, and transmit the computed synthetic solicitation to the matching processor to cause the matching processor to transmit the synthetic solicitation to a plurality of participants so as to cause submission of the other electronic data transaction request message.
Clause 41. A system for prevention of an electronic data transaction processing system from transitioning to an anomalous state which must be reverted or where further state changes must be restricted or prevented, the electronic data transaction processing system comprising a system in which a plurality of data items are processed by a matching processor associated therewith that, for transaction requests, attempts to match, as they are received, incoming electronic data transaction request messages, for at least one of the plurality of data items, received over a data communication network with at least one other previously received but unsatisfied electronic data transaction request message counter thereto stored in a memory associated with the plurality of data items coupled with the matching processor, to at least partially satisfy one or both of the incoming electronic data transaction request messages or the at least one other previously received electronic data transaction request message, or otherwise, for requests to modify or cancel, attempts to modify or cancel a previously received but unsatisfied electronic data transaction request message, a state of the electronic data transaction processing system being altered thereby, the system comprising a processor and a non-transitory memory coupled therewith, the memory storing computer executable instructions that, when executed by the processor, cause the processor to: receive, prior to receipt by the matching processor, an incoming electronic data transaction request message; evaluate the incoming electronic data transaction request message, automatically prior to a forwarding thereof to the matching processor, using a machine learnt network which, for at least unanticipated data transaction request messages which may not satisfy at least one of one or more predefined rules each of which defines an anticipated data transaction request message previously identified to cause an anomalous state, determines that the incoming electronic data transaction request message would alter the current state of the electronic data transaction processing system resulting in an anomalous state; and prevent, automatically based on the evaluation, at least the forwarding of the incoming electronic data transaction request message to the matching processor, wherein the machine learnt network is a structured neural network and wherein the structured neural network is trained by identifying one or more patterns in historical transaction data and historical state data, the structured neural network comprising a layered plurality of interconnected processing nodes, wherein each connection of the plurality of interconnected processing nodes to another may be dynamically weighted, the one or more patterns indicative of expected changes in the historical state data as a result of the historical transaction data; and wherein, the prevention of the forwarding of the incoming electronic data transaction request message to the matching processor thereby prevents a change in the current state thereof and avoids having to revert, or otherwise restrict or prevent further changes to, the then current state of the data transaction processing system caused by the attempted match of the incoming electronic data transaction request message by the matching processor.
Clause 42. A system which prevents an electronic data transaction processing system from transitioning to an anomalous state which must be reverted or where further state changes must be restricted or prevented, the electronic data transaction processing system comprising a system in which a plurality of data items are processed by a matching processor associated therewith that, for transaction requests, attempts to match, as they are received, incoming electronic data transaction request messages, for at least one of the plurality of data items, received over a data communication network with at least one other previously received but unsatisfied electronic data transaction request message counter thereto stored in a memory associated with the plurality of data items coupled with the matching processor, to at least partially satisfy one or both of the incoming electronic data transaction request messages or the at least one other previously received electronic data transaction request message, or otherwise, for requests to modify or cancel, attempts to modify or cancel a previously received but unsatisfied electronic data transaction request message, a state of the electronic data transaction processing system being altered thereby, the system comprising: means for receiving, prior to receipt by the matching processor, an incoming electronic data transaction request message; means for evaluating the incoming electronic data transaction request message, automatically prior to a forwarding thereof to the matching processor, using a machine learnt network which, for at least unanticipated data transaction request messages which may not satisfy at least one of one or more predefined rules each of which defines an anticipated data transaction request message previously identified to cause an anomalous state, determines that the incoming electronic data transaction request message would alter the current state of the electronic data transaction processing system resulting in an anomalous state; and means for preventing, automatically based on the evaluation, at least the forwarding of the incoming electronic data transaction request message to the matching processor, wherein the machine learnt network is a structured neural network and wherein the structured neural network is trained by identifying one or more patterns in historical transaction data and historical state data, the structured neural network comprising a layered plurality of interconnected processing nodes, wherein each connection of the plurality of interconnected processing nodes to another may be dynamically weighted, the one or more patterns indicative of expected changes in the historical state data as a result of the historical transaction data; and wherein, the prevention of the forwarding of the incoming electronic data transaction request message to the matching processor thereby prevents a change in the current state thereof and avoids having to revert, or otherwise restrict or prevent further changes to, the then current state of the data transaction processing system caused by the attempted match of the incoming electronic data transaction request message by the matching processor.

## Claims

1. A computer implemented method for preventing an electronic data transaction processing system from transitioning to an anomalous state which must be reverted or where further state changes must be restricted or prevented, the electronic data transaction processing system comprising a system in which a plurality of data items are processed by a matching processor associated therewith that, for transaction requests, attempts to match, as they are received, incoming electronic data transaction request messages, for at least one of the plurality of data items, received over a data communication network with at least one other previously received but unsatisfied electronic data transaction request message counter thereto stored in a memory associated with the plurality of data items coupled with the matching processor, to at least partially satisfy one or both of the incoming electronic data transaction request messages or the at least one other previously received electronic data transaction request message, or otherwise, for requests to modify or cancel, attempts to modify or cancel a previously received but unsatisfied electronic data transaction request message, a state of the electronic data transaction processing system being altered thereby, the method comprising:
receiving, by a processor prior to receipt by the matching processor, an incoming electronic data transaction request message;
evaluating the incoming electronic data transaction request message, automatically by the processor prior to a forwarding thereof to the matching processor, using a machine learnt network which, for at least unanticipated data transaction request messages which may not satisfy at least one of one or more predefined rules each of which defines an anticipated data transaction request message previously identified to cause an anomalous state, determines that the incoming electronic data transaction request message would alter the current state of the electronic data transaction processing system resulting in an anomalous state; and
preventing, automatically by the processor based on the evaluating, at least the forwarding of the incoming electronic data transaction request message to the matching processor, wherein the machine learnt network is a structured neural network and wherein the structured neural network is trained by identifying one or more patterns in historical transaction data and historical state data, the structured neural network comprising a layered plurality of interconnected processing nodes, wherein each connection of the plurality of interconnected processing nodes to another may be dynamically weighted, the one or more patterns indicative of expected changes in the historical state data as a result of the historical transaction data; and
wherein, the prevention of the forwarding of the incoming electronic data transaction request message to the matching processor thereby prevents a change in the current state thereof and avoids having to revert, or otherwise restrict or prevent further changes to, the then current state of the data transaction processing system caused by the attempted match of the incoming electronic data transaction request message by the matching processor.

2. The computer implemented method of claim 1, further comprising forwarding, by the processor, the incoming electronic data transaction request message to the matching processor when the evaluation by the machine learnt network determines that the incoming electronic data transaction request message would alter the current state of the electronic data transaction processing system not resulting in an anomalous state.

3. The computer implemented method of claim 1 or claim 2, wherein the machine learnt network, as part of the evaluation, hypothetically processes the incoming electronic data transaction request message as if it were forwarded to the matching processor,
wherein optionally the machine learnt network is trained based on previously received electronic data transaction request messages and the results of the processing thereof by the matching processor such that machine learnt network comprises the then current state of the electronic data transaction processing system.

4. The computer implemented method of any preceding claim, wherein the machine learnt network is coupled with a shadow memory which stores the results of the processing of previously received electronic data transaction request messages.

5. The computer implemented method of any preceding claim, further comprising:
forwarding, by the processor when an incoming electronic data transaction request message is determined by the machine learnt network not to match with any incoming electronic data transaction request messages, for at least one of the plurality of data items, received over a data communication network with at least one other previously received but unsatisfied electronic data transaction request message counter thereto stored in a memory associated with the plurality of data items coupled with the matching processor, the incoming electronic data transaction request message to the matching processor; and/or
retraining the machine learnt network based on the incoming electronic data transaction request message and the result of the processing thereof when the incoming electronic data transaction request message is forwarded to the matching processor and the processing thereof results in an anomalous state.

6. The computer implemented method of any preceding claim, wherein the anomalous state comprises a state of the electronic transaction processing system dependent upon and likely to occur subsequent to a state of the electronic transaction processing system which immediately results from the processing of the incoming electronic data transaction request message, the likelihood of the subsequent occurrence thereof occurring within a subsequent period of time exceeding a predefined threshold, and
wherein optionally the predefined threshold defines how far into the future the anomalous state can occur after the current state.

7. The computer implemented method of any preceding claim, wherein the machine learnt network evaluates the incoming electronic data transaction request message in combination with at least a subset of a set of one or more other electronic data transaction request messages to determine that the incoming electronic data transaction request message would alter the current state of the electronic data transaction processing system resulting in an anomalous state.

8. The computer implemented method of claim 7, wherein the subset of one or more other electronic data transaction request messages comprises previously received electronic data transaction request messages, contemporaneously received electronic data transaction request messages, or a combination thereof, and
wherein optionally one or more of the previously received other electronic data transaction request messages were prevented by the machine learnt network from being forwarded to the matching processor.

9. The computer implemented method of claim 7, wherein the subset of one or more other electronic data transaction request messages were previously or contemporaneously received non-successively.

10. The computer implemented method of claim 7, wherein one or more of the subset of one or more other electronic data transaction request messages originated from a source different from where the incoming electronic data transaction request message originated, and
wherein optionally the incoming electronic data transaction request message in combination with at least a subset of a set of one or more other electronic data transaction request messages is indicative of a concerted behavior.

11. The computer implemented method of any preceding claim, wherein the prevention of at least the forwarding of the incoming electronic data transaction request message to the matching processor is only for a period of time, upon expiration of which, the incoming electronic data transaction request message is forwarded to the matching processor, and
wherein optionally the period of time is based on how long until a current state of the transaction processing system changes such that processing of the incoming electronic data transaction request message will no longer result in an anomalous state.

12. The computer implemented method of any preceding claim, wherein an anomalous state which must be reverted or where further state changes must be restricted or prevented is **characterized by** a value, change therein, or rate of change therein, which exceeds a threshold.

13. The computer implemented method of any preceding claim, further comprising:
modifying, by the processor subsequent to the preventing, the incoming electronic data transaction request message so that the machine learnt network will determine that the modified incoming electronic data transaction request message will not result in the anomalous state, and forwarding, by the processor, the modified incoming electronic data transaction request message to the matching processor; and/or
generating, by the processor subsequent to the preventing, a synthetic solicitation of another electronic data transaction request message in place of the incoming electronic data transaction request message for which the machine learnt network will determine that the other incoming electronic data transaction request message will not result in the anomalous state, and transmit the computed synthetic solicitation to the matching processor to cause the matching processor to transmit the synthetic solicitation to a plurality of participants so as to cause submission of the other electronic data transaction request message.

14. A system configured to perform the method of any preceding claim, the system comprising:
a transaction receiver configured to receive, prior to receipt by the matching processor, an incoming electronic data transaction request message;
a transaction evaluator coupled with the transaction receiver and operative to evaluate the incoming electronic data transaction request message, automatically prior to a forwarding thereof to the matching processor, using a machine learnt network which, for at least unanticipated data transaction request messages which may not satisfy at least one of one or more predefined rules each of which defines an anticipated data transaction request message previously identified to cause an anomalous state, determines that the incoming electronic data transaction request message would alter the current state of the electronic data transaction processing system resulting in an anomalous state; and
a transaction manager coupled with the transaction evaluator and operative to prevent, automatically based on the evaluation, at least the forwarding of the incoming electronic data transaction request message to the matching processor, wherein the machine learnt network is a structured neural network and wherein the structured neural network is trained by identifying one or more patterns in historical transaction data and historical state data, the structured neural network comprising a layered plurality of interconnected processing nodes, wherein each connection of the plurality of interconnected processing nodes to another may be dynamically weighted, the one or more patterns indicative of expected changes in the historical state data as a result of the historical transaction data; and
wherein, the prevention of the forwarding of the incoming electronic data transaction request message to the matching processor thereby prevents a change in the current state thereof and avoids having to revert, or otherwise restrict or prevent further changes to, the then current state of the data transaction processing system caused by the attempted match of the incoming electronic data transaction request message by the matching processor.

15. The system of claim 14, wherein the transaction evaluator is further operative to retrain the machine learnt network based on the incoming electronic data transaction request message and the result of the processing thereof when the incoming electronic data transaction request message is forwarded to the matching processor and the processing thereof results in an anomalous state.
